# EUROPEAN PATENT APPLICATION

(11) **EP 3 361 762 A1**
(43) Date of publication of application: **15.08.2018**
(21) Application number: 18164524.3
(22) Date of filing: 29.11.2012
(51) Int. Cl.: H04W 8/24, H04W 80/04

(54) **METHODS FOR IP MOBILITY MANAGEMENT**

(30) Priority: 29.11.2011 US 201161564365 P; 29.11.2011 US 201161564369 P
(62) Divisional of application: 12805841.9
(71) Applicant: Interdigital Patent Holdings, Inc., Wilmington, DE 19809-3727 (US)
(72) Inventor: ZUNIGA, Juan Carlos, Montreal, Quebec QC H4L 3J4 (CA); CHITRAPU, Prabhakar R., Blue Bell, Pennsylvania 19422 (US); BERNARDOS, Carlos Jesus, 28942 Fuenlabrada Madrid (ES); REZNIK, Alexander, Pennington, New Jersey 08534 (US); TOMICI, John L., Southold, New York 11971 (US); PERRAS, Michelle, Montreal, Quebec H2J 3G5 (CA)
(74) Representative: AWA Sweden AB

(57) **Abstract**

A wireless transmit/receive unit, WTRU, for providing session mobility and a distributed gateway, DGW, for providing session mobility are disclosed. The WTRU comprises a memory and a processor. The processor is configured to receive an internet protocol, IP, prefix from a first distributed gateway, DGW, determine an IP address using the IP prefix, receive, via the first DGW, a first data flow from a network using the first IP prefix and the IP address, attach to a second DGW and detaching from the first DGW, and receive, via the second DGW, the first data flow from the network using the IP prefix and the IP address.

## Description

### CROSS REFERENCE TO RELATED APPLICATIONS

This application claims the benefit of U.S. Provisional Application No. 61/564, 365, filed November 29, 2011; and 61/564, 369, filed November 29, 2011, which are incorporated by reference as if fully set forth herein.

### BACKGROUND

The number of mobile subscribers and the amount of traffic produced by them may experience growth. For example, user devices may be capable of accessing data services through wireless technologies. Such user devices may have internet-based applications that may request internet connectivity. Additionally, such handheld devices may request "always-on" and/or ubiquitous service(s), such as Internet service.

### SUMMARY

Disclosed herein are methods and apparatus that may provide a packet-based network architecture that may support distributed and dynamic mobility management (DMM). For example, an apparatus may include a distributed mobility management gateway. The DMM gateway may be configured to selectively implement mobile access gateway (MAG) functionality and may be configured to selectively implement local mobility anchor (LMA) functionality.

As another example, a method may include receiving, by a distributed gateway (D-GW), a PDN connection request from a mobile node that may be attached to a first access network. The D-GW may assign an IPv6 prefix from a pool of prefixes to the mobile node. The D-GW may update a home subscriber server (HSS) to identify the IPv6 prefix that may be assigned to the mobile node and may provide the HSS with a D-GW identifier. Packets may be routed and/or received to and/or from the mobile node. When the mobile node moves attaches to a second access network, a tunnel may be established with a second D-GW. Network traffic to the mobile node may be forwarded through the tunnel.

As another example, a method may include requesting, by a mobile node that may be attached to a first access network, a PDN connection. An assigned IPv6 prefix may be received from a first distributed gateway (D-GW). A first IPv6 address may be auto configured by the mobile node. IPv6 packets may be sent by the mobile node through the first D-GW. An attachment may be made to a second access network. A PDN connection may be established with a second D-GW that may be associated with the second access network, which may be used to obtain a second IPv6 address. Connections relying on the first IPv6 address may be maintained.

A wireless transmit/receive unit (WTRU) may transmit a layer two attachment signal to a network node to indicate a cellular network or wireless local area network (LAN) based mobility capability of the WTRU. An attachment may be made to the network node via layer two. The cellular network or wireless LAN based mobility capability may be a capability for S2a mobility based on GTP (SAMOG), a capability for network-based IP flow mobility (NBIFOM), or the like. The network node may be a mobile access gateway (MAG), a trusted wireless LAN gateway (TWAG) in a trusted wireless LAN access network (TWAN), or the like. A router solicitation message may be transmitted. A router advertisement message may be received. The router advertisement message may include a prefix assigned to the WTRU. Layer three accesses may be configured using the IPv6 prefix.

A network access node may receive a layer two attachment signal from a mobile node that may indicate a cellular network or wireless local area network (LAN) based mobility capability of the mobile node. A layer two attachment process may be performed. The cellular network or wireless LAN based mobility capability may be a capability for S2a mobility based on GTP (SAMOG), a capability for network-based IP flow mobility (NBIFOM), or the like. A router solicitation message may be received. A proxy binding update message that may indicate that the cellular network or wireless LAN based mobility capability of the mobile node may be transmitted. A proxy binding acknowledgement message that may include a prefix assigned to the mobile node may be received. A router advertisement message that may include the prefix assigned to the mobile node may be transmitted.

A message may be received that may indicate a cellular network or wireless local area network (LAN) based mobility capability of a mobile node. A prefix may be assigned to the mobile node based on the cellular network or wireless LAN based mobility capability of the mobile node. The cellular network or wireless LAN based mobility capability may be a capability for NBIFOM. The message may be a proxy binding update message. The mobile node may be registered in a binding cache. A proxy binding acknowledgment may be transmitted to a second network node that may include the prefix assigned to the mobile node. The network node may be a mobile access gateway.

### BRIEF DESCRIPTION OF THE DRAWINGS

A more detailed understanding may be had from the following description, given by way of example in conjunction with the accompanying drawings.
FIG. 1A is a system diagram of an example communications system in which one or more disclosed embodiments may be implemented.
FIG. 1B is a system diagram of an example wireless transmit/receive unit (WTRU) that may be used within the communications system illustrated in FIG. 1A.
FIG. 1C is a system diagram of an example radio access network and an example core network that may be used within the communications system illustrated in FIG. 1A.
FIG. 1D depicts a system diagram of an example radio access network and an example core network that may be used within the communications system illustrated in FIG. 1A.
FIG. 1E depicts a system diagram of an example radio access network and an example core network that may be used within the communications system illustrated in FIG. 1A.
FIG. 2 depicts an example DMM-based mobile network system.
FIG. 3 depicts an example non-roaming network-based architecture that may use GPRS Tunneling Protocol (GTP) and/or PMIPv6.
FIG. 4 depicts an example non-roaming network-based architecture that may use GTP and/or PMIPv6.
FIG. 5 depicts an example non-roaming architecture that may use client-based Dual Stack Mobile IPv6 (DSMIPv6).
FIG. 6 depicts an example DMM based mobile network system.
FIG. 7 depicts an example DMM based mobile network system.
FIG. 8 depicts an example network-based control plane that may use PMIPv6 and may be used with E-UTRAN 3GPP access.
FIG. 9 depicts an example network-based control plane that may use GTP and may be used with E-UTRAN 3GPP access.
FIG. 10 depicts an example network-based user plane for network-based that may use PMIPv6 and/or GTP, and may be used with E-UTRAN 3GPP access and direct connectivity.
FIG. 11 depicts an example network-based user plane that may use PMIPv6, and may be used with E-UTRAN 3GPP access and distributed anchoring.
FIG. 12 depicts an example network-based user plane that may use GTP, and may be used with E-UTRAN 3GPP access and distributed anchoring.
FIG. 13 depicts an example network-based control plane that may use PMIPv6, and may be used with trusted non-3GPP IP access.
FIG. 14 depicts an example network-based control plane that may use GTP, and may be used with trusted non-3GPP IP access.
FIG. 15 depicts an example network-based user plane that may use PMIPv6 and/or GTP, and may be used with trusted Non-3GPP IP access and direct access.
FIG. 16 depicts an example network-based user plane that may use PMIPv6, and may be used with trusted non-3GPP IP access and distributed anchoring.
FIG. 17 depicts an example user plane for network-based that may use GTP, and may be used with trusted non-3GPP IP access and distributed anchoring.
FIG. 18 depicts an example network-based control plane that may use PMIPv6, and may be used with untrusted Non-3GPP IP access.
FIG. 19 depicts an example network-based control plane that may use GTP, and may be used with untrusted non-3GPP IP access.
FIG. 20 depicts an example network-based user plane that may use GTP and/or PMIPv6, and may be used with untrusted non-3GPP IP access and direct connectivity.
FIG. 21 depicts an example network-based user plane that may use PMIPv6, and may be used with untrusted non-3GPP IP access and distributed anchoring.
FIG. 22 depicts an example network-based user plane that may use GTP, and may be used with untrusted non-3GPP IP access and distributed anchoring.
FIG. 23 depicts an example client-based control plane that may be used with E-UTRAN 3GPP access.
FIG. 24 depicts an example client-based user plane that may be used with 3GPP access and direct connectivity.
FIG. 25 depicts an example client-based user plane that may have 3GPP access and distributed anchoring.
FIG. 26 depicts an example client-based control plane that may be used with trusted non-3GPP IP access.
FIG. 27 depicts an example client-based user plane that may be used with trusted non-3GPP IP access and direct connectivity.
FIG. 28 depicts an example client-based user plane that may be used with trusted non-3GPP IP access and distributed anchoring.
FIG. 29 depicts an example client-based control plane that may be used with untrusted non-3GPP IP access.
FIG. 30 depicts an example client-based user plane that may be used with untrusted non-3GPP IP access and direct connectivity.
FIG. 31 depicts an example client-based user plane that may be used with untrusted non-3GPP IP access and direct connectivity.
FIG. 32 depicts an example message sequence chart (MSC) that may be used for initial E-UTRAN attach in a non-roaming case.
FIG. 33 depicts an example MSC that may be used for initial attach procedure in a non-roaming scenario with trusted Non-3GPP IP Access.
FIG. 34 depicts an example MSC that may be used for initial attach to untrusted Non-3GPP with PMIPv6 in a non-roaming case.
FIG. 35 depicts an example MSC that may be used for initial attach to untrusted Non-3GPP in a non-roaming case.
FIGS. 36A-B depicts an example MSC that may be used for intra-LTE TAU and inter-eNodeB handover with D-GW relocation with PMIPv6 in a non-roaming architecture.
FIGS. 37A-B depicts an example MSC that may be used for handover from trusted or untrusted non-3GPP IP access to E-UTRAN with PMIPv6 in a non-roaming architecture.
FIG. 38 depicts an example MSC that may be used for handover from 3GPP access to trusted non-3GPP IP access with PMIPv6 in a non-roaming architecture.
FIG. 39 depicts an example MSC that may be used for handover from 3GPP access to untrusted non-3GPP IP access with PMIPv6 in a non-roaming architecture.
FIGS. 40A-B depicts an example MSC and use for intra-LTE TAU and inter-eNodeB handover with D-GW relocation with GTP in a non-roaming architecture.
FIGS. 41A-B depicts an example MSC that may be used for handover from trusted or untrusted Non-3GPP IP Access to E-UTRAN with GTP in a non-roaming architecture.
FIG. 42 depicts an example MSC that may be used for handover from 3GPP access to trusted non-3GPP IP access with GTP in a non-roaming architecture.
FIG. 43 depicts an example MSC that may be used for handover from 3GPP access to untrusted non-3GPP IP access with GTP in a non-roaming architecture.
FIGS. 44A-B depicts an example MSC that may be used for intra-LTE TAU and inter-eNodeB handover with D-GW relocation with DSMIPv6 in a non-roaming architecture.
FIGS. 45A-B depicts an example MSC that may be used for handover from trusted or untrusted non-3GPP IP Access to E-UTRAN with DSMIPv6 in a non-roaming architecture.
FIG. 46 depicts an example MSC that may be used for handover from 3GPP access to trusted non-3GPP IP Access with DSMIPv6 in a non-roaming architecture.
FIG. 47 depicts an example MSC that may be used for handover from 3GPP access to untrusted non-3GPP IP access with DSMIPv6 in a non-roaming architecture.
FIG. 48 depicts an example MSC that may be used for UE initiated PDN disconnection for 3GPP accesses with PMIPv6 in a non-roaming architecture.
FIG. 49 depicts an example MSC that may be used for UE requested PDN disconnection procedure from a trusted non-3GPP IP access with PMIPv6 in a non-roaming architecture.
FIG. 50 depicts an example MSC that may be used for UE requested PDN disconnection procedure from an untrusted non-3GPP IP access with PMIPv6 in a non-roaming architecture.
FIG. 51 depicts is an example MSC that may be used for UE initiated PDN disconnection for 3GPP accesses with GTP in a non-roaming architecture.
FIG. 52 depicts an example UE requested PDN disconnection procedure that may be from a trusted Non-3GPP IP access with GTP in a non-roaming architecture.
FIG. 53 depicts an example UE requested PDN disconnection procedure that may be from an untrusted non-3GPP IP access with GTP in a non-roaming architecture.
FIG. 54 depicts an example UE initiated PDN disconnection that may be used for 3GPP accesses with DSMIPv6 in a non-roaming architecture.
FIG. 55 depicts an example UE initiated PDN disconnection procedure that may be from a trusted non-3GPP IP access with DSMIPv6 in a non-roaming architecture.
FIG. 56 depicts a UE-initiated PDN disconnection procedure that may be in Untrusted Non-3GPP IP access with DSMIPv6 in a Non-Roaming Architecture.
FIG. 57 depicts an example of a Logical Interface Implementation on a mobile node.
FIG. 58 depicts an example of a Network-Based IP Flow Mobility (NBIFOM) architecture.
FIG. 59 depicts an example of a DMM-based network architecture.
FIG. 60 depicts an example of L2 signaling that may be used to inform the network of the DMM capabilities of the UE.
FIG. 61 depicts an example of L3 signaling that may be used to inform the network of the DMM capabilities of the UE.
FIG. 62 depicts an example of network capability advertisement using L3 or higher messaging.
FIG. 63 depicts an example of a message flow for indicating mobile node capability using Layer 2 signaling.
FIG. 64 depicts an example of a mobile node (MN) that may announce its network-based IP flow mobility (NBIFOM) or logical interface (LIF) capabilities on subsequent L2 attachments of other interfaces.
FIG. 65 depicts an example of when the MN indicated its capabilities with a router solicitation(RS);
FIG. 66 depicts an example of mobile node capabilities being reported on subsequent attachments.
FIG. 67 depicts an example of indicating user equipment (UE) capability using L3 signaling.
FIG. 68 depicts an example of indicating UE capability using L3 signaling when a first L3 attachment may have been completed.
FIG. 69 depicts an example of a mobile node informing the network of its capabilities.
FIG. 70 depicts an example of a mobile node capability indication utilizing L3 forced messaging.
FIG. 71 depicts an example of the network advertising its capabilities using L2 signaling.
FIG. 72 depicts an example of L3 signaling being used to advertise network capability.
FIG. 73 depicts an example of messages at a higher layer than layer 3 being used to inform the MN about the network capabilities.

### DETAILED DESCRIPTION

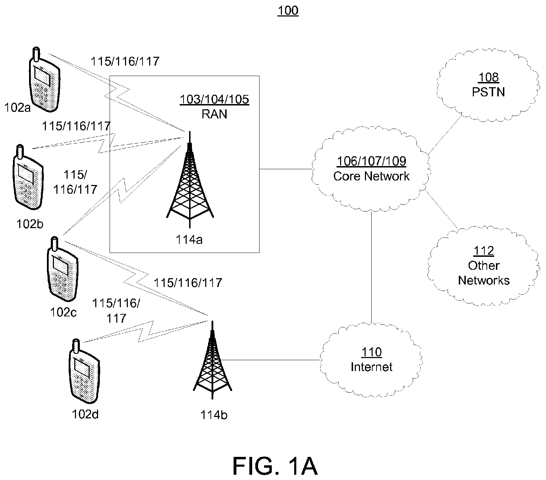

FIG. 1A is a diagram of an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), and the like.

As shown in FIG. 1A, the communications system 100 may include wireless transmit/receive units (WTRUs) 102a, 102b, 102c, and/or 102d (which generally or collectively may be referred to as WTRU 102), a radio access network (RAN) 103/104/105, a core network 106/107/109, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d may be configured to transmit and/or receive wireless signals and may include user equipment (UE), a mobile station, a fixed or mobile subscriber unit, a pager, a cellular telephone, a personal digital assistant (PDA), a smartphone, a laptop, a netbook, a personal computer, a wireless sensor, consumer electronics, and the like.

The communications systems 100 may also include a base station 114a and a base station 114b. Each of the base stations 114a, 114b may be any type of device configured to wirelessly interface with at least one of the WTRUs 102a, 102b, 102c, 102d to facilitate access to one or more communication networks, such as the core network 106/107/109, the Internet 110, and/or the networks 112. By way of example, the base stations 114a, 114b may be a base transceiver station (BTS), a Node-B, an eNode B, a Home Node B, a Home eNode B, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 103/104/105, which may also include other base stations and/or network elements (not shown), such as a base station controller (BSC), a radio network controller (RNC), relay nodes, etc. The base station 114a and/or the base station 114b may be configured to transmit and/or receive wireless signals within a particular geographic region, which may be referred to as a cell (not shown). The cell may further be divided into cell sectors. For example, the cell associated with the base station 114a may be divided into three sectors. Thus, in one embodiment, the base station 114a may include three transceivers, i.e., one for each sector of the cell. In another embodiment, the base station 114a may employ multiple-input multiple output (MIMO) technology and, therefore, may utilize multiple transceivers for each sector of the cell.

The base stations 114a, 114b may communicate with one or more of the WTRUs 102a, 102b, 102c, 102d over an air interface 115/116/117, which may be any suitable wireless communication link (e.g., radio frequency (RF), microwave, infrared (IR), ultraviolet (UV), visible light, etc.). The air interface 115/116/117 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 103/104/105 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In another embodiment, the base station 114a and the WTRUs 102a, 102b, 102c may implement a radio technology such as Evolved UMTS Terrestrial Radio Access (E-UTRA), which may establish the air interface 115/116/117 using Long Term Evolution (LTE) and/or LTE-Advanced (LTE-A).

In other embodiments, the base station 114a and the WTRUs 102a, 102b, 102c may implement radio technologies such as IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, and the like. In one embodiment, the base station 114b and the WTRUs 102c, 102d may implement a radio technology such as IEEE 802.11 to establish a wireless local area network (WLAN). In another embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, etc.) to establish a picocell or femtocell. As shown in FIG. 1A, the base station 114b may have a direct connection to the Internet 110. Thus, the base station 114b may not be required to access the Internet 110 via the core network 106/107/109.

The RAN 103/104/105 may be in communication with the core network 106/107/109, which may be any type of network configured to provide voice, data, applications, and/or voice over internet protocol (VoIP) services to one or more of the WTRUs 102a, 102b, 102c, 102d. For example, the core network 106/107/109 may provide call control, billing services, mobile location-based services, pre-paid calling, Internet connectivity, video distribution, etc., and/or perform high-level security functions, such as user authentication. Although not shown in FIG. 1A, it will be appreciated that the RAN 103/104/105 and/or the core network 106/107/109 may be in direct or indirect communication with other RANs that employ the same RAT as the RAN 103/104/105 or a different RAT. For example, in addition to being connected to the RAN 103/104/105, which may be utilizing an E-UTRA radio technology, the core network 106/107/109 may also be in communication with another RAN (not shown) employing a GSM radio technology.

The core network 106/107/109 may also serve as a gateway for the WTRUs 102a, 102b, 102c, 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and the internet protocol (IP) in the TCP/IP internet protocol suite. The networks 112 may include wired or wireless communications networks owned and/or operated by other service providers. For example, the networks 112 may include another core network connected to one or more RANs, which may employ the same RAT as the RAN 103/104/105 or a different RAT.

Some or all of the WTRUs 102a, 102b, 102c, 102d in the communications system 100 may include multi-mode capabilities, i.e., the WTRUs 102a, 102b, 102c, 102d may include multiple transceivers for communicating with different wireless networks over different wireless links. For example, the WTRU 102c shown in FIG. 1A may be configured to communicate with the base station 114a, which may employ a cellular-based radio technology, and with the base station 114b, which may employ an IEEE 802 radio technology.

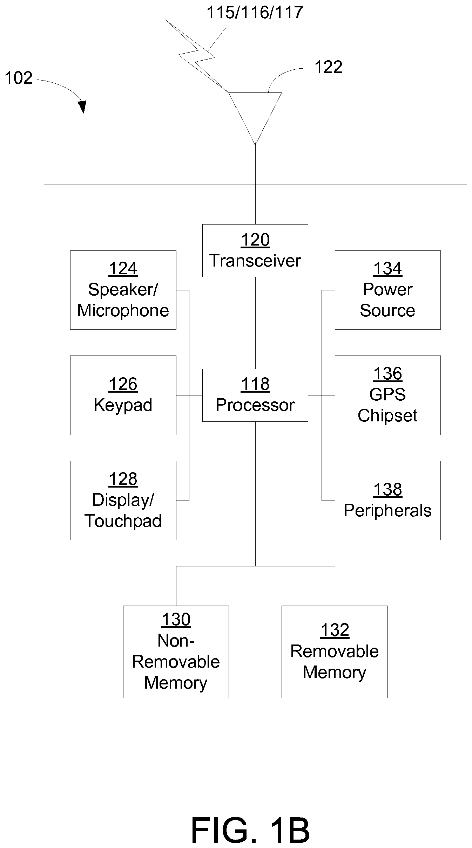

FIG. 1B is a system diagram of an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and other peripherals 138. It will be appreciated that the WTRU 102 may include any sub-combination of the foregoing elements while remaining consistent with an embodiment. Also, embodiments contemplate that the base stations 114a and 114b, and/or the nodes that base stations 114a and 114b may represent, such as but not limited to transceiver station (BTS), a Node-B, a site controller, an access point (AP), a home node-B, an evolved home node-B (eNodeB), a home evolved node-B (HeNB), a home evolved node-B gateway, and proxy nodes, among others, may include some or all of the elements depicted in FIG. 1B and described herein.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 115/116/117. For example, in one embodiment, the transmit/receive element 122 may be an antenna configured to transmit and/or receive RF signals. In another embodiment, the transmit/receive element 122 may be an emitter/detector configured to transmit and/or receive IR, UV, or visible light signals, for example. In yet another embodiment, the transmit/receive element 122 may be configured to transmit and receive both RF and light signals. It will be appreciated that the transmit/receive element 122 may be configured to transmit and/or receive any combination of wireless signals.

In addition, although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 115/116/117.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as UTRA and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 115/116/117 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs or video), a universal serial bus (USB) port, a vibration device, a television transceiver, a hands free headset, a Bluetooth® module, a frequency modulated (FM) radio unit, a digital music player, a media player, a video game player module, an Internet browser, and the like.

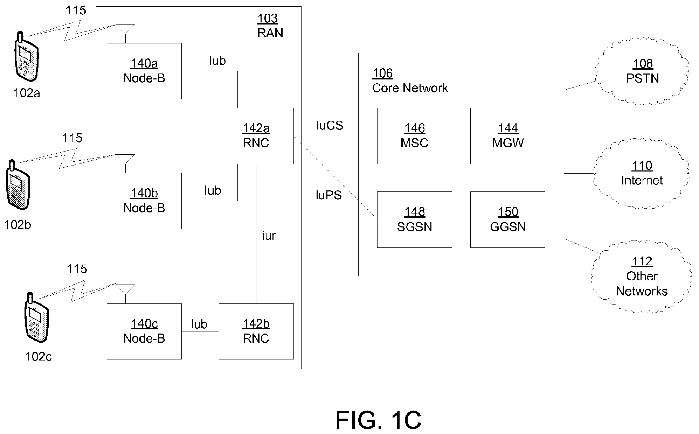

FIG. 1C is a system diagram of the RAN 103 and the core network 106 according to an embodiment. As noted above, the RAN 103 may employ a UTRA radio technology to communicate with the WTRUs 102a, 102b, 102c over the air interface 115. The RAN 103 may also be in communication with the core network 106. As shown in FIG. 1C, the RAN 103 may include Node-Bs 140a, 140b, 140c, which may each include one or more transceivers for communicating with the WTRUs 102a, 102b, 102c over the air interface 115. The Node-Bs 140a, 140b, 140c may each be associated with a particular cell (not shown) within the RAN 103. The RAN 103 may also include RNCs 142a, 142b. It will be appreciated that the RAN 103 may include any number of Node-Bs and RNCs while remaining consistent with an embodiment.

As shown in FIG. 1C, the Node-Bs 140a, 140b may be in communication with the RNC 142a. Additionally, the Node-B 140c may be in communication with the RNC142b. The Node-Bs 140a, 140b, 140c may communicate with the respective RNCs 142a, 142b via an Iub interface. The RNCs 142a, 142b may be in communication with one another via an Iur interface. Each of the RNCs 142a, 142b may be configured to control the respective Node-Bs 140a, 140b, 140c to which it is connected. In addition, each of the RNCs 142a, 142b may be configured to carry out or support other functionality, such as outer loop power control, load control, admission control, packet scheduling, handover control, macrodiversity, security functions, data encryption, and the like.

The core network 106 shown in FIG. 1C may include a media gateway (MGW) 144, a mobile switching center (MSC) 146, a serving GPRS support node (SGSN) 148, and/or a gateway GPRS support node (GGSN) 150. While each of the foregoing elements are depicted as part of the core network 106, it will be appreciated that any one of these elements may be owned and/or operated by an entity other than the core network operator.

The RNC 142a in the RAN 103 may be connected to the MSC 146 in the core network 106 via an IuCS interface. The MSC 146 may be connected to the MGW 144. The MSC 146 and the MGW 144 may provide the WTRUs 102a, 102b, 102c with access to circuit-switched networks, such as the PSTN 108, to facilitate communications between the WTRUs 102a, 102b, 102c and traditional land-line communications devices.

The RNC 142a in the RAN 103 may also be connected to the SGSN 148 in the core network 106 via an IuPS interface. The SGSN 148 may be connected to the GGSN 150. The SGSN 148 and the GGSN 150 may provide the WTRUs 102a, 102b, 102c with access to packet-switched networks, such as the Internet 110, to facilitate communications between and the WTRUs 102a, 102b, 102c and IP-enabled devices.

As noted above, the core network 106 may also be connected to the networks 112, which may include other wired or wireless networks that are owned and/or operated by other service providers.

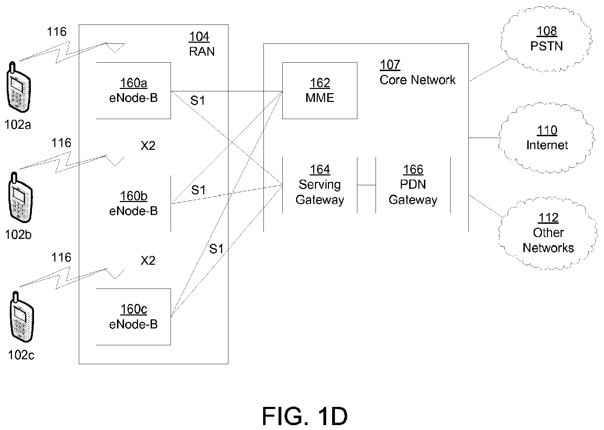

FIG. 1D is a system diagram of the RAN 104 and the core network 107 according to an embodiment. As noted above, the RAN 104 may employ an E-UTRA radio technology to communicate with the WTRUs 102a, 102b, 102c over the air interface 116. The RAN 104 may also be in communication with the core network 107.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and receive wireless signals from, the WTRU 102a.

Each of the eNode-Bs 160a, 160b, 160c may be associated with a particular cell (not shown) and may be configured to handle radio resource management decisions, handover decisions, scheduling of users in the uplink and/or downlink, and the like. As shown in FIG. 1D, the eNode-Bs 160a, 160b, 160c may communicate with one another over an X2 interface.

The core network 107 shown in FIG. 1D may include a mobility management gateway (MME) 162, a serving gateway 164, and a packet data network (PDN) gateway 166. While each of the foregoing elements are depicted as part of the core network 107, it will be appreciated that any one of these elements may be owned and/or operated by an entity other than the core network operator.

The MME 162 may be connected to each of the eNode-Bs 160a, 160b, 160c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may also provide a control plane function for switching between the RAN 104 and other RANs (not shown) that employ other radio technologies, such as GSM or WCDMA.

The serving gateway 164 may be connected to each of the eNode-Bs 160a, 160b, 160c in the RAN 104 via the S1 interface. The serving gateway 164 may generally route and forward user data packets to/from the WTRUs 102a, 102b, 102c. The serving gateway 164 may also perform other functions, such as anchoring user planes during inter-eNode B handovers, triggering paging when downlink data is available for the WTRUs 102a, 102b, 102c, managing and storing contexts of the WTRUs 102a, 102b, 102c, and the like.

The serving gateway 164 may also be connected to the PDN gateway 166, which may provide the WTRUs 102a, 102b, 102c with access to packet-switched networks, such as the Internet 110, to facilitate communications between the WTRUs 102a, 102b, 102c and IP-enabled devices.

The core network 107 may facilitate communications with other networks. For example, the core network 107 may provide the WTRUs 102a, 102b, 102c with access to circuit-switched networks, such as the PSTN 108, to facilitate communications between the WTRUs 102a, 102b, 102c and traditional land-line communications devices. For example, the core network 107 may include, or may communicate with, an IP gateway (e.g., an IP multimedia subsystem (IMS) server) that serves as an interface between the core network 107 and the PSTN 108. In addition, the core network 107 may provide the WTRUs 102a, 102b, 102c with access to the networks 112, which may include other wired or wireless networks that are owned and/or operated by other service providers.

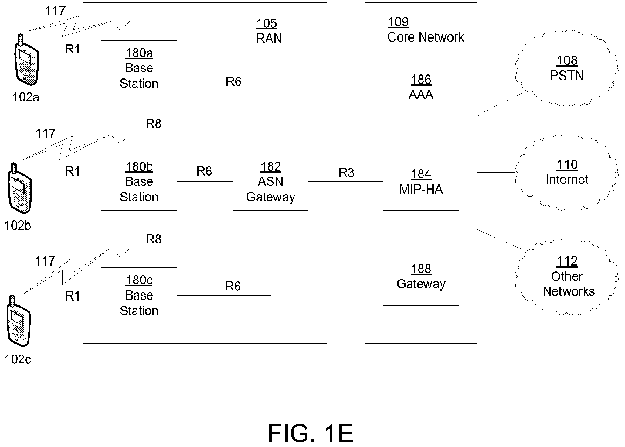

FIG. 1E is a system diagram of the RAN 105 and the core network 109 according to an embodiment. The RAN 105 may be an access service network (ASN) that employs IEEE 802.16 radio technology to communicate with the WTRUs 102a, 102b, 102c over the air interface 117. As will be further discussed below, the communication links between the different functional entities of the WTRUs 102a, 102b, 102c, the RAN 105, and the core network 109 may be defined as reference points.

As shown in FIG. 1E, the RAN 105 may include base stations 180a, 180b, 180c, and an ASN gateway 182, though it will be appreciated that the RAN 105 may include any number of base stations and ASN gateways while remaining consistent with an embodiment. The base stations 180a, 180b, 180c may each be associated with a particular cell (not shown) in the RAN 105 and may each include one or more transceivers for communicating with the WTRUs 102a, 102b, 102c over the air interface 117. In one embodiment, the base stations 180a, 180b, 180c may implement MIMO technology. Thus, the base station 180a, for example, may use multiple antennas to transmit wireless signals to, and receive wireless signals from, the WTRU 102a. The base stations 180a, 180b, 180c may also provide mobility management functions, such as handoff triggering, tunnel establishment, radio resource management, traffic classification, quality of service (QoS) policy enforcement, and the like. The ASN gateway 182 may serve as a traffic aggregation point and may be responsible for paging, caching of subscriber profiles, routing to the core network 109, and the like.

The air interface 117 between the WTRUs 102a, 102b, 102c and the RAN 105 may be defined as an R1 reference point that implements the IEEE 802.16 specification. In addition, each of the WTRUs 102a, 102b, 102c may establish a logical interface (not shown) with the core network 109. The logical interface between the WTRUs 102a, 102b, 102c and the core network 109 may be defined as an R2 reference point, which may be used for authentication, authorization, IP host configuration management, and/or mobility management.

The communication link between each of the base stations 180a, 180b, 180c may be defined as an R8 reference point that includes protocols for facilitating WTRU handovers and the transfer of data between base stations. The communication link between the base stations 180a, 180b, 180c and the ASN gateway 182 may be defined as an R6 reference point. The R6 reference point may include protocols for facilitating mobility management based on mobility events associated with each of the WTRUs 102a, 102b, 102c.

As shown in FIG. 1E, the RAN 105 may be connected to the core network 109. The communication link between the RAN 105 and the core network 109 may defined as an R3 reference point that includes protocols for facilitating data transfer and mobility management capabilities, for example. The core network 109 may include a mobile IP home agent (MIP-HA) 184, an authentication, authorization, accounting (AAA) server 186, and a gateway 188. While each of the foregoing elements are depicted as part of the core network 109, it will be appreciated that any one of these elements may be owned and/or operated by an entity other than the core network operator.

The MIP-HA may be responsible for IP address management, and may enable the WTRUs 102a, 102b, 102c to roam between different ASNs and/or different core networks. The MIP-HA 184 may provide the WTRUs 102a, 102b, 102c with access to packet-switched networks, such as the Internet 110, to facilitate communications between the WTRUs 102a, 102b, 102c and IP-enabled devices. The AAA server 186 may be responsible for user authentication and for supporting user services. The gateway 188 may facilitate interworking with other networks. For example, the gateway 188 may provide the WTRUs 102a, 102b, 102c with access to circuit-switched networks, such as the PSTN 108, to facilitate communications between the WTRUs 102a, 102b, 102c and traditional land-line communications devices. In addition, the gateway 188 may provide the WTRUs 102a, 102b, 102c with access to the networks 112, which may include other wired or wireless networks that are owned and/or operated by other service providers.

Although not shown in FIG. 1E, it will be appreciated that the RAN 105 may be connected to other ASNs and the core network 109 may be connected to other core networks. The communication link between the RAN 105 the other ASNs may be defined as an R4 reference point, which may include protocols for coordinating the mobility of the WTRUs 102a, 102b, 102c between the RAN 105 and the other ASNs. The communication link between the core network 109 and the other core networks may be defined as an R5 reference, which may include protocols for facilitating interworking between home core networks and visited core networks.

Disclosed herein are systems and methods that may relate to architectures for supporting distributed and dynamic mobility management features.

For example, user devices may be capable of accessing data services through wireless technologies. Such user devices may have internet-based applications that may request internet connectivity. Additionally, such handheld devices may request "always-on" and/or ubiquitous service(s), such as Internet service.

Additionally mobile architectures such as, WiMAX, the Evolved Packet System (EPS), or the like may be IP-based for data and voice communications. These mobile architectures may request IP protocols that may be optimized for mobile networks. Additionally, the IP protocols may provide "always-on" and/or ubiquitous Internet service.

Proxy Mobile IPv6 (PMIPv6) may provide network based mobility management to hosts that may connect to a PMIPv6 domain. A Local Mobility Anchor (LMA), and a Mobile Access Gateway (MAG) may be functional entities in PMIPv6. The MAG may be an entity that may detect Mobile Node's (MN) attachment and may provide IP connectivity. The LMA may be an entity that may assign one or more Home Network Prefixes (HNPs) to the MN and may be the topological anchor for traffic belonging to the MN. PMIPv6 may allow an MN to connect to the same PMIPv6 domain through different interfaces. The "logical interface" at the IP layer may enable packet transmission and reception over different physical media. This may be used, for example, to achieve flow mobility, such as the movement of selected flows from one access technology to another. For example, cellular may be moved to non-cellular and vice versa. The mobility management schemes may be extensions or modifications of the Mobile IPv6 protocol (MIPv6), such as Proxy Mobile IPv6 (PMIPv6), Dual Stack Mobile IPv6 (DSMIPv6), and Hierarchical Mobile IPv6 (HMIPv6). The mobility anchor in the aforementioned schemes, however, may be located far away from the edge of the access network and may be deep into the core network.

Distributed Mobility Management (DMM) may provide a flat IP architecture. For example, DMM may provide a flatter IP architecture, in which mobility anchors may be placed closer to the user, and control and data infrastructures may be distributed among the entities that may be located at the edge of the access network. DMM may be in Mobile IPv6 networks such that traffic is distributed an optimal way.

Centralized mobility solutions, such as Mobile IPv6 or macro-level mobility management solutions of 3GPP EPS, base their operation on the existence of a central entity (e.g., HA, LMA, PGW or GGSN) that anchors the IP address used by the mobile node. This central anchor point is in charge of tracking the location of the mobile and redirecting its traffic towards its current topological location. There may be a number of limitations when using centralized mobility solutions for mobility management.

For example, centralized mobility solutions may lead to sub-optimal routing. Since the (home) address used by a mobile node may be anchored at the home link, traffic may traverse the home agent, which may be to paths that may be longer than the one between the mobile node and its communication peer. This may be exacerbated when content providers push their data to the edge of the network which may be close to users. With centralized mobility management techniques, user traffic may first go to the home network and then go to the actual content location, which may add unnecessary delay and may waste operator's resources. As described herein, in a distributed mobility architecture, anchors may be located at or near the edge of the network (i.e., close to the user terminal), which may provide a shorter data path.

As another example, centralized mobility solutions may lead to scalability problems. With current mobility architectures, networks may have to be dimensioned to support traffic that may traverse the central anchors. This may pose several scalability and network design problems, as the central mobility anchors may need to have enough processing and routing capabilities to be able to deal with traffic from a number of mobile users simultaneously. The operator's network may also need to be dimensioned to be able to cope with the traffic from users. A distributed approach may be more scalable, as the mobility management tasks may be distributed and shared among several network entities. The distributor approach may not request as much processing and/or routing capabilities as a centralized approach.

Moreover, centralized solutions may be prone to reliability problems, as the central entity may be a potential single point of failure.

Centralized mobility solutions may also lack fine granularity on the mobility management service. In a centralized mobility management solution, mobility support may be offered at a user granularity. This may mean that the network may decide if mobility may or may not be provided to the user. The centralized mobility management solution may not be able to offer finer granularity, for example, to allow part of user traffic not to be handled by the mobility solution. There may be scenarios in which part or all the traffic of a user may not need to be mobility enabled. For example, when a user may not be mobile (at least during the lifetime of the communication) or when an application itself may be able to deal with the change of IP address that may be caused by user movement. In these situations, it may be more efficient not to enable mobility.

Centralized mobility solutions may also lead to signaling overhead. By allowing mobility management to be dynamically enabled and disabled on a per application basis, some signaling and/or associated handover latency may be prevented.

As described herein, architectures may be used to provide optimal routing, scalability, reliability, fine granularity for mobility management services, improved signaling overhead, or the like. Although embodiments described herein may be described with regard to the 3GPP Evolved Packet System (EPS) architecture, the embodiment may be used with other architectures. Both network-based embodiments and client-based embodiments may be provided. While describing the network-based embodiments, PMIPv6 and GTP may be used as examples of protocol, although this disclosure is not so limited as the embodiments may be used other protocols. For the client-based embodiments, DSMIPv6 may be used as an example, although this disclosure is not so limited as the embodiments may be used with other protocols.

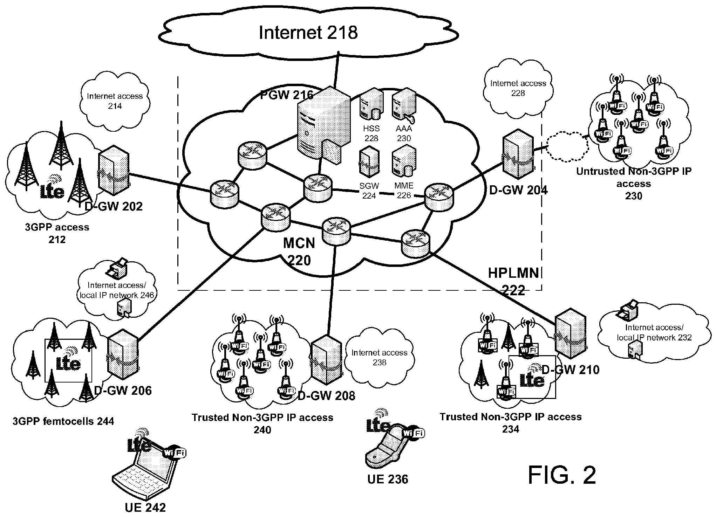

A number of architectures may be provided for DMM. FIG. 2 depicts an example DMM-based mobile network system. For example, FIG. 2 may depict a high level global view of the DMM-based network architecture. As shown in FIG. 2, logical network entities called Distributed Gateways (D-GWs), such as D-GW 202, D-GW 204, D-GW 206, D-GW 208, and D-GW 210 may be at the edge of the network and may be close to the UE (such as a WRTU). A D-GW may be collocated with existing 3GPP nodes or deployed as standalone entities.

Home Public Land Mobile Network (HPLMN) 222 may include D-GW 204, PGW 216, HSS 228, AAA 230, SGW 224, MME 226, and MCN 220. PGW 216 may communicate with Internet 218. D-GW 204 may communicate with Internet access 228, untrusted non-3GPP IP access 230, and MCN 220. D-GW 202 may communicate with MCN 220, 3GPP access 212, and Internet access 214. D- GW 206 may communicate with MCN 220, Internet access/local IP network 246, 3GPP femtocells 244, UE 242, and UE 236. D-GW 208 may communicate with trusted non-3G PDP IP access 240, Internet access 238, UE 236, and UE 242. D-GW 210 may communicate with Internet access/local IP network 232, trusted non-3GPP IP access 234, MCN 220.

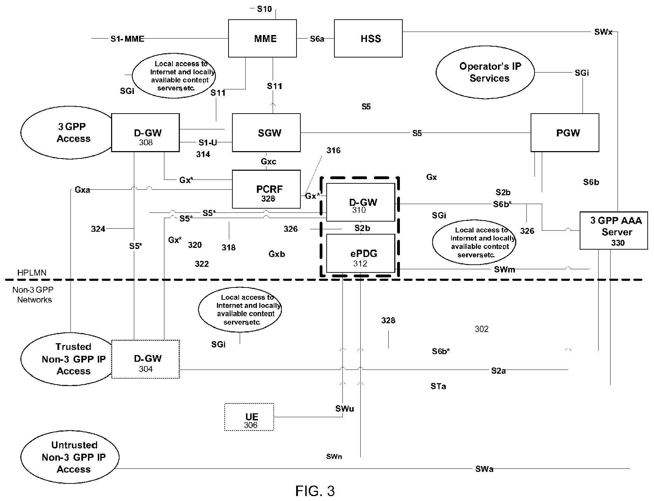

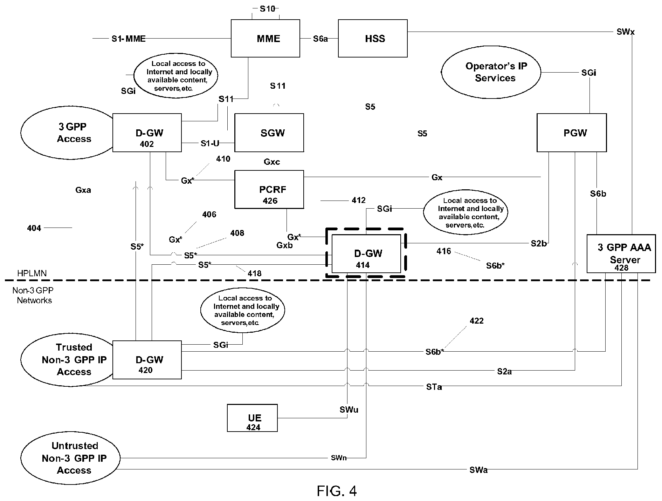

As shown in FIG. 3 and FIG. 4, a variety of architectures may be provided and/or implemented for network-based (i.e., GTP and PMIPv6 variants) embodiments. The embodiments may handle an untrusted Non-3GPP IP access.

FIG. 3 depicts an example non-roaming network-based architecture that may use GPRS Tunneling Protocol (GTP) and/or PMIPv6. For example, FIG. 3 may show a non-roaming architecture, network-based embodiment. As shown in FIG. 3, the D-GW, such as D-GW 310, may be placed next to the ePDG, such as ePDG 312, in the architecture and may re-use the S2b interface at 326. This approach may, for example, allow for an easier incremental deployment approach. Tunneling may be requested even if the UE may not move.

For the case of the 3GPP access (E-UTRAN), D-GW 310 may act as a transparent relay between eNB and SGW for traffic not handled in a DMM way. For Trusted and Untrusted Non-3GPP IP access, D-GW 310 may be transparent for those communications that may not be managed with distributed anchoring.

Interface Gx* may be between a D-GW and a PCRF, and may be based on Gx, Gxa, Gxb and Gxc. For example, the interface Gxc may be used in the case of PMIPv6 variant. At 314, interface Gx* may be used between D-GW 308 and PCRF 328. At 316, interface Gx* may be used between PCRF 328 and D-GW 310. At 322, interface Gx* may be used between PCRF 328 and D-GW 304.

Interface S5*may be between D-GWs, and may be based on S5. At 318, interface S5* may be used between D-GW 310 and D-GW 308. At 320, interface S5* may be used between D-GW 310 and D-GW 304. At 324, interface S5* may be used between D-GW 308 and D-GW 304.

Interface S6b*may be used between a D-GW and a 3GPP AAA Server, and may be based on S6b. At 326, S6b*may be between D-GW 310 and 3GPP AAA 330. At 328, S6b*may be between D-GW 304 and 3GPP AAA 330.

FIG. 4 depicts an example non-roaming network-based architecture that may use GTP and/or PMIPv6. For example, FIG. 4 may show a non-roaming, network-based embodiment. As shown in FIG. 4, D-GW 414 may replace an ePDG in the architecture and may assume eDPG IPsec tunneling functionality with a UE. This approach may, for example, incur less packet overhead. For convenience, and not intending to be limiting, this disclosure may be described in the context of the architecture shown in FIG. 4.

For the case of the 3GPP access (E-UTRAN), D-GW 414 may act as a transparent relay between eNB and SGW for traffic not handled in a DMM way. For Trusted and Untrusted Non-3GPP IP access, D-GW 414 may be transparent for those communications that may not be managed with distributed anchoring.

Interface Gx* may be between a D-GW and a PCRF, and may be based on Gx, Gxa, Gxb and Gxc. For example, the interface Gxc may be used in the case of PMIPv6 variant. At 412, interface Gx* may be used between D-GW 414 and PCRF 426. At 410, interface Gx* may be used between PCRF 426 and D-GW 402. At 406, interface Gx* may be used between PCRF 426 and D-GW 420.

Interface S5* may be between D-GWs, and may be based on S5. At 404, interface S5* may be used between D-GW 402 and D-GW 420. At 408, interface S5* may be used between D-GW 402 and D-GW 414. At 418, interface S5* may be used between D-GW 420 and D-GW 414.

Interface S6b*may be between a D-GW and a 3GPP AAA Server, and may be based on S6b. At 416, S6b*may be used between D-GW 414 and 3GPP AAA 428. At 422, S6b*may be used between D-GW 420 and 3GPP AAA 428.

For the roaming architecture of the DMM network-based system design, the vPCRF and 3GPPP AAA Proxy entities may be added to the reference model, as well as their participation in the different message sequence charts.

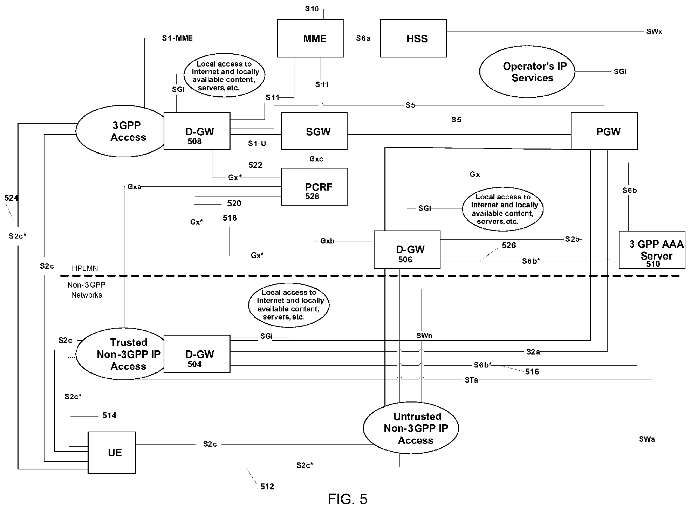

FIG. 5 depicts an example non-roaming architecture that may use client-based Dual Stack Mobile IPv6 (DSMIPv6). For example, FIG. 5 may depict a non-roaming architecture for a client-based (DSMIPv6) embodiment. As in the network-based embodiment, for the case of 3GPP access (E-UTRAN), the D-GW may act as a transparent relay between eNB and SGW for traffic that may not be handled by DMM. For Trusted and Untrusted Non-3GPP IP access, the D-GW may be transparent for those communications that may prefer not to be managed with distributed anchoring.

The interface S2c* may be between a UE and a D-GW and may be based on S2c. S2c* through 3GPP access may use the subset of procedures related to DSMIPv6 bootstrapping and DSMIPv6 deregistration. At 514, interface S2c* may be used between UE 502 and D-GW 504. At 512, interface S2c* may be used between UE 502 and D-GW 506. At 524, interface S2c* may be used between UE 502 and D-GW 508.

The interface S6b* may be between a D-GW and a 3GPP AAA Server and may be based on S6b. At 516, interface S6b*may be used between D-GW 504 and 3GPP AAA Server 510. At 526, interface S6b*may be used between D-GW 506 and 3GPP AAA Server 510.

The interface Gx*may be between a D-GW and a PCRF or another D-GW, and may be based on Gx, Gxa, Gxb and Gxc. At 518, interface Gx* may be used between D-GW 504 and D-GW 506. At 520, interface Gx* may be used between D-GW 504 and PCRF 528. At 522, interface Gx* may be used between D-GW 508 and PCRF 528.

For the roaming architecture of the DMM client-based system design, the vPCRF and 3GPPP AAA Proxy entities may be added to the reference model, as well as their participation in the different message sequence charts.

Additional details are described herein regarding the elements introduced, modified, or impacted by DMM-based design. The Distributed Gateway may be a logical entity that may implement the functionality of a PGW may implement operations for DMM operation. In terms of capacity, the D-GW may be smaller than a PGW, because multiple D-GWs may be deployed and each D-GW may manage a smaller number of subscribers. The number of D-GWs (or the ratio number of D-GWs / number of PGWs) may be up to the mobile operator and the implementation. A D-GW may include MAG functionality, LMA functionality, DSMIPv6 Home Agent, access and routing functionalities, or the like.

The D-GW may include MAG functionality when a PMIPv6 network-based DMM embodiment may be used. This functionality may be performed on a per-UE and per-IPv6 prefix granularity. For example, a single D-GW instance may behave as MAG when handling traffic of a given UE's IPv6 prefix and may operate differently when handling traffic of a different prefix, which may or may not belong to the same UE. The MAG functionality may terminate the S5* interface with another D-GW implementing the LMA counterpart functionality. When the GTP network-based embodiment may be used, the D-GW may behave logically as a MAG, but may use GTP for both control and data planes.

The MAG behavior of the D-GW may vary. For example, a D-GW may present itself as a single router to the UE independently of the number of IPv6 prefixes (anchored by different D-GWs) the UE may currently be using. A single RA may be sent by the D-GW, including IPv6 prefixes as Prefix Information Options (PIOs), and the UE may have a single entry on its IPv6 default routers list. This may be coordinated among the different D-GWs, as the layer-2 and IPv6 link-local addresses used by the D-GWs may be the same per-UE.

As another example, a D-GW may present itself as multiple routers to the UE; one per D-GW anchoring an IPv6 address (or set of prefixes) may be used by the UE. Multiple RAs may be sent by the D-GW, and a RA may include the PIOs of one or more D-GW anchoring a prefix (or set of prefixes). The UE may have multiple entries on its IPv6 default router list, and may leverage mechanisms, such as RFC 4191. This may use less coordination among different D-GWs.

The D-GW may include LMA functionality, such as LMA functionality under the PMIPv6 specification, if the PMIPv6 network-based DMM embodiment may be used. The D-GW may be performed LMA functionality on a per-UE and per-IP prefix granularity. The LMA functionality may terminate the S5* interface with another D-GW implementing the MAG counterpart functionality. When the GTP network-based variant embodiment may be used, the D-GW may behave logically as a LMA, but may use GTP for both control and data planes.

The D-GW may include a DSMIPv6 Home Agent, if the client-based DMM embodiment may be used, etch may be the S2c* interface.

The D-GW may include access and routing functionalities may be requested to interact with the UE that may use access technology that may be in place, such as functions performed by a Trusted Non-3GPP Access). For those PDN connections that may be or may have been handled via a PGW on the HPLMN, D-GW functionality may not be used such that it may be transparent to the UE and the rest of the network entities in the rest of procedures; the D-GW may act as a relay.

The functionality of the D-GW may be similar to the PGW the software stack implementation of the PGW may be reused. This may be done, for example, to minimize the total additional deployment cost.

For D-GWs deployed at 3GPP E-UTRAN/LTE accesses, the D-GW may include, at least some of the following SGW functionality. For example, The D-GW may terminate interface S11 with the MME.

As used herein, "serving D-GW" may refer to the D-GW the UE may be currently associated to. As used herein "anchoring D-GW" may refer to a previously visited D-GW. The anchoring D-GW may be anchoring an IPv6 prefix that may be used by an active flow of the UE.

The D-GW logical entity may be deployed as a standalone function or may be collocated with other 3GPP entities, such as the HeNB, L-GW, SGW, or the like.

If the D-GW may be collocated with the SGW, the S1-U may become an internal logical interface. The resulting logical function may behave as a SGW for communications handled in a centralized way, which may be where traffic may traverse a PGW via S5 GTP/PMIPv6 tunneling. There may be a S11 interface point with the MME and a SGi reference point with the local Internet and content point of connection. The collocation may occur as the D-GW logical entity may implement part of the SGW functionality, and may request to transparently relay messages between the E-UTRAN and the SGW. Collocation may be appropriate, for example, in deployments where the number of SGW may not be large and the SGW(s) may not be located close to users.

The D-GW may be collocated with the HeNB/L-GW. This collocation may occur in dense deployments, where there may be many users and it may be desired to move anchors as far as possible to move traffic out of the core network.

The D-GW may be collocated with the PGW. The D-GW may be collocated with the ePDG, as shown in FIG. 4.

In accordance with the systems and methods described herein, the UE may implement the functionality of a Rel-10/11 capable UE. For example, the UE may implement (NB-)IFOM, DSMIPv6 S2c interface, MAPCON capabilities, or the like. The UE may terminate the S2c* interface with the D-GW. The UE may implement intelligence for IP address management and source address selection. This intelligence may impose requests on the connection manager. For example, for the case of the network-based (GTP/PMIPv6), the UE may keep track internally of the <IPv6 prefix(es), APN> tuple assigned on a D-GW it may attach. For the case of the client-based (DSMIPv6), it may keep track of the IPv6 address of the D-GWs anchoring a prefix used by the UE. Furthermore, the UE may perform intelligent source IPv6 address selection, such that applications may be "offered/presented" prefixes locally anchored at the current D-GW. This may allow for prefixes anchored at D-GWs visited in the past to stop being used. In some embodiments, a mechanism to enable taking into account preferences from the network may be enabled. This may be based on, for example, enhancing ANDSF framework, and/or mechanisms such as RFC 4191, RFC 3484, RFC 5220, or the like.

The UE may wish to control which traffic may be managed in a distributed way by the network and which traffic may be anchored at the HPLMN (anchor selection process). APNs may be defined to indicate which type of anchoring behavior may be selected by the UE. The UE may initiate the PDN disconnection procedure for those PDN connections that may be associated with prefixes that the UE may no longer be using, such that the network releases the associated resources and, for the case of the network-based (PMIPv6) embodiment, the step performing the signaling procedures to keep those prefixes reachable at the current location of the UE.

As described herein, various implementations for mobility management may use network-based embodiments (GTP/PMIPv6) or client-based embodiments. (DSMIPv6). Referring again to FIG. 2, D-GWs may be distributed at the edge of the network. For 3GPP and Trusted Non-3GPP IP accesses, these D-GWs may be placed close to the UE, at the access network level, such as close to SGW or (H)eNB/L-GW for 3GPP access, close to the APs for WiFi Trusted Non-3GPP IP access, or the like. For Untrusted Non-3GPP IP access, the D-GW may be located at the edge of the HPLMN of the operator, close to or in the place of the ePDG, which may be the operator-managed entity closest to the UE.

With some DMM modifications, the D-GW may behave as a PGW from the viewpoint of the UE and the rest of the network. In terms of capacity, D-GWs may be less powerful than PGWs, as they may manage a smaller amount of connections/UEs. The D-GW may provide Internet access, local breakout via SIPTO, and connectivity to local resources (such as a LIPA scenario). A D-GW may have a pool of IPv6 prefixes anchored at the D-GW available for delegation to UE, such as when IP routing delivers packets addressed to those prefixes to the D-GW. When a UE initially attaches to the network, the APN requested by the UE (or the default one, if none provided) may be checked together with its profile at the HSS. As described herein, a connection, which may be a PDN connection, may be handled locally. When a connection may not be handled locally, the connection may be handled as via 3GPP procedures where the D-GW may be transparent and may act as a relay in most of the procedures.

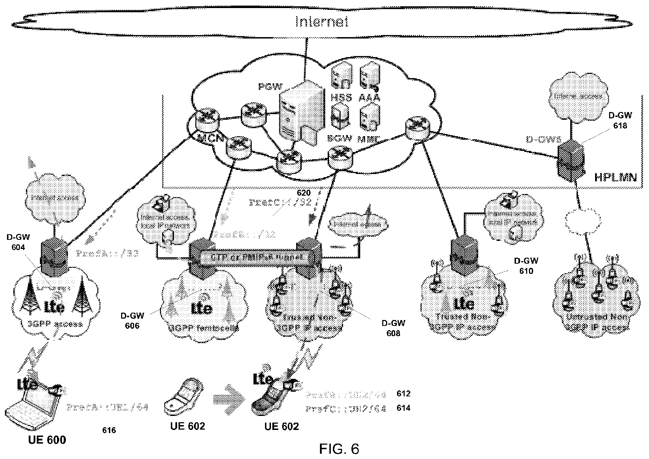

Network based DMM embodiments may be provided. FIG. 6 depicts an example DMM based mobile network system. For example, FIG. 6 shows a DMM-Based Mobile Network System Design that may be network-based (GTP and PMIPv6 variants).

As shown in FIG. 6, a PDN connection requested by a UE, such as UE 600 or UE 602, may be handled by a D-GW, such as D-GW 604, D-GW 606, D-GW 608, D-GW 610, or D-GW 618. An IPv6 prefix, such as PrefA at 616, PrefB at 612, or PrefC at 614, from its pool may be assigned to the UE. This prefix may be conveyed to the UE so it may auto-configure an IPv6 address. A stateless auto-configuration may be used such that the D-GW may send Router Advertisements with the assigned prefix carried in a PIO, but other options may be possible such as, for example, the use of DHCPv6. The D-GW may update on the HSS. For example, the D-GW may update the IPv6 prefix that may be assigned to the UE, which may include the D-GW Identifier and IPv6 address if the D-GW Identifier may not be enough to derive the address. The D-GW may update the HSS via the MME for 3GPP access and the AAA Server for non-3GPP access. The UE may start sending and receiving IPv6 packets, which may be routed via the D-GW without traversing the MCN. For Untrusted Non-3GPP access, packets may need to traverse the HPLMN, but not the MCN. As shown in FIG. 6, UE 600 may be attached to D-GW 604 and may configure PrefA:x::UE1/64 address out of the prefix PrefA:x::/64 that may be assigned by D-GW 604.

If a UE moves and attaches to another access network, a number of procedures may be performed. For example, a procedure may be performed may be that the PDN connections that the UE may have established may be maintained to, for example, ensure address preservation. For a PDN connection of the UE, the D-GW anchoring the IP address that may be used by the UE may play the role of PGW (i.e., LMA) for that PDN connection; the D-GW may perform the LMA functions for that UE and that PDN connection. The D-GW to which the UE may be attached to may play the role of a MAG for a PDN connection of the UE that may be anchored at other D-GWs. The D-GW that the UE may currently be attached to may obtain information about on-going PDN connections of the UE, the IPv6 prefixes that may be used, and the D-GWs that may be anchoring them, by interacting with the HSS/AAA. As another example, a procedure that may be performed may be that the UE may request a PDN connection (or several) to the D-GW the UE may be currently attached. This may provide the UE with an IPv6 address that may be anchored at the serving D-GW. This may be done, for example, to provide good use of the operator's network resources.

Still referring to FIG. 6, UE 602 may be initially attached to D-GW 606, where it may have established a PDN connection and may have configured PrefB:y::UE2/64 at 612 as an IP address that may be anchored at D-GW 606. UE2 may move and may attach to D-GW 608. D-GW 608 may play the role of MAG and D-GW 606 may play the role of LMA. The original PDN connection may be handed over, for example, by establishing a GTP or PMIPv6 tunnel (depending on the network-based embodiment in place) between D-GW 606 and D-GW 608 at 620 to forward traffic addressed to PrefB:y::UE2 to the current location of UE 602. This may allow UE 602 to keep using PrefB:y::UE2 and may allow UE 602 to maintain any running services/applications/connections using that address. UE 602 may establish a new PDN connection at D-GW 608 and may configure a new IPv6 address at 614 (PrefC:z::UE2/64) that may be anchored at D-GW 608 and may be used by UE 602 for new connections.

DMM may use UE smart IP address management. The IP address selection mechanisms that may be used by the UE may be enhanced to allow the UE to prefer an IPv6 address that may be anchored at the D-GW the UE may currently be attached to. This may be done, for example, to allow new communications make use of the locally anchored IPv6 addresses, while old communications may be maintained by ensuring IPv6 address continuity. When communications using an old IPv6 addresses finish, the UE may be aware and may signal to the network that reachability for the address may no longer be requested. This may prevent further signaling from being generated and may allow used tunnels to be removed. This enhanced intelligence of the UE may assist in managing the IPv6 addresses.

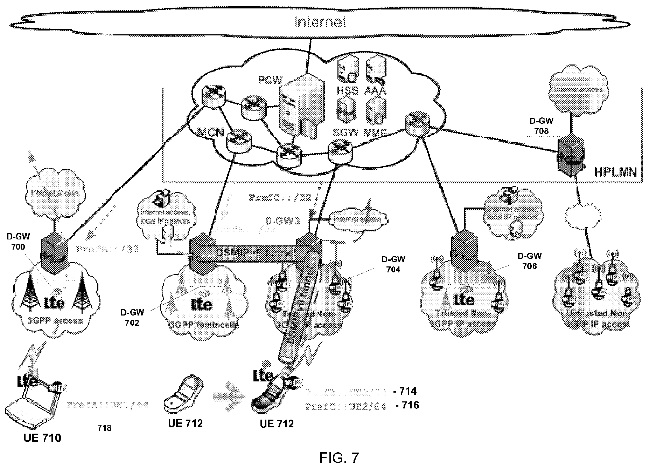

Client based DMM may be provided. FIG. 7 depicts an example DMM based mobile network system. For example, FIG. 7 depicts a DMM-Based Mobile Network System Design. Procedures that may be based on 3GPP client-based mobility management procedures using DSMIPv6, may be provided.

The PDN connection requested by a UE, such as UE 710, or UE 712, may be handled by a D-GW, such as D-GW 700, D-GW 702, D-GW 704, D-GW 706, or D-GW 708. An IPv6 prefix from its pool may be assigned to the UE. This prefix may be conveyed to the UE so it may auto-configure an IPv6 address. A stateless auto-configuration may be used such that, for example, the D-GW may send Router Advertisements with the assigned prefix carried in a PIO. Other options may be possible, such as, for example, use of use of DHCPv6. The D-GW may update, on the HSS, the IPv6 prefix that may be assigned to the UE, which may include the D-GW Identifier and may include the IPv6 address if the D-GW Identifier may not be enough to derive the address. This may occur, for example, via the MME for 3GPP access and the AAA Server for non-3GPP access. The UE may send and receive IPv6 packets, which may be routed via the D-GW. Routing via the D-GW may occur without traversing the MCN. For Untrusted Non-3GPP access, packets may traverse the HPLMN, but may not traverse the MCN.

As shown in FIG. 7, UE 710 may be connected to D-GW 700 and may configure PrefA:x::UE1/64 address out of the prefix PrefA:x::/64 that may be assigned by D-GW 700. This address may be considered as a Home Address of the UE that may be assigned by D-GW 700, which may play the role of Home Agent, for this UE and this HoA, if the UE moves later on.

If the UE moves and attaches to another access network, there may be a number of procedures that may take place. As an example, a procedure may be that the UE may request a PDN connection (or several PDN connections) to the D-GW the UE may be currently attached to. This may provide the UE with an IPv6 address that may be anchored at the serving D-GW, which may be used by the UE to enjoy optimal routing. This may be done, for example, to ensure good use of the operator's network resources. As another example, a procedure may be that the PDN connections that the UE may have previously established may be maintained to, for example, ensure address preservation. For a PDN connection that may belong to the UE, the D-GW that may anchor the IP address used by the UE may play the role of PGW (i.e., HA) for that PDN connection such that the D-GW may perform the HA functions for that UE and that PDN connection. The UE may have to signal to each of the anchoring D-GWs its current location and establish an IPv6-in-IPv6 tunnel, so data packets may be redirected to the UE. The UE may use the address that may have been obtained from the attached D-GW (i.e., serving D-GW) as a care-of address, and may send a Binding Update message per HoA (i.e., the addresses that may have been assigned by the previously visited serving D-GW, which may play the role of anchoring D-GWs). This may be done for addresses that may still be used by the UE.

UE 712 in FIG. 7 may have been initially attached to D-GW 702, where it may have established a PDN connection and may have configured PrefB:y::UE2/64 as IP address at 714, which may be anchored at D-GW 702. UE 712 may move and attaches to D-GW 704. UE 712 may establish a PDN connection at D-GW 704. UE may configure a IPv6 address (PrefC:z::UE2/64 at 716) that may be anchored at D-GW3 and may be used by UE2 for connections. This address may also be used as a CoA to establish a bi-directional tunnel with D-GW 702, which may anchor the previously configured IPv6 address. PrefB:y::UE2/64 may be used as HoA, PrefC:z::UE2/64 may be used as CoA, and D-GW 702 may behave as HA for UE 712 and IPv6 specific address. This may allow UE 712 to keep using PrefB:y::UE2 and may allow UE 712 to maintain any running services/applications/connections using that address. UE 712 may encourage the use of the acquired IPv6 address (PrefC:z::UE2/64) for the communications, which may avoid tunneling and suboptimal routing.

IP address selection mechanisms used by the UE may be enhanced to allow the UE to prefer an IPv6 address that may be anchored at the D-GW the UE may be currently attached to. This may be done, for example, to allow new communications to make use of the locally anchored IPv6 addresses, while old communications may be maintained by ensuring IPv6 address continuity. As soon as communications using old IPv6 addresses may finish, the UE may be aware and may signal to the network that reachability for the address may no longer be requested so that used tunnels may be removed. This may be done, for example, by sending a de-registration BU. The UE may have enhanced intelligence to manage IPv6 addresses.

Control and user plane stacks may be provided. The control plane for Mobility Management (MM) and the user plane on GTP/PMIPv6 based interfaces are illustrated for various network-based embodiments. For the case of the user plane, a number of embodiments are shown. For example, an embodiment may be used for direct connectivity, such that a serving and anchoring D-GWs may be collocated for a UE and the IPv6 address/prefix the UE may be using. As another example, an embodiment may be used for distributed anchoring, such that a serving and anchoring D-GWs may not be collocated as a result of UE mobility.

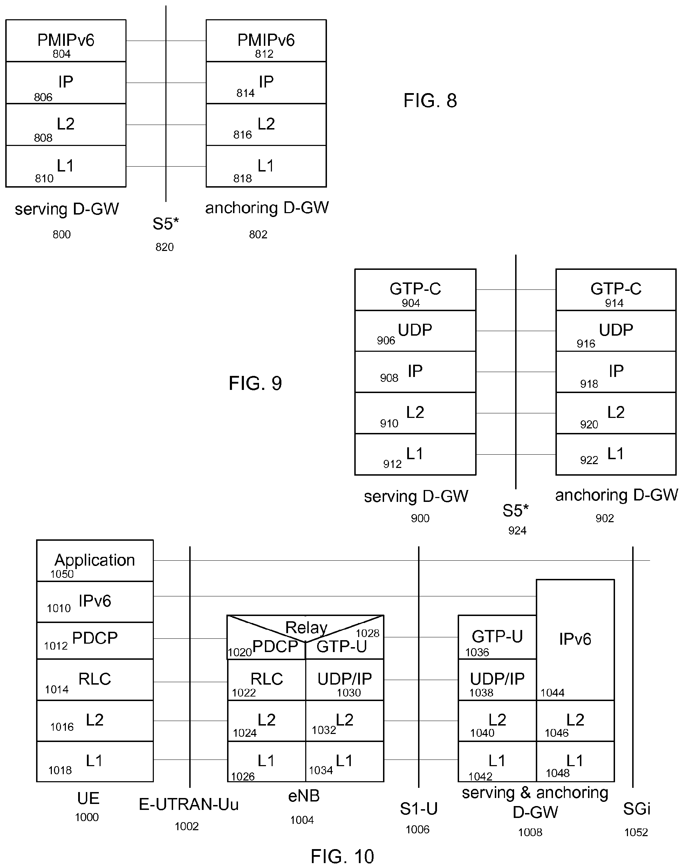

FIG. 8 depicts an example network-based control plane that may use PMIPv6 and may be used with E-UTRAN 3GPP access. As shown in FIG. 8, serving D-GW 800 and anchoring D-GW 802 may communicate with each other using interface S5* at 820. Serving D-GW 800 may include PMIPv6 804, IP 806, L2 808, and L1 810. Anchoring D-GW 802 may include PMIPv6 812, IP 814, L2 816, and L1 818.

FIG. 9 depicts an example network-based control plane that may use GTP and may be used with E-UTRAN 3GPP access. As shown in FIG. 9, serving D-GW 900 and anchoring D-GW 902 may communicate with each other using interface S5* at 924. Serving D-GW 900 may include GTP-C 904, UDP 906, IP 908, L2 910, and L1 912. Anchoring D-GW 902 may include GTP-C 914, UDP 916, IP 918, L2 920, and L1 922.

FIG. 10 depicts an example network-based user plane for network-based that may use PMIPv6 and/or GTP, and may be used with E-UTRAN 3GPP access and direct connectivity. UE 1000, eNB 1004, and D-GW 1008 may communicate using E-UTRAN-Uu 1002 and/or S1-U 1006. eNB 1004 may act as a relay between UE 1000 and D-GW 1008 to allow UE 1000 and D-GW 1008 to communicate. UE 1000 may include application 1050, IPv6 1010, PDCP 1012, RLC 1014, L2 1016, and L1 1018. eNB 1004 may include PDCP 1020, RLC 1022, L2 1024, L1 1026, GTP-U 1028, UDP/IP 1030, L2 1032, and L1 1034. D-GW 1008 may include GTP-u 1036, UDP/IP 1038, L2 1040, L1 1042, IPv6 1044, L2 1046, and L1 1048. D-GW 1008 may be a serving and anchoring D-GW. SGi 1052 may be a reference point that may be used between a PDN GW and a packet data network. SGi 1052 may be used by Application 1050.

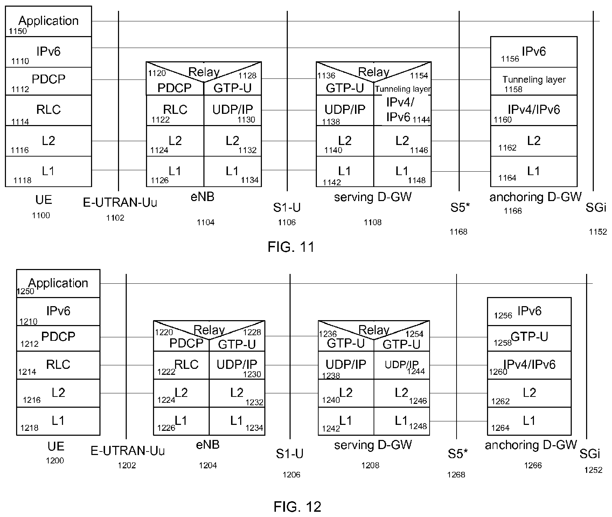

FIG. 11 depicts an example network-based user plane that may use PMIPv6, and may be used with E-UTRAN 3GPP access and distributed anchoring. UE 1100, eNB 1104, serving D-GW, and anchoring D-GW 1166 may communicate using E-UTRAN-Uu 1102 and/or S5* 1168. eNB 1104 may communicate with serving D-GW 1108 via interface S1-U 1106. Serving D-GW 1108 may communicate with anchoring D-GW 1166 via interface S5* 1168. eNB 1104 may relay communication between UE 1100, serving D-GW 1108, and/or anchoring D-GW. Serving D-GW 1108 may relay communication between anchoring D-GW 1166, eNB 1104, and/or 1100. UE 1100 may include application 1150, IPv6 1110, PDCP 1112, RLC 1114, L2 1116, and L1 1118. eNB 1104 may include PDCP 1120, RLC 1122, L2 1124, L1 1126, GTP-U 1128, UDP/IP 1130, L2 1132, and L1 1134. Serving D-GW 1108 may include GTP-u 1136, UDP/IP 1138, L2 1140, L1 1142, tunneling layer 1154, IPv4/IPv6 1144, L2 1146, and L1 1148. Anchoring D-GW 1166 may include IPv6 1156, tunneling layer 1158, IPv4/IPv6 1160, L2 1162, and L1 1164. SGi 1152 may be a reference point that may be between a PDN GW and a packet data network. SGi 1152 may be used by Application 1150.

FIG. 12 depicts an example network-based user plane that may use GTP, and may be used with E-UTRAN 3GPP access and distributed anchoring. UE 1200, eNB 1204, serving D-GW, and anchoring D-GW 1266 may communicate using E-UTRAN-Uu 1202 and/or S5* 1268. eNB 1204 may communicate with serving D-GW 1208 via interface S1-U 1206. Serving D-GW 1208 may communicate with anchoring D-GW 1266 via interface S5* 1268. eNB 1204 may relay communication between UE 1200, serving D-GW 1208, and/or anchoring D-GW. Serving D-GW 1208 may relay communication between anchoring D-GW 1266, eNB 1204, and/or 1200. UE 1200 may include application 1250, IPv6 1210, PDCP 1212, RLC 1214, L2 1216, and L1 1218. eNB 1204 may include PDCP 1220, RLC 1222, L2 1224, L1 1226, GTP-U 1228, UDP/IP 1230, L2 1232, and L1 1234. Serving D-GW 1208 may include GTP-u 1236, UDP/IP 1238, L2 1240, L1 1242, GTP-U 1254, UDP/IP 1244, L2 1246, and L1 1248. Anchoring D-GW 1266 may include IPv6 1256, GTP-U 1258, IPv4/IPv6 1260, L2 1262, and L1 1264. SGi 1252 may be a reference point that may be between a PDN GW and a packet data network. SGi 1252 may be used by Application 1250.

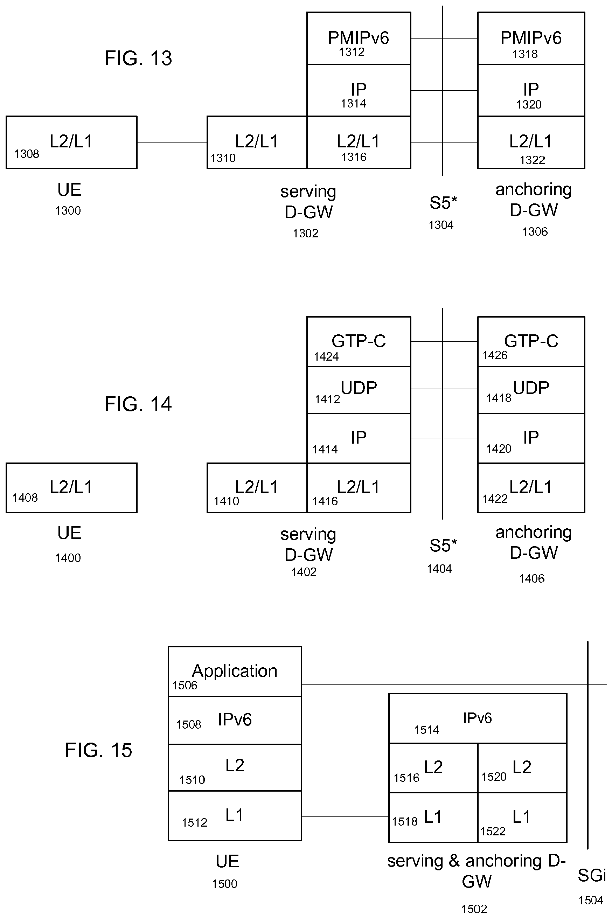

FIG. 13 depicts an example network-based control plane that may use PMIPv6, and may be used with trusted non-3GPP IP access. As shown in FIG. 13, UE 1300, serving D-GW 1302, and anchoring D-GW 1306 may communicate with each other. Serving D-GW 1302 may communicate with anchoring D-GW 1306 via interface S5* 1304. UE 1300 may include L2/L1 1308. Serving D-GW 1302 may include L2/L1 1310, PMIPv6 1312, IP 1314, and L2/L1 1316. Anchoring D-GW 1306 may include PMIPv6 1318, IP 1320, and L2/L1 1322.

FIG. 14 depicts an example network-based control plane that may use GTP, and may be used with trusted non-3GPP IP access.

As shown in FIG. 14, UE 1400, serving D-GW 1402, and anchoring D-GW 1406 may communicate with each other. Serving D-GW 1402 may communicate with anchoring D-GW 1406 via interface S5* 1404. UE 1400 may include L2/L1 1408. Serving D-GW 1402 may include L2/L1 1410, UDP 1412, IP 1414, L2/L1 1416, and GTP-C 1424. Anchoring D-GW 1406 may include UDP 1418, IP 1420, L2/L1 1422, and GTP-C 1426.

FIG. 15 depicts an example network-based user plane that may use PMIPv6 and/or GTP, and may be used with trusted Non-3GPP IP access and direct access. As shown in FIG 15, UE 1500 and D-GW 1502 may communicate with each other. UE 1500 may include application 1506, IPv6 1508, L2 1510, and L1 1512. D-GW 1502 may include IPv6 1514, L2 1516, L1 1518, L2 1520, and L1 1522. SGi 1504 may be a reference point that may be between a PDN GW and a packet data network. SGi 1504 may be used by application 1506.

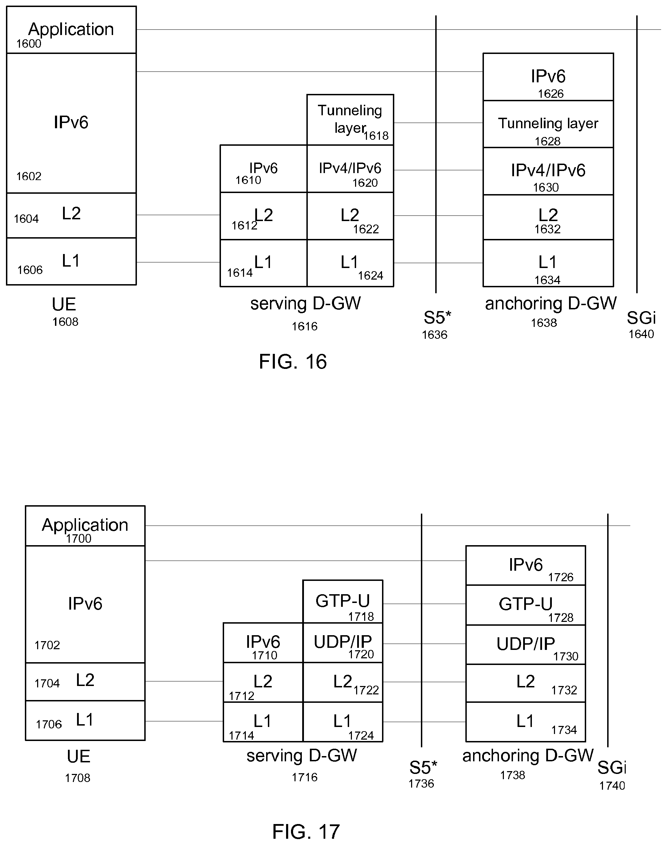

FIG. 16 depicts an example network-based user plane that may use PMIPv6, and may be used with trusted non-3GPP IP access and distributed anchoring. As shown in FIG. 16, UE 1608, serving D-GW 1616, and anchoring D-GW 1638 may communicate with each other. UE 1608 may include application 1600, IPv6 1602, L2 1604, L1 1606. Serving D-GW 1616 may include IPv6 1610, L2 1612, L1 1614, tunneling layer 1618, IPv4/IPv6 1620, L2 1622, and L1 1624. Anchoring D-GW 1638 may include IPv6 1626, tunneling layer 1628, IPv4/IPv6 1630, L2 1632, and L1 1634. Serving D-GW 1616 may communicate with anchoring D-GW 1638 via interface S5* 1636. SGi 1640 may be a reference point that may be between a PDN GW and a packet data network. SGi 1640 may be used by application 1600.

FIG. 17 depicts an example user plane for network-based that may use GTP, and may be used with trusted non-3GPP IP access and distributed anchoring. As shown in FIG. 17, UE 1708, serving D-GW 1716, and anchoring D-GW 1738 may communicate with each other. UE 1708 may include application 1700, IPv6 1702, L2 1704, L1 1706. Serving D-GW 1716 may include IPv6 1710, L2 1712, L1 1714, GTP-U 1718, UDP/IP 1720, L2 1722, and L1 1724. Anchoring D-GW 1738 may include IPv6 1726, GTP-U 1728, UDP/IP 1730, L2 1732, and L1 1734. Serving D-GW 1716 may communicate with anchoring D-GW 1738 via interface S5* 1736. SGi 1740 may be a reference point that may be between a PDN GW and a packet data network. SGi 1740 may be used by application 1700.

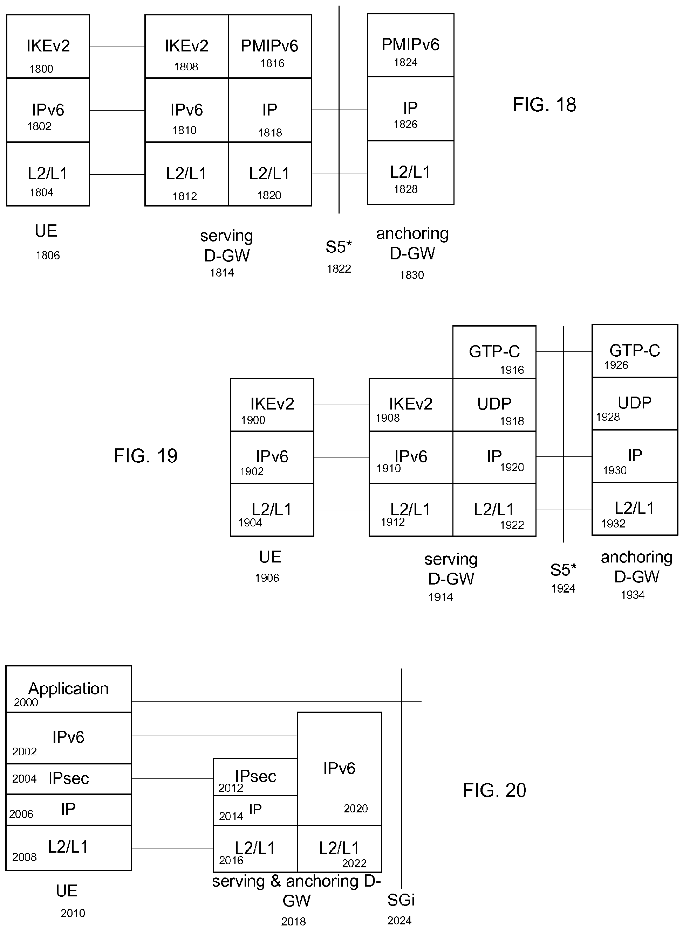

FIG. 18 depicts an example network-based control plane that may use PMIPv6, and may be used with untrusted Non-3GPP IP access. UE 1806, Serving D-GW 1814, and anchoring D-GW 1830 may be in communication with each other. UE 1806 may include IKEv2 1800, IPv6 1802, and L2/L1 1804. Serving D-GW may include IKEv2 1808, IPv6 1810, L2/L1 1812, PMIPv6 1816, IP 1818, and L2/L1 1820. Anchoring D-GW 1830 may include PMIPv6 1824, IP 1826, and L2/L1 1828. Serving D-GW 1814 may communicate with anchoring D-GW 1830 via interface S5* 1822.

FIG. 19 depicts an example network-based control plane that may use GTP, and may be used with untrusted non-3GPP IP access. UE 1906, Serving D-GW 1914, and anchoring D-GW 1934 may be in communication with each other. UE 1906 may include IKEv2 1900, IPv6 1902, and L2/L1 1904. Serving D-GW may include IKEv2 1908, IPv6 1910, L2/L1 1912, GTP-C 1916, UDP 1918, IP 1920, and L2/L1 1922. Anchoring D-GW 1934 may include GTP-C 1926, UDP 1928, IP 1930, and L2/L1 1932. Serving D-GW 1914 may communicate with anchoring D-GW 11934 via interface S5* 1924.

FIG. 20 depicts an example network-based user plane that may use GTP and/or PMIPv6, and may be used with untrusted non-3GPP IP access and direct connectivity. UE 2010 may communicate with D-GW 2018. UE 2010 may include application 2000, IPv6 2002, IPsec 2004, IP 2006, and L2/L1 2008. D-GW may include IPsec 2012, IP 2013, L2/L1 2016, IPv6 2020, and L2/L1 2022. D-GW 2018 may be a serving and anchoring D-GW. SGi 2024 may be a reference point that may be between a PDN GW and a packet data network. SGi 2024 may be used by application 2000.

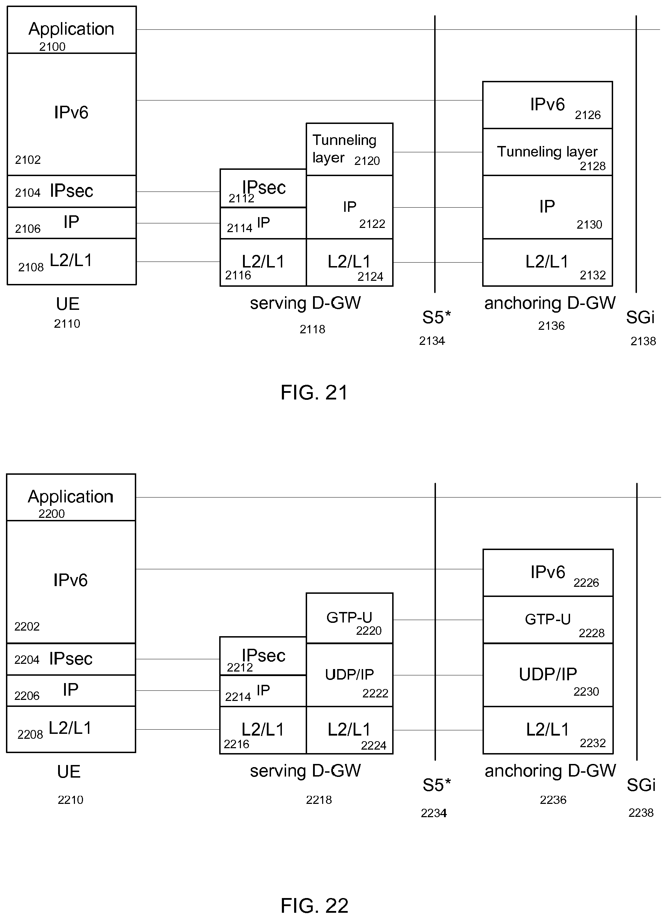

FIG. 21 depicts an example network-based user plane that may use PMIPv6, and may be used with untrusted non-3GPP IP access and distributed anchoring. UE 2110, serving D-GW 2118, and anchoring D-GW 2136 may communicate with each other. Serving D-GW 2118 and anchoring D-GW 2136 may communicate via interface S5* 2134. UE 2110 may include application 2100, IPv6 2102, IPsec 2104, IP 2106, and L2/L1 2108. Serving D-GW 2118 may include IPsec 2112, IP 2114, L2/L1 2116, tunneling layer 2120, IP 2122, and L2/L1 2124. Anchoring D-GW 2136 may include IPv6 2126, tunneling layer 2128, IP 2130, and L2/L1 2132. SGi 2134 may be a reference point that may be between a PDN GW and a packet data network. SGi 2123 may be used by application 2100.

FIG. 22 depicts an example network-based user plane that may use GTP, and may be used with untrusted non-3GPP IP access and distributed anchoring. UE 2210, serving D-GW 2218, and anchoring D-GW 2236 may communicate with each other. Serving D-GW 2218 and anchoring D-GW 2236 may communicate via interface S5* 2234. UE 2210 may include application 2200, IPv6 2202, IPsec 2204, IP 2206, and L2/L1 2208. Serving D-GW 2218 may include IPsec 2212, IP 2214, L2/L1 2216, GTP-U 2220, UDP/IP 2222, and L2/L1 2224. Anchoring D-GW 2236 may include IPv6 2226, GTP-U 2228, UDP/IP 2230, and L2/L1 2232. SGi 2234 may be a reference point that may be between a PDN GW and a packet data network. SGi 2223 may be used by application 2200.

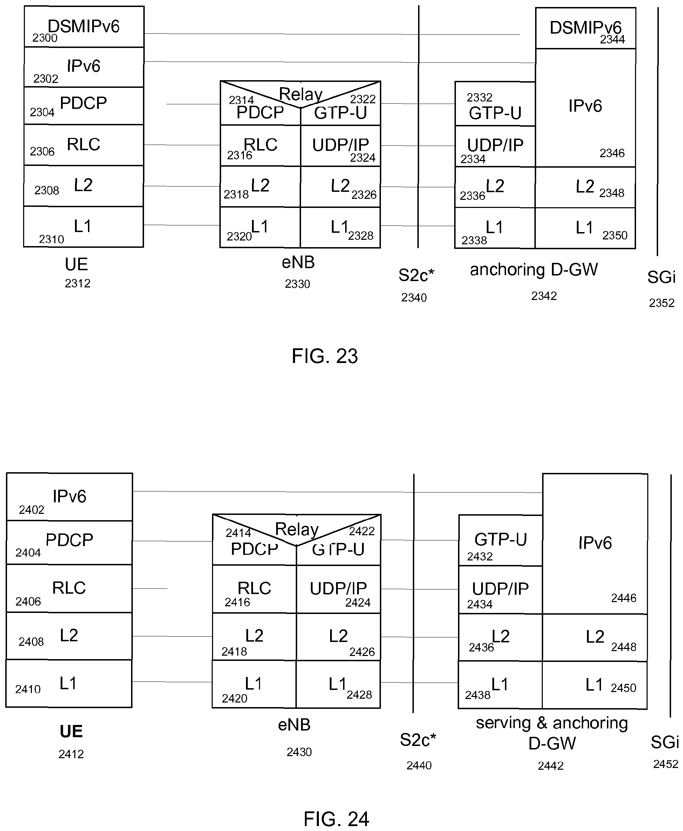

FIG. 23 depicts an example client-based control plane that may be used with E-UTRAN 3GPP access. UE 2312, eNB 2330, and anchoring D-GW 2342 may communicate with each other. eNB 2330 and anchoring D-GW 2342 may communicate via interface S2c* 2340. UE 2313 may include DSMIPv6 2300, IPv6 2302, PDCP 2304, RLC 2306, L2 2308, and L1 2310. eNB 2330 may include 2314 PDCP, RLC 2316, L2 2318, L1 2320, GTP-U 2322, UDP/IP 2324, L2 2326, and L1 2328. Anchoring D-GW 2342 may include GTP-U 2332, UDP/IP 2334, L2 2336, L1 2338, DSMIPv6 2344, IPv6 2346, L2 2348, and L1 2350. SGi 2352 may be a reference point that may be between a PDN GW and a packet data network.

FIG. 24 depicts an example client-based control plane that may be used with E-UTRAN 3GPP access. UE 2412, eNB 2430, and D-GW 2442 may communicate with each other. eNB 2430 and D-GW 2442 may communicate via interface S2c* 2440. UE 2413 may include IPv6 2402, PDCP 2404, RLC 2406, L2 2408, and L1 2410. eNB 2430 may include 2414 PDCP, RLC 2416, L2 2418, L1 2420, GTP-U 2422, UDP/IP 2424, L2 2426, and L1 2428. D-GW 2442 may include GTP-U 2432, UDP/IP 2434, L2 2436, L1 2438, IPv6 2446, L2 2448, and L1 2450. D-GW 2442 may be a serving and anchoring D-GW. SGi 2452 may be a reference point that may be between a PDN GW and a packet data network.

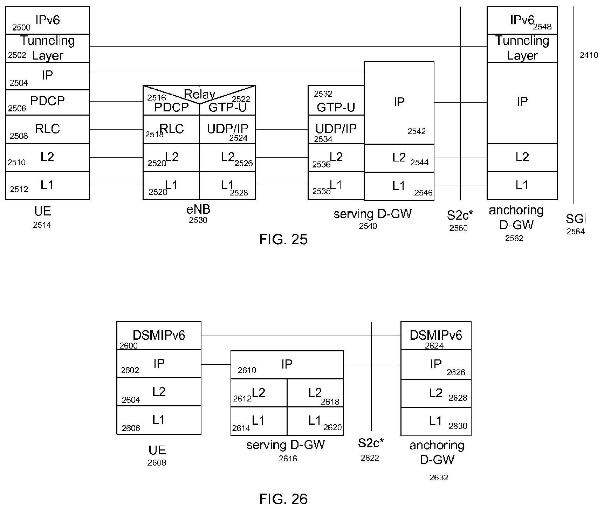

FIG. 25 depicts an example client-based user plane that may have 3GPP access and distributed anchoring. As shown in FIG. 25, UE 2514, eNB 2530, serving D-GW 2540, and anchoring D-GW 2562 may communicate with each other. Serving D-GW 2540 and anchoring D-GW 2562 may communicate via interface S2c* 2560. UE 2514 may include IPv6 2500, tunneling layer 2502, IP 2504, PDCP 2506, RLC 2508, L2 2510, and L1 2512. eNB 2530 may include PDCP 2516, RLC 2518, L2 2520, L1 2520, GTP-U 2522, UDP/IP 2524, L2 2526, and L1 2528. Serving D-GW 2540 may include GTP-U 2532, UDTP/IP 2534, L2 2536, L1 2538, IP 2542, L2 2544, and L1 2546. Anchoring D-GW 2562 may include IPv6 2548, tunneling layer 2550, IP 2552, L2 2554, and L1 2556. SGi 2564 may be a reference point that may be between a PDN GW and a packet data network.

FIG. 26 depicts an example client-based control plane that may be used with trusted non-3GPP IP access. UE 2608, serving D-GW 2616, and anchoring D-GW 2632 may communicate with each other. Serving D-GW 2616 and anchoring D-GW 2632 may communicate via interface S2c* 2622. UE 2608 may include DSMIPv6 2600, IP 2602, L2 2604, and L1 2606. Serving D-GW 2616 may include IP 2610, L2 2612, L1 2614, L2 2618, and L1 2620. Anchoring D-GW 2632 may include DSMIPv6 2624, IP 2626, L2 2628, and L1 2630.

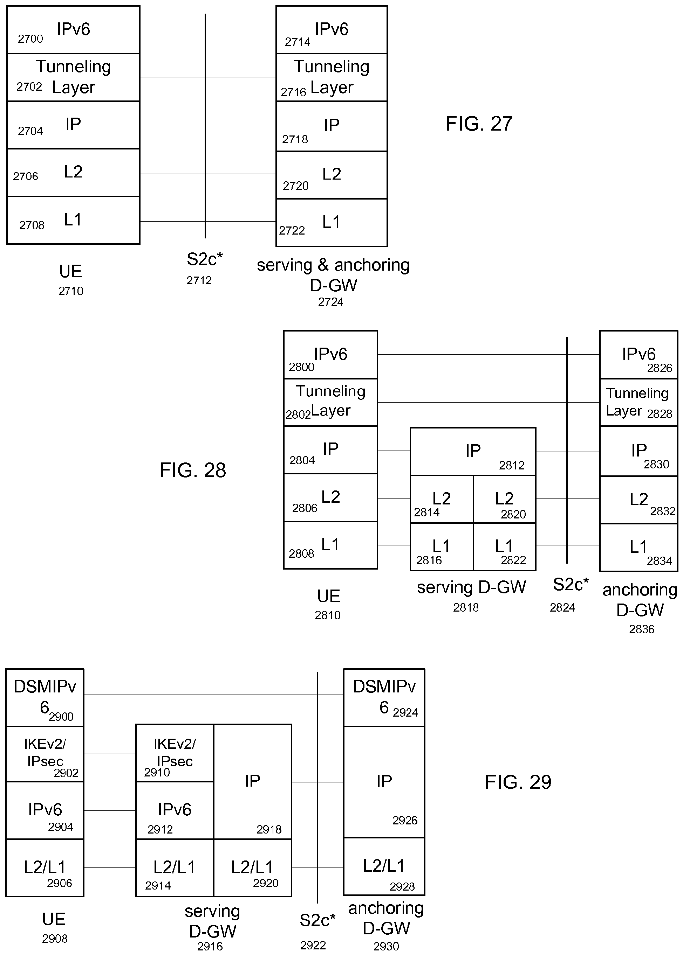

FIG. 27 depicts an example client-based user plane that may be used with trusted non-3GPP IP access and direct connectivity. UE 2710 and D-GW 2724 may communicate via, for example, interface S2c* 2712. UE 2710 may include IPv6 2700, tunneling layer 2702, IP 2704, L2 2706, and L1 2708. D-GW 2724 may include IPv6 2714, tunneling layer 2716, IP 2718, L2 2720, and L1 2722. D-GW 2724 may be a serving and anchoring D-GW.

FIG. 28 depicts an example client-based user plane that may be used with trusted non-3GPP IP access and distributed anchoring. UE 2810, serving D-GW 2818, and anchoring D-GW 2836 may communicate with each other. Serving d-GW 2818 and anchoring D-GW 2836 may communicate via interface S2c* 2824. UE 2810 may include IPv6 2800, tunneling layer 2802, IP 2804, L2 2806, and L1 2808. Serving D-GW 2818 may include IP 2812, L2 2814, L1 2816, L2 2820, and L1 2822. Anchoring D-GW 2836 may include IPv6 2826, tunneling layer 22828, IP 2830, L2 2832, and L1 2834.

FIG. 29 depicts an example client-based control plane that may be used with untrusted non-3GPP IP access. UE 2908, serving D-GW 2916, and anchoring D-GW 2930 may communicate with each other. Serving D-GW 2916 may communicate with anchoring D-GW 2930 via interface S2c* 2922. UE 2908 may include DSMIPv6 2900, IKEv2/IPsec 2902, IPv6 2904, and L2/L1 2906. Serving D-GW 2916 may include IKEv2/IPsec 2910, IPv6 2912, L2/L1 2914, IP 2918, and L2/L1 2920. Anchoring D-GW 2930 may include DSMIPv6 2924, IP 2926, and L2/L1 2928.

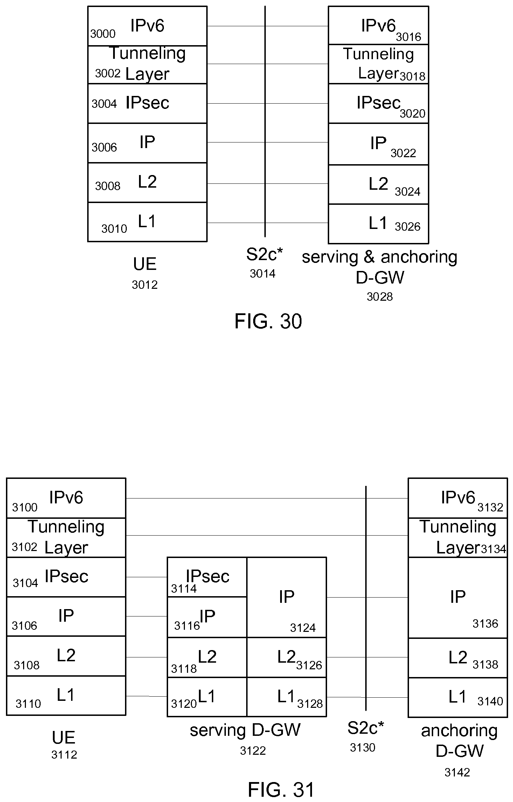

FIG. 30 depicts an example client-based user plane that may be used with untrusted non-3GPP IP access and direct connectivity. UE 3012 and D-GW 3028 may communicate via interface S2c* 3014. UE 3012 may include IPv6 3000, tunneling layer 3002, IPsec 3004, IP 2006, L2 2008, and L1 3010. D-GW 3028 may include IPv6 3016, tunneling layer 3018, IPsec 3020, IP 3022, L2 3024, and L1 3026. D-GW 3028 may be a serving and anchoring D-GW.

FIG. 31 depicts an example client-based user plane that may be used with untrusted non-3GPP IP access and distributed anchoring. UE 3112, Serving D-GW 3122, and anchoring D-GW 3142 may communicate with each other. Serving D-GW 3122 and anchoring D-GW 3142 may communicate via interface S2c* 3130. UE 3112 may include IPv6 3100, tunneling layer 3102, IPsec 3014, IP 3106, L2 3108, and L1 3110. Serving D-GW 3122 may include IPsec 3114, IP 3116, L2 3118, L1 3120, IP 3124, L2 3126, and L1 3128. Anchoring D-GW 3142 may include IPv6 3132, tunneling layer 3134, IP 3136, L2 3138, and L1 3140.

Message sequence charts (MSCs) may be provided. Signaling procedures for various client and network-based embodiments are provided herein. For example, signaling procedures may be provided for initial attach, handover, and PDN disconnection.

Initial attached procedures may be provided, which may be used in accordance with various embodiments. For easy of explanation, a MSC may be shown may cover both GTP/PMIPv6 and DSMIPv6 cases, and may be used for network and/or client-based embodiments.

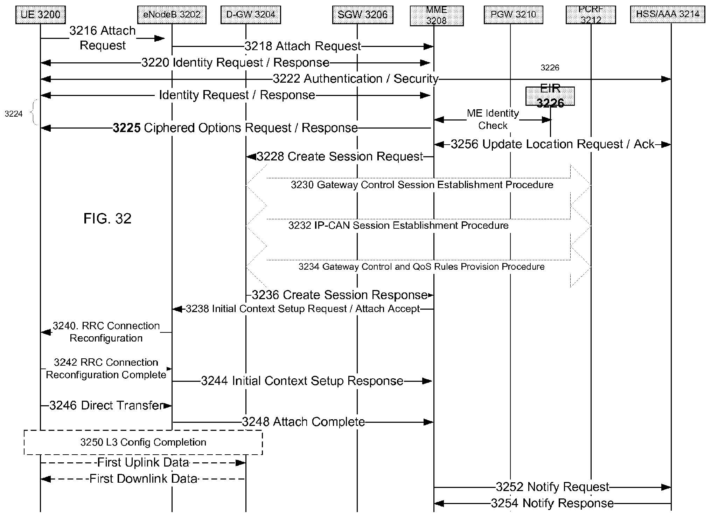

FIG. 32 depicts an example message sequence chart (MSC) that may be used for initial E-UTRAN attach in a non-roaming case. The MSC in FIG. 32 may be based on an Initial E-UTRAN Attach Procedure with PMIPv6-based S5 or S8. The MSC in FIG. 32 may be based on E-UTRAN Initial Attach. The procedure depicted in FIG. 32 may apply, for example, to the example non-roaming network-based architecture shown in FIG. 4, where a UE may attach to an LTE network. Interaction between the gateways and the PCRF in the procedures may occur if dynamic policy provisioning may be deployed; otherwise policy may statically be configured in the gateway.

Referring again to FIG. 32, at 3216, UE 3200 may initiate an Attach procedure by transmitting an Attach Request message to eNodeB 3202. The PDN type may indicate the requested IP version (IPv6). Request Type may indicate "Initial" attach. If APN may not be provided, a default APN may be retrieved from HSS.

At 3218, eNodeB 322 may select an MME, such as MME 3208, and may forward the Attach Request message to the MME using, for example, a S1-MME control message.

At 3220, MME 3208 may send an Identity Request to UE 3200 to request the IMSI. UE 3200 may respond with Identity Response (IMSI).

At 3222, authentication and NAS security setup may be performed to, for example, activate integrity protection and NAS ciphering. At 3224, ME Identity may be retrieved from UE 3200. EIR 3226 may respond with ME Identity Check Ack (Result). Dependent upon the Result, MME 3208 may decide whether to continue with this Attach procedure or to reject UE 3200.

At 3225, UE 3200 may have set the Ciphered Options Transfer Flag in the Attach Request message, the Ciphered Options, i.e. PCO or APN or both, may be retrieved from UE 3200. To handle situations where UE 3200 may have subscriptions to multiple PDNs, if the Protocol Configuration Options includes user credentials (e.g. user name/password within PAP or CHAP parameters) then UE 3200 may also send the APN to MME 3208.

At 3256, MME 3208 may send an Update Location Request message to HSS 3214. HSS 3214 may acknowledge the Update Location message by sending an Update Location Ack message to MME 3208. The Subscription Data may include one or more PDN subscription contexts. If requested checks may be successful then MME 3208 may constructs a context for UE 3200. If the APN provided by UE 3200 may not be allowed by subscription, or the Update Location may be rejected by HSS 3214, MME 3208 may reject the Attach Request from UE 3200 with an appropriate cause.

At 3228, MME 3208 may decide if this PDN connection request may be handled following a DMM mode of operation (so it may be anchored at the D-GW) or in "Rel-10/11 mode" (e.g., via the HPLMN, previous selection of a SGW). This decision may be based on requested APN (if any) by UE 3200, subscription information, policies, or the like. Local anchoring for this request may be in this flow. For example, for those PDN connections that may be handled via a PGW on the HPLMN, no specific D-GW functionality may be used, so it may be transparent to the UE and the rest of the network entities. IPv6 type of access may also be used.

MME 3208 may then select a D-GW, such as D-GW 3204, and may allocate an EPS Bearer Identity for the Default Bearer associated with UE 3200. Then it may send a Create Session Request message to the selected D-GW. In some embodiments, the Create Session Request message may be replaced (for the case of the network-based (PMIPv6) embodiment) by a Proxy Binding Update which may request modifications to the MME.

At 3230, D-GW 3204 may assign an IPv6 prefix to UE 3200 from its pool of locally available anchored prefixes. D-GW 3230 may create a new entry in its EPS Bearer table. D-GW 3230 may initiate the Gateway Control Session Establishment Procedure with the PCRF via interface Gx*. D-GW 3230 may provide the information to PCRF 3212 to associate it with the IP-CAN session to be established in 3232, and may also convey subscription related parameters to the PCRF.

At 3232, D-GW 3204 may initiate the IP-CAN Session Establishment Procedure with PCRF 3212. D-GW 3204 may provide information to PCRF 3212 that may be used to identify the session and associate Gateway Control Sessions established. PCRF 3212 may create IP-CAN session related information and may respond to D-GW 3204 with PCC rules and event triggers.

At 3234, PCRF 3212 may initiate the Gateway Control and QoS Rules Provision Procedure.

At 3236, D-GW 3204 may return a Create Session Response message to MME 3208, which may include the PDN Address (IPv6 prefix + IPv6 interface identifier) that may be assigned by D-GW 3204 to UE 3200, and the address of D-GW 3204. At 3238, MME 3208 may sense an Attach Accept message to eNodeB 3202.

At 3240, eNodeB 3202 may send the RRC Connection Reconfiguration message that may include the EPS Radio Bearer Identity to UE 3200, and the Attach Accept message may be sent along to UE 3200. The APN may be provided to UE 3200 to notify it of the APN for which the activated default bearer may be associated. This message may include the IPv6 interface identifier assigned by D-GW 3240. UE 3200 may wait for the Router Advertisement from the network with the IPv6 prefix information, which may occur at 3250, or it may send a Router Solicitation.

At 3242, UE 3200 may send the RRC Connection Reconfiguration Complete message to eNodeB 3202. At 3244, eNodeB 3202 may send the Initial Context Response message to MME 3208. At 3246, UE 3200 may send a Direct Transfer message to eNodeB 3202, which may include the Attach Complete message. At 3248, eNodeB 3202 may forwards the Attach Complete message to MME 3208 in an Uplink NAS Transport message.

At 3250, the L3 configuration procedure may be completed. IP connectivity between UE 3200 and D-GW 3204 may be set for uplink and downlink directions. The IP address information may be provided to UE 3200 (e.g., via IPv6 Router Advertisement messages). When the Attach Accept message may be received and UE 3200 may have obtained a PDN Address, UE 3200 may send uplink packets towards eNodeB 3202 which may then be tunneled to D-GW 3204. D-GW 3204 may send downlink packets to UE 3200.

At 3252, such that MME 3208 may send a Notify Request that may include the APN, the IPv6 prefix that may be assigned to such a UE 3200, and D-GW identity to HSS 3214. The message may include information that may identify the PLMN in which the D-GW may be located. In some embodiments the IPv6 prefix information may be requested for a network-based (PMIPv6) embodiment. This may be used to keep the HSS updated on what addresses may be used by the UE and what D-GWs may be anchoring them. This may be done to, for example, provide address continuity in case the UE may move.

At 3254, HSS 3214 may store the APN, IPv6 prefix that may be assigned, and D-GW identity. HSS 3214 may send a Notify Response to MME 3208. In some embodiments, the IPv6 prefix information may be requested.

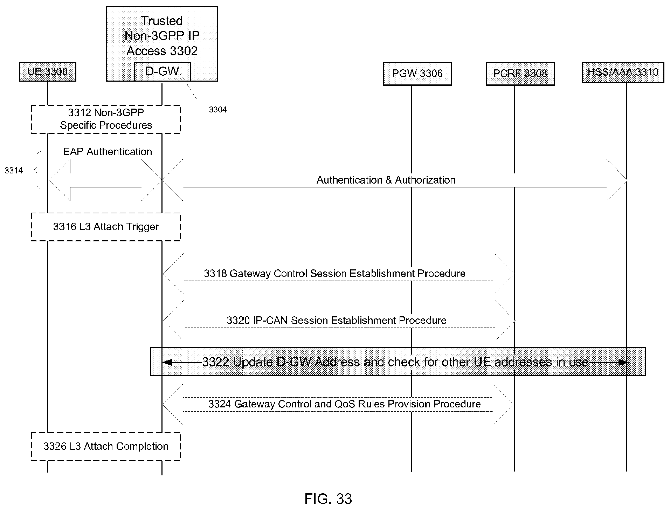

FIG. 33 depicts an example MSC that may be used for initial attach procedure in a non-roaming scenario with trusted Non-3GPP IP Access. The MSC shown in FIG. 33 may be based on an Initial Attach Procedure with PMIPv6 on S2a and Anchoring in PDN GW. The procedure depicted in FIG. 33 may apply, for example, to the example non-roaming network-based architecture shown in FIG. 4, where a UE may attach to a Trusted Non-3GPP IP Access. Interaction between the gateways and the PCRF in the procedures may occur if dynamic policy provisioning may be deployed; otherwise policy may statically be configured in the gateway.

At 3312, initial Non-3GPP L2 procedures may be performed. At 3314, an EAP authentication procedure may be initiated and may be performed, which may involve UE 3300, Trusted Non-3GPP IP Access 3302, and 3GPP AAA Server 3310. The list of authorized APNs along with additional PDN GW selection information may be returned to D-GW 3304. 3GPP AAA Server 3310 may return to D-GW 3304 the MN NAI that may be used to identify UE 3300 in Gateway Control Session Establishment messages, which may occur at 3318 and 3324. If supported by the Non-3GPP access network, the Attach Type may be indicated to D-GW 3304 as "Initial" attach. For those services that may be accessed locally or via the HPLMN, it may be made transparent to UE 3300, and it may be D-GW 3304 who may decide at 3316 where to anchor this new session. In this case, HSS/AAA 3310 may be provisioned with that information.

At 3316, after successful authentication and authorization, the non-3GPP access specific L3 attach procedure may be triggered. UE 3300 may send a requested APN to D-GW 3304. This UE 3300 may send a requested APN, D-GW 3304 may verify that it may be allowed by subscription. If UE 3300 may not send a requested APN, D-GW 3304 may use the default APN provided by HSS 3310. D-GW 3304 may decide if this PDN connection request may be handled locally (DMM mode of operation) or in Rel-10 mode (e.g., via the HPLMN, previous selection of the right PGW). As shown in FIG. 33, local anchoring may be used for this request in this flow and an IPv6 type of access may be used. For those PDN connections that may be handled via a PGW on the HPLMN, no specific D-GW functionality may be used, so it may be transparent to UE 3300 and the rest of the network entities in the rest of procedures. D-GW 3304 may assign an IPv6 prefix to UE 3300 from its pool of locally available anchored prefixes. If supported by the non-3GPP access, UE 3300 may send Protocol Configuration Options. The Protocol Configuration Options that may be provided by UE 3300 may include the user credentials for PDN access authorization.

At 3318, D-GW 3304 may initiate the Gateway Control Session Establishment Procedure with PCRF 3308. D-GW 3304 may provide the information to PCRF 3308 to associate it with the IP-CAN session to be established at 3320, and may convey subscription related parameters to PCRF 3308.

At 3320, D-GW 3304 may initiate the IP-CAN Session Establishment Procedure with PCRF 3308. D-GW 3304 may provide information to PCRF 3308 that may be used to identify the session and associate Gateway Control Sessions established at 3318. PCRF 3308 may create IP-CAN session related information and may respond to D-GW 3304 with PCC rules and event triggers.

For network-based (PMIPv6) embodiments, D-GW 3304 may inform 3GPP AAA Server 3310 of its PDN GW (D-GW) identity and the APN that may correspond to the UE's PDN connection at 3322. The message may include information that may identify the PLMN in which D-GW 3304 may be located. The information may include the IPv6 prefix that may be assigned to UE 3300. The information may include the IPv6 address, for example, if the identifier may not be enough for another D-GW to derive the IPv6 address of D-GW 3304.

At 3324, PCRF 3308 may update the QoS rules in trusted non-3GPP access 3302 by initiating the GW Control Session Modification Procedure. L3 attach procedure may be completed via non-3GPP access specific trigger. IP connectivity between UE 3300 and D-GW 3304 may be set for uplink and downlink directions. The IP address information may be provided to UE 3300, for example, IPv6 Router Advertisement messages. D-GW may indicate the connected PDN identity (APN) to the UE.

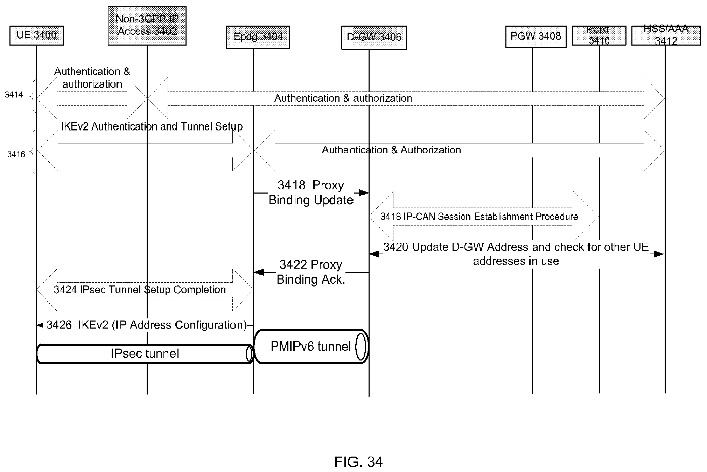

FIG. 34 depicts an example MSC that may be used for initial attach to untrusted Non-3GPP with PMIPv6 in a non-roaming case. The MSC depicted in FIG. 34 may be based on, for example, an Initial Attach Procedure with PMIPv6 on S2b. The MSC may apply, for example, to a non-roaming embodiment, such as shown in FIG. 3, when the UE powers-on in an untrusted non-3GPP access network. Interaction between the gateway and the PCRF in the procedure may occur if dynamic policy provisioning may be deployed; otherwise, policy may statically be configured in the gateway. Before the UE initiates the setup of an IPsec tunnel with the ePDG, it may configure an IP address from an untrusted non-3GPP IP access network. This address may be used for sending IKEv2 messages and as the source address on the outer header of the IPsec tunnel. The UE may be authenticated and authorized to access the Untrusted Non-3GPP Access network with an access network procedure.

At 3414, and access authentication procedure between UE 3400 and the 3GPP EPC may be performed. As part of the AAA exchange for network access authentication, the AAA/HSS 3412 may return to the Non-3GPP IP Access a set of home/visited operator's policies to be enforced on the usage of local IP address, or IPv6 prefix that may be allocated by the access system upon successful authentication. Subscription data may be provided to the Non-3GPP IP Access by the HSS/AAA 3412.

At 3416, the IKEv2 tunnel establishment procedure may be started by UE 3400. UE 3400 may indicate in a notification part of the IKEv2 authentication request that may support MOBIKE. The ePDG IP address to which UE 3400 may form an IPsec tunnel may be discovered via DNS. UE 3400 may request connectivity to a PDN providing an APN, which may be conveyed with IKEv2. The PDN GW information may be returned as part of the reply from the 3GPP AAA Server 3412 to ePDG 3404. If UE 3400 may have provided an APN, ePDG 3404 may verify that it may be allowed by subscription. If UE 3400 has not provided an APN, ePDG 3404 may use a default APN. PDN GW selection may take place. If a D-GW may be selected, then this PDN connection may be handled locally (DMM mode of operation). If a regular PGW may be selected, then the traffic may be anchored and handled via the HPLMN. SIPTO mode may also be possible, for example, by selecting a local PGW. A local anchoring for this request may be shown in this flow. PDN connections that may be handled via a PGW, such as PGW 3408, on the HPLMN, no specific D-GW functionality may be used, so it may be transparent to UE 3400 and the rest of the network entities in the rest of procedures. IPv6 type of access may also be used.

At 3418, ePDG 3404 may send a Proxy Binding Update message to D-GW 3406. D-GW 3406 may possess the proxy binding update and may create a binding cache entry for UE 3400. D-GW 3406 may allocate an IP address for UE 3400 from its pool of locally available anchored prefixes. D-GW 3406 may initiate the IP CAN Session Establishment Procedure with PCRF 3410.

3420 D-GW 3406 may inform 3GPP AAA Server 3412 of the D-GW identity and the assigned IPv6 prefix. 3GPP AAA Server 3412 may inform the HSS 3412 of the D-GW identity, assigned IPv6 prefix, and APN associated with the UE's PDN Connection.

At 3422, D-GW 3406 may sentence a Proxy Binding Ack message to ePDG 3404. At 3424, wherein Proxy Binding Update may be successful, ePDG 3404 may be authenticated by UE 3400 and may indicate to UE 3400 that the authentication and authorization with the external AAA server 3412 may be successful.

At 3426, ePDG 3404 may send an IKEv2 message with the IP address in IKEv2 Configuration payloads. IP connectivity from UE 3400 to D-GW 3406 may be setup. Packets in the uplink direction may be tunneled to ePDG 3404 by UE 3400 using the IPsec tunnel. ePDG 3404 may tunnel the packet to D-GW 3406. From D-GW 3406, IP-based routing may take place. In the downlink direction, the packet for UE 3400 (HoA) may arrive at D-GW 3406. D-GW 3406 may tunnel the packet based on the binding cache entry to ePDG 3404. ePDG 3404 may tunnel the packet to UE 3400 via the IPsec tunnel.

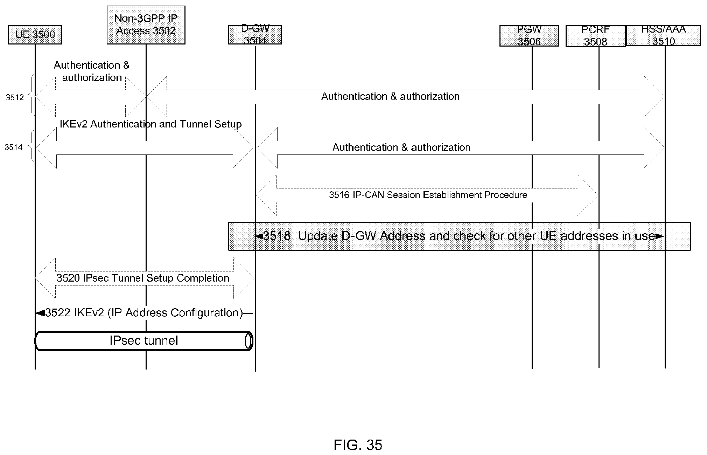

FIG. 35 depicts an example MSC that may be used for initial attach to untrusted Non-3GPP in a non-roaming case. The MSC depicted in FIG. 35 may be based on, for example, an Initial Attach Procedure with PMIPv6 on S2b. The MSC depicted in FIG. 35, may be based on, for example, Initial Attach with GTP on S2b. The MSC may apply, for example, to a Non-Roaming embodiment, such as shown in FIG. 4, when the UE powers-on in an untrusted non-3GPP access network. Interaction between a gateway and a PCRF, which may occur at 3516, may occur if dynamic policy provisioning may be deployed; otherwise, policy may be statically configured in the gateway. Before the UE may initiate the setup of an IPsec tunnel with the D-GW, it may configure an IP address from an untrusted non-3GPP IP access network. This address may be used for sending IKEv2 messages and may be used as the source address on the outer header of the IPsec tunnel. The UE may be authenticated and authorized to access the untrusted Non-3GPP Access network with an access network specific procedure.

At 3512, the Access authentication procedure between UE 3500 and the 3GPP EPC may be performed. As part of the AAA exchange for network access authentication, AAA/HSS 3510 may return to the Non-3GPP IP Access 3502 a set of home/visited operator's policies that may be enforced on the usage of local IP address, or IPv6 prefix that may be allocated by the access system upon successful authentication. Subscription data may be provided to the Non-3GPP IP Access 3502 by HSS/AAA 3510.

At 3514, and IKEv2 tunnel establishment procedure may be started by UE 3500. UE 3500 may indicate in a notification part of the IKEv2 authentication request that it may support MOBIKE. The D-GW IP address to which UE 3500 may request to form IPsec tunnel may be discovered via DNS. UE 3500 may request connectivity to a PDN providing an APN, which may be conveyed with IKEv2. The PDN GW information may be returned as part of the reply from 3GPP AAA Server 3510 to the D-GW 3504. If UE 3500 has provided an APN, D-GW 3504 may verify that it may be allowed by subscription. If UE 3500 has not provided an APN, D-GW 3504 may use the default APN. That PDN GW selection may occur. In case the PDN connection may wish to be handled locally (DMM mode of operation), D-GW 3504 may become the mobility anchor. If a regular PGW may be selected, then the traffic may be anchored and handled via the HPLMN. SIPTO mode may also be possible selecting a local PGW. Local anchoring may occur. For those PDN connections that may be handled via a PGW on the HPLMN or via a local PGW, no specific D-GW functionality may be used; D-GW 3504 may behave as an ePDG, and may be transparent to UE 3500 and the rest of the network entities in the rest of procedures. IPv6 type of access may be used.

At 3516, D-GW 3504 may allocate an IP address for UE 3500 from its pool of locally available anchored prefixes. D-GW 3504 may initiate the IP CAN Session Establishment Procedure with PCRF 3508.

At 3518, D-GW 3504 may inform 3GPP AAA Server 3501 of the D-GW identity, and the assigned IPv6 prefix. This may be done, for example, for network-based GTP and/or PMIPv6. 3GPP AAA Server 3510 may inform the HSS of the D-GW identity, assigned IPv6 prefix, and APN that may be associated with the UE's PDN Connection.

At 3520, D-GW 3504 may send an IKEv2 message that may include an IP address in IKEv2 Configuration payloads. At 3522, IP connectivity from UE 3500 to the D-GW 3504 may be setup. Packets in the uplink direction may be tunneled to D-GW 3504 by UE 3500 using the IPsec tunnel. In the downlink direction, a packet for UE 3500 (HoA) may arrive at D-GW 3504, which may tunnel the packet to UE 3504 via an IPsec tunnel.

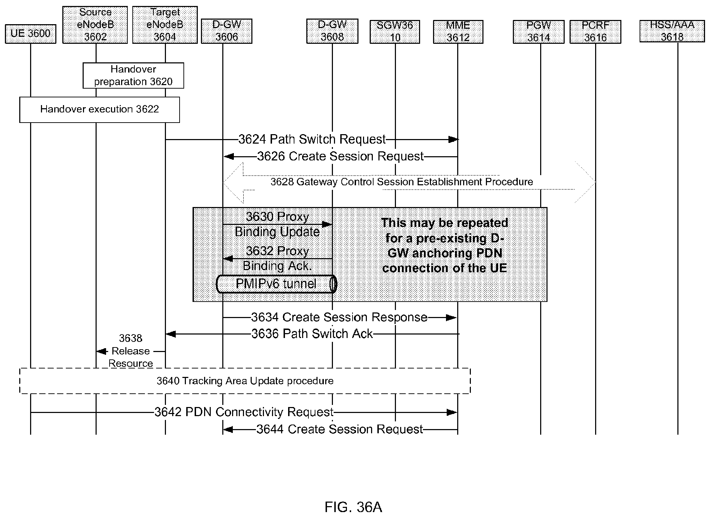

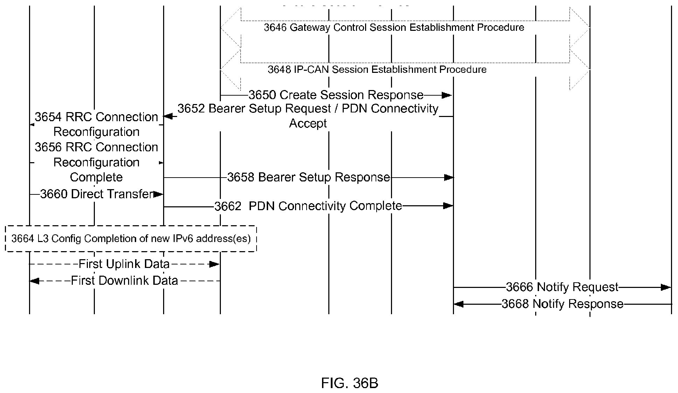

Network-based handover procedures may be provided, which may use PMIPv6. FIGS. 36A-B depicts an example MSC that may be used for intra-LTE TAU and inter-eNodeB handover with D-GW relocation with PMIPv6 in a non-roaming architecture. The MSC may be based on Intra-LTE TAU and/or Inter-eNodeB Handover with Serving GW Relocation. Interaction between the gateways and the PCRF in the procedures in FIG. 36 may occur if dynamic policy provisioning may be deployed; otherwise, policy may be statically configured with the gateway.

At 3620, source eNodeB 3602 and target eNodeB 2604 may perform handover preparation. At 3622, UE 3600, source eNodeB 3602, and target eNodeB 3604 may perform handover execution.

At 3624, target eNodeB 3604 may send a Path Switch Request message to MME 3612 to inform MME 3612 that UE 3600 may have changed cell. In this example, MME 3612 may determine that a D-GW, such as D-GW 3608, may be relocated and another D-GW, such as D-GW 3606, may be selected. D-GW selection may be based, for example, on the one used to select an S-GW, such as SGW 3610.

At 3626, MME 3612 may send a Create Session Request message per PDN connection to D-GW 3606 for each PDN connection where the default bearer may have been accepted by target eNodeB 3604. The information about the established PDN connections that the UE may have and the D-GWs may have anchored them may be indicated in the bearer context. The UE may also have PDN connections that may not be anchored at a D-GW, but may be anchored at a PGW. In some embodiments, this Create Session Request may be replaced by a Proxy Binding Update.

At 3628, D-GW 3606 may initiate the Gateway Control Session Establishment Procedure with PCRF 3616. At 3630, D-GW 3606 may send a PMIPv6 Proxy Binding Update message to D-GW 3608. This may be done, for example, to re-establish the user plane as a result of the D-GW relocation.

At 3632, D-GW 3608 may acknowledge the Binding Update by sending a Proxy Binding Ack message to Serving GW 3610. A PMIP tunnel may be established between the D-GW 3608 and the D-GW 3606. 3608 and 3632 may be repeated per each PDN connection established by the UE anchored a pre-existing D-GW.

At 3634, D-GW 3606 may return a Create Session Response message to MME 3612.

At 3636, MME 3612 may confirm the Path Switch Request message with the Path Switch Request Ack message.

At 3638, target eNodeB 3604 may inform source eNodeB 3602 that the handover to source eNodeB may be successful by sending a Release Resource message. This may trigger the release of resources.

At 3640, UE 3600 may initiate a Tracking Area Update procedure when a condition that may be a trigger for a tracking area update may occur. 3626, 3628, 3630, 3632, 3634, 3636, 3638, and 3640, may ensure that the PDN connections UE 3600 may have may have been successfully moved to D-GW 3606. With the DMM approach, UE 3600 may obtain a new IPv6 address on each attachment and may establish a new PDN connection. Next steps are devoted to that. This part is based on Section 5.10.2 (UE requested PDN connectivity) from TS 23.401 V10.4.0 (2011-06).

At 3642, UE 3600 may initiate the UE Requested PDN procedure by the transmission of a PDN Connectivity Request message. This may be based on a UE requested PDN connectivity. The PDN Connectivity Request message may include the PDN type, an APN, and/or a requested IP version, such as IPv6. MME 3612 may verify that the APN provided by UE 3600 may be allowed by subscription. If UE 3600 did not provide an APN, MME 3612 may use the APN from the default PDN subscription context, and may use this APN for the remainder of this procedure. Protocol Configuration Options (PCO) may be used to transfer parameters between the UE and the D-GW, and may be sent transparently through the MME. The Request Type that may be included in the message may indicate "initial request" since the UE may request additional PDN connectivity over the 3GPP access network.

At 3644, MME 3612 may allocate a Bearer Identity, and may send a Create Session Request message to the D-GW 3606. At 3646, D-GW 3606 may allocate an IP address for UE 3600 from its pool of locally available anchored prefixes. D-GW 3606 may initiate the Gateway Control Session Termination Procedure with PCRF 3616.

At 3648, D-GW 3606 may create a new entry in its EPS Bearer table and may initiate the IP-CAN Session Establishment Procedure with PCRF 3616. D-GW 3606 may provide information to PCRF 3616 that may be used to identify the session. PCRF 3616 may create IP-CAN session related information and may respond to the D-GW 3606 with PCC rules and event triggers.

At 3650, D-GW 3606 may return a Create Session Response message to MME 3612, which may include the PDN Address (IPv6 prefix + IPv6 interface identifier) that may be assigned by D-GW 3606 to UE 3600, and the address of D-GW 3606.

At 3652, MME 3612 may send PDN Connectivity Accept message to UE 3600. This message may be included in an S1_MME control message Bearer Setup Request to the eNodeB, such as target eNodeB 3604.

At 3654, target eNodeB 3604 may send a RRC Connection Reconfiguration to UE 3600 that may include the PDN Connectivity Accept message. At 3656, UE 3600 may send the RRC Connection Reconfiguration Complete to target eNodeB 3604. At 3658, target eNodeB 3604 may send an S1-AP Bearer Setup Response to MME 3612.

At 3660, the UE NAS layer of UE 3600 may build a PDN Connectivity Complete message that may include EPS Bearer Identity. UE 3600 may send a Direct Transfer (PDN Connectivity Complete) message to target eNodeB 3604. At 3662, target eNodeB 3604 may send an Uplink NAS Transport (PDN Connectivity Complete) message to MME 3612.

At 3664, the L3 configuration procedure may be completed. IP connectivity between UE 3600 and D-GW 3606 may be set for uplink and downlink directions. The new IP address information may be provided to UE 3600, for example, via IPv6 Router Advertisement messages. After the Attach Accept message and when UE 3600 has obtained a PDN Address, UE 3600 may then send uplink packets towards the eNodeB which may then be tunneled to D-GW 3606. This may be done, for example, using the new IP address that may be anchored at D-GW 3606 as a source address. D-GW 3606 may send downlink packets to UE 3600 using, for example, the IPv6 address anchored at the D-GW 3606 or the addresses anchored at other D-GWs, such as D-GW 3608.

At 3666, MME 3612 may send a Notify Request that may include the APN, the IPv6 prefix that may be assigned to UE 3600, and D-GW identity to the HSS. The message may include information that may identify the PLMN in which the D-GW may be located. This may be requested to keep the HSS updated on what addresses may be used by UE 3600 and what D-GWs may be anchoring UE 3600. This may be done, for example, to provide address continuity in case UE 3600 moves. This may also be done, for example, in case the UE moves.

At 3668, the HSS may store the APN, the IPv6 prefix that may be assigned, D-GW identity. The HSS may also send a Notify Response to MME 3612.

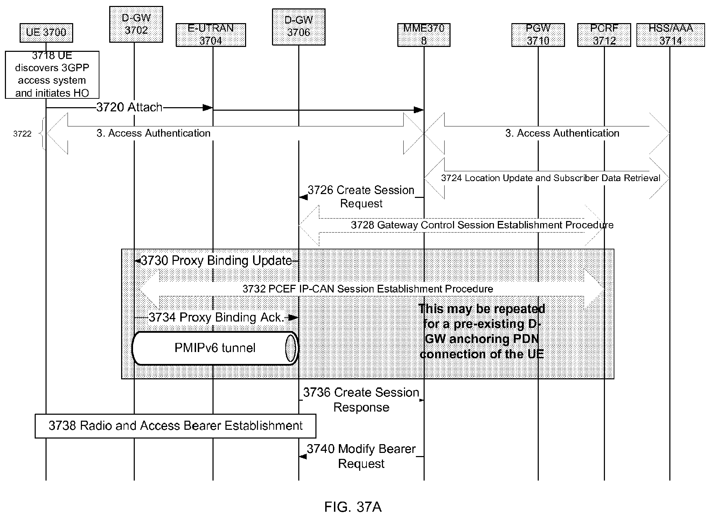

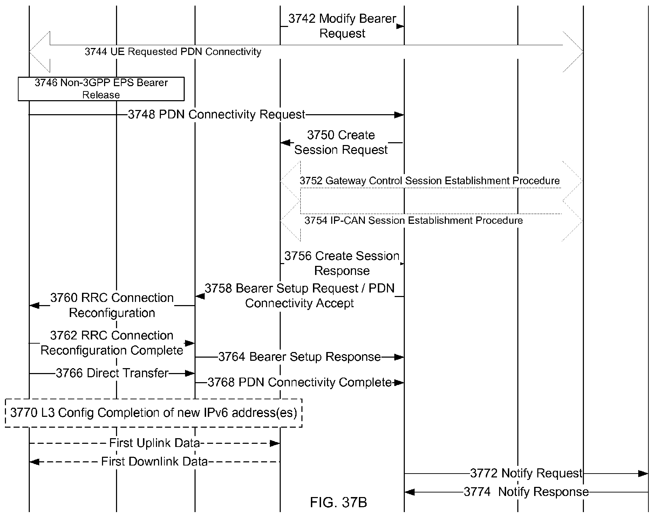

FIGS. 37A-B depicts an example MSC that may be used for handover from trusted or untrusted non-3GPP IP access to E-UTRAN with PMIPv6 in a non-roaming architecture. The MSC may be based on handover from trusted or untrusted non-3GPP IP access with PMIPv6 on S2a/S2b to 3GPP access using PMIP-based S5/S8. There may not be a MME change. The DMM-based design may not impact MME selection procedures.

Interaction between the gateways and the PCRF in the procedures in FIGS. 37A-B may occur if dynamic policy provisioning may be deployed; otherwise policy may be statically configured with the gateway.

At 3718, UE 3700 may discover the E-UTRAN access and may determine to transfer its current sessions (i.e. handover) from the currently used non-3GPP access system to E-UTRAN 3704. Network discovery and selection mechanisms may be used to aid UE 3700 to discover the 3GPP Access system.

At 3720, UE 3700 may send an Attach Request to MME 3708 with Request Type indicating "Handover" Attach. The message from UE 3700 may be routed by E-UTRAN 3704 to MME 3708. UE 3700 may include an APN that may correspond to the PDN connections in the source non-3GPP access.

At 3722, MME 3708 may contact HSS 3714 and may authenticate UE 3700. At 3724, when an authentication may be successful, MME 3708 may perform location update procedure and subscriber data retrieval from HSS 3714. MME 3708 may obtain information about the IPv6 prefixes and D-GWs that may be anchoring them, which may be used by UE 3700. This info may be stored in the PDN subscription context. MME 3708 receives information on the PDNs UE 3700 may be connected to over the non-3GPP access in the Subscriber Data obtained from HSS 3714.

At 3726, MME 3708 selects an APN and a D-GW. MME 3708 may send a Create Session Request message to the selected D-GW, such as 3706. When the Request Type may be "Handover" and Handover Indication information may be included.

At 3728, D-GW 3706 may initiate a Gateway Control Session Establishment Procedure with PCRF 3712. This may be done, for example, to obtain the rules requested for the D-GW to perform the bearer binding for the active sessions UE 3700 may establish as a result of the handover procedure.

At 3730, D-GW 3700 may send a PMIPv6 Proxy Binding Update message to D-GW the summer two. This may be done, for example, to re-establish the user plane of the prefixes anchored at the D-GW 3702.

At 3732, D-GW 3706 may execute a PCEF-Initiated IP-CAN Session Modification Procedure with PCRF 3712. This may be done, for example, two obtain the rules requested for D-GW 3706 to function as PCEF for the active IP sessions UE 3700 may have established with new IP-CAN type.

At 3734, D-GW 3702 may acknowledge the Binding Update by sending a Proxy Binding Ack message to the Serving GW. 3730, 3732, 3734, may be repeated for a PDN connection that may be established by UE 3700 anchored at a D-GW.

At 3736, D-GW 3706 may return a Create Session Response message to MME 3708. This message may include the IP address of UE 3700. This message may serve as an indication to MME 3708 that the S5 bearer setup and update may have been successful. The PMIPv6 tunnel(s) over S5 between the D-GW 3706 and the D-GW 3702 may be established.

At 3738, Radio and Access bearers may be established in the 3GPP access. At 3740, MME 3708 may send a Modify Bearer Request message to the D-GW 3706. At 3742, D-GW 3706 may acknowledge by sending Modify Bearer Response (EPS Bearer Identity) message to MME 3708. UE 3700 nay send and receive data via the E-UTRAN system.

At 3744, for connectivity to multiple PDNs, UE 3700 may establish connectivity to a PDN that may be transferred from non-3GPP access. This may be done, for example, by executing the UE requested PDN connectivity procedure. This may be done besides a PDN connection that may have been established.

At 3746, D-GW 3802 may initiate resource allocation deactivation procedure in the trusted/untrusted non-3GPP IP access. 3726, 3728, 3730, 3732, 3734, and 3736 may be performed to ensure that the PDN connections UE 3700 may have may be moved to D-GW 3804. With the DMM approach, UE 3700 may obtain an IPv6 address on each attachment. A new PDN connection may be established. This may be based on UE requested PDN connectivity.

At 3748, UE 3700 may initiate the UE Requested PDN procedure by the transmission of a PDN Connectivity Request message. This message may include the PDN type, and may indicate the requested IP version. MME 3708 may verify that the APN provided by UE 3700 may be allowed by subscription. If UE 3700 did not provide an APN, MME 3708 may use the APN from the default PDN subscription context and may use this APN for the rest of the procedure. Protocol Configuration Options (PCO) may be used to transfer parameters between UE 3700 and the D-GW, and may be sent transparently through MME 3708. The Request Type included in the message may indicate "initial" attach since UE 3700 may request additional PDN connectivity over the 3GPP access network.

At 3750, MME 3708 may allocate a Bearer Identity, and may send a Create Session Request message to the D-GW 3706. At 3752, D-GW 3706 may allocate an IP address for UE 3700 from its pool of locally available anchored prefixes. D-GW 3706 may initiate the Gateway Control Session Termination Procedure with PCRF 3712.

At 3754, D-GW 3706 may create an entry in its EPS Bearer table and may initiate the IP-CAN Session Establishment Procedure with PCRF 3712. D-GW 3706 may provide information to PCRF 3712 that may be used to identify the session. PCRF 3712 may create IP-CAN session related information and may respond to D-GW 3706 with PCC rules and event triggers.

At 3756, D-GW 3706 may return a Create Session Response message to MME 3708, which may include the PDN Address (IPv6 prefix + IPv6 interface identifier) that may be assigned by the D-GW to UE 3700, and the address of the D-GW.

At 3758, MME 3708 may send a PDN Connectivity Accept message to UE 2700. This message may be included in an S1_MME control message Bearer Setup Request to the eNodeB. At 3760, the eNodeB may send a RRC Connection Reconfiguration to UE 3700 that may include the PDN Connectivity Accept message. At 3762, UE 3700 may send the RRC Connection Reconfiguration Complete to the eNodeB. At 3764, eNodeB may send an S1-AP Bearer Setup Response to MME 3708.

At 3766, the UE NAS layer of UE 3700 may build a PDN Connectivity Complete message that may include EPS Bearer Identity. UE 3700 may send a Direct Transfer (PDN Connectivity Complete) message to the eNodeB. At 3768, the eNodeB may send an Uplink NAS Transport (PDN Connectivity Complete) message to MME 3708. At 3770, L3 configuration procedure may be completed. IP connectivity between UE 3700 and D-GW 3706 may be set for uplink and downlink directions. The IP address information may be provided to UE 3700, for example, via IPv6 Router Advertisement messages. After the Attach Accept message and when UE 3700 may have obtained a PDN Address, UE 3700 may then send uplink packets towards the eNodeB which may be tunneled to D-GW 3706. This may occur, for example, using the IP address that may be anchored at D-GW 3706 as a source address. D-GW 3706 may send downlink packets to UE 3700. Forwarding may be enabled for the IPv6 address that may be anchored at D-GW 3706, and/or for the addresses that may be anchored at D-GW 3702.

At 3772, MME 3708 may send a Notify Request that may include the APN, the IPv6 prefix that may be assigned to UE 3700, and D-GW identity to HSS 3714. The message may include information that may identify the PLMN in which the D-GW may be located. This may be requested to keep HSS 3714 updated on what may be the addresses that may be used by UE 3700 and what may be the D-GWs that may anchor them. This may be done, for example, to provide address continuity in case the UE moves.

At 3774, HSS 3714 may store the APN, the IPv6 prefix that may be assigned and D-GW identity, and may send a Notify Response to MME 3708.

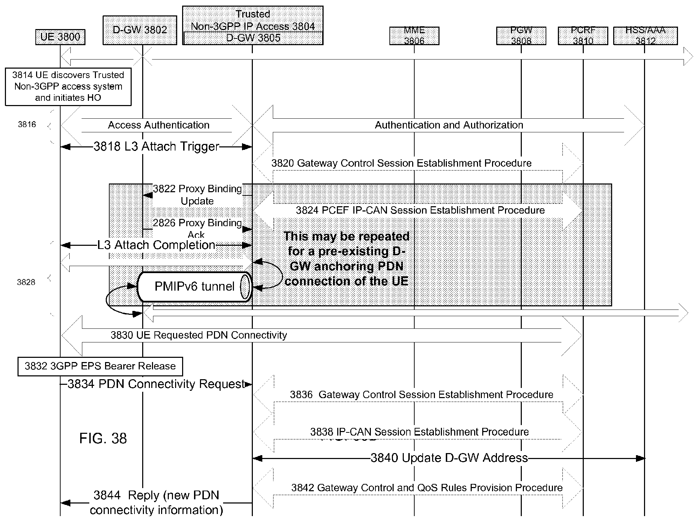

FIG. 38 depicts an example MSC that may be used for handover from 3GPP access to trusted non-3GPP IP access with PMIPv6 in a non-roaming architecture. The MSC may be based on 3GPP Access to Trusted Non-3PP IP Access Handover with PMIPv6 on S2a. Interaction between the gateways and the PCRF in the procedures in FIG. 38 may occur if dynamic policy provisioning may be deployed; otherwise policy may be statically configured with the gateway.

At 3814, UE 3800 may discover trusted non-3GPP IP access system 3804 and may determine to transfer its current sessions (i.e. handover) from the currently used 3GPP Access to the discovered trusted non-3GPP IP access system 3804. Network discovery and selection mechanisms may be used to aid UE 3800 to discover the trusted non-3GPP IP access system 3804.

At 3816, UE 3700 may perform access authentication and authorization in non-3GPP access system 3804. 3GPP AAA server 312 may authenticate and authorize UE 3800 for access in the trusted non-3GPP system 3804. The PDNs UE 3800 may be connected to (IPv6 prefixes and anchoring D-GWs) before handover a may be re obtained from HSS 3812 with the UE subscriber data.

At 3818, when successful authentication and authorization may occur, the L3 attach procedure may be s triggered. If UE 3800 may send a requested APN, D-GW 3804 may verify that it may be allowed by subscription. If UE 3800 does not send a requested APN, D-GW 3804 may use the default APN.

At 3820, D-GW 3805 may initiate a Gateway Control Session Establishment Procedure with PCRF 3810. At 3822, D-GW 3805, which may act as a MAG, may send a Proxy Binding Update message to D-GW 3802 to establish the new registration. At 3824, D-GW 3805 may execute a PCEF-Initiated IP CAN Session Modification Procedure with PCRF 3810. At 3826, D-GW 3802 may respond with a PMIP Binding Acknowledgement message to the D-GW 3805.

At 3828, L3 attach procedure may be completed. The IP address(es) assigned to UE 3800 by the D-GW 3805 may be conveyed to UE 3800. The PMIPv6 tunnel may be set up between the D-GW 3805 and D-GW 3802. UE 3800 may send/receive IP packets. 3822, 3824, 3826, and 3828 may be repeated for a PDN connection that may be established by UE 3800 anchored at a D-GW. At 3830, for connectivity to multiple PDNs, UE 3800 may establish connectivity to the PDNs that may be transferred from 3GPP access besides the PDN connection that may have been established.

At 3832, D-GW 3805 may initiate Initiated Bearer Deactivation procedure. 3822, 3824, 3826, 3828, 3830, and 3832 may be performed, for example, to ensure that the PDN connections UE 3800 may have moved to D-GW 3804. With the DMM approach, UE 3800 may obtain an IPv6 address on and attachment. A PDN connection may be established using, for example, UE initiated Connectivity to Additional PDF with PMIPv6 on S2a as a basis. At 3834, UE 3800 may send a trigger.

At 3836, D-GW 3805 may initiate the Gateway Control Session Establishment Procedure with PCRF 3810. D-GW 3805 may provide the information to PCRF 3810 to associate it with the IP-CAN session that may be established at 3838 and to convey subscription related parameters to PCRF 3810.

At 3838, D-GW 3805 may initiate the IP-CAN Session Establishment Procedure with PCRF 3810. D-GW 3805 may provide information to PCRF 3810 that may be used to identify the session and may be used to associate Gateway Control Sessions that may have been established at 3836. PCRF 3810 may create IP-CAN session related information and may respond to the D-GW 305 with PCC rules and event triggers.

At 3840, D-GW 3805 may inform the 3GPP AAA Server 3812 of its PDN GW (D-GW) identity and the APN that may correspond to the UE's PDN connection. The message may include information that may identify the PLMN in which the D-GW may be located. This information may include the IPv6 prefix that may be assigned to UE 3800. If the identifier is not enough for another D-GW to derive the IPv6 address, the information may include the IPv6 address of the D-GW.

At 3842, PCRF 3810 may update the QoS rules in trusted non-3GPP access 3804 by initiating the GW Control Session Modification Procedure. At 3844, L3 attach procedure may be completed via a non-3GPP access trigger. IP connectivity between UE 3800 and D-GW 3805 may be set for uplink and downlink directions. IP address information may be provided to UE 3800 via, for example, IPv6 Router Advertisement messages.

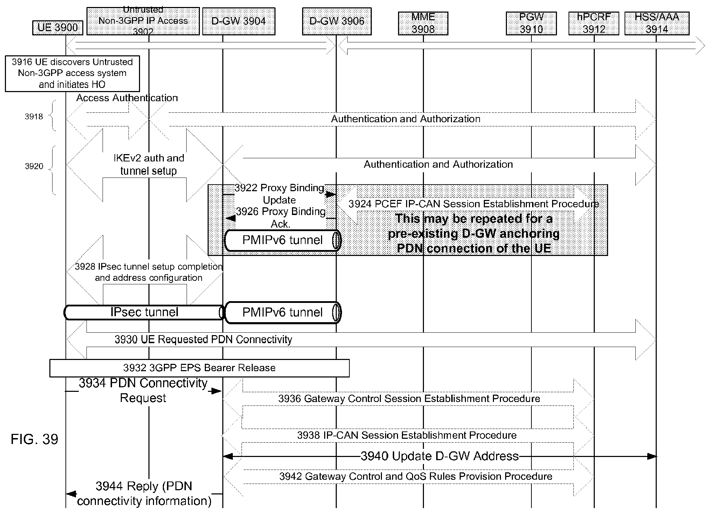

FIG. 39 depicts an example MSC that may be used for handover from 3GPP access to untrusted non-3GPP IP access with PMIPv6 in a non-roaming architecture. The MSC may be based on 3GPP Access to Untrusted Non-3PP IP Access Handover with PMIPv6 on S2b. Interaction between the gateways and the PCRF in the procedures in FIG. 39 may occur if dynamic policy provisioning may be deployed; otherwise policy may be statically configured with the gateway.

At 3916, UE 3900 may initially be attached to the 3GPP Access network. UE 3900 may move and may attach to Untrusted Non-3GPP IP access network 3902.

At 3918, access authentication procedure between UE 3900 and the 3GPP EPC may be performed. At 3920, The IKEv2 tunnel establishment procedure may be started by UE 3900. The D-GW address to which UE 3900 may form can IPsec tunnel with may be discovered, for example, using ePDG Selection or may be the result of the address of a D-GW. After UE 3900 may be authenticated, UE 3900 may be authorized for access to the APN. As part of access authentication, the identity of D-GW 3906 may be sent to D-GW 3904 by 3GPP AAA server 3914.

At 3922, D-GW 3904 may send the Proxy Binding Update message to the D-GW 3906. At 3924, if PCC may be supported, D-GW 3904 may request configuration for enforcing policy, D-GW 3904 may execute a PCEF-Initiated IP CAN Session Modification Procedure with PCRF 3912.

At 3926, D-GW 3906 may process the Proxy Binding Update message from D-GW 3904, and may update (or may create if there was none) the binding cache entry for UE 3900 and may respond with a Proxy Binding Acknowledgement message. In the Proxy Binding Ack, D-GW 3906 may reply with the same IP address and/or prefix that may have been assigned to UE 3900. A PMIPv6 tunnel may exist between D-GW 3906 and D-GW 3904, which may be triggered by the Proxy Binding Update message from D-GW 3906 and may occur before 3924.. Process flow 3922, 3924, and 3926 may be repeated for a PDN connection that may be established by the UE anchored at a D-GW.

At 3928, D-GW 3094 and UE 3900 may continue the IKEv2 exchange and IP address configuration. At the end of the handover procedure there may be a set of bearer for UE 3900 that may include an IPsec tunnel between UE 3900 and D-GW 3904 and may include a PMIPv6 tunnel between D-GW 3904 and D-GW 3906.

At 3930, for connectivity to multiple PDNs, UE 3900 may establish connectivity to PDNs that may be transferred from 3GPP access besides the PDN connection that may have been established. At 3932, D-GW 3904 may initiate an Initiated Bearer Deactivation procedure. At 3934, UE 3900 may send a PDN Connectivity Request trigger. 3920, 3922, 3924, 3926, 3928, 3930, 3932, and 3934 may be performed to ensure that the PDN connections UE 3900 may have moved to D-GW 3904 may have been moved. With the DMM approach, UE 3900 may obtain an IPv6 address on each attachment. A PDN connection may be established, which may be based on UE initiated Connectivity to Additional PDN with PMIPv6 on S2a.

At 3936, D-GW 3904 may initiate the Gateway Control Session Establishment Procedure with PCRF 3912. D-GW 3904 may provide the information to PCRF 3912 to associate it with the IP-CAN session to be established at 3940 and to convey subscription related parameters to PCRF 3912.

At 3938, D-GW 3904 may initiate the IP-CAN Session Establishment Procedure with PCRF 3912. D-GW 3904 may provide information to PCRF 3912 that may be used to identify the session and associate Gateway Control Sessions established at 3938. PCRF 3912 may create IP-CAN session related information and may respond to D-GW 3904 with PCC rules and event triggers.

At 3940, D-GW 3904 may inform 3GPP AAA Server for of its PDN GW (D-GW) identity and the APN that may correspond to the UE's PDN connection. The message may include information that may identify the PLMN in which the D-GW may be located. The message may include the IPv6 prefix that may be assigned to UE 3900. If the identifier is not enough for another D-GW to derive the IPv6 address, the message may include the IPv6 address of the D-GW.

At 3942, PCRF 3912 may update the QoS rules in trusted non-3GPP access 3902 by initiating the GW Control Session Modification Procedure.

At 3944, L3 attach procedure may be completed via a non-3GPP access trigger. IP connectivity between UE 3900 and D-GW 3904 may be set for uplink and downlink directions. IP address information may be provided to UE 3900 using, for example, IPv6 Router Advertisement messages.

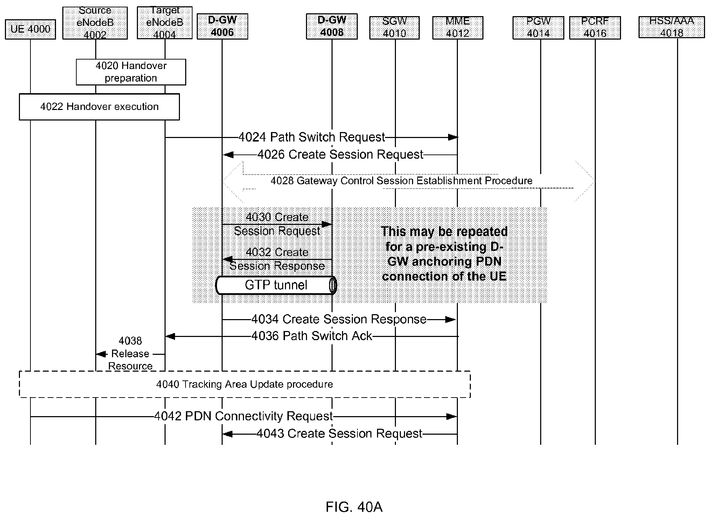

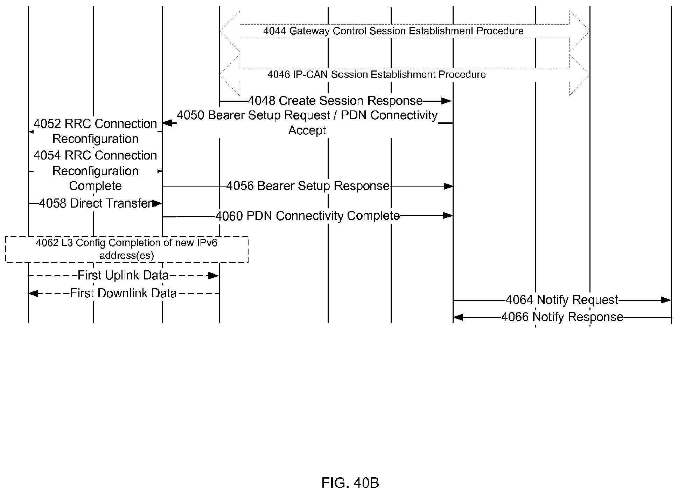

Network-based handover procedures that may use GTP may be provided._FIGS. 40A-B depicts an example MSC and use for intra-LTE TAU and inter-eNodeB handover with D-GW relocation with GTP in a non-roaming architecture. The MSC may be based on Intra-LTE TAU and Inter-eNodeB Handover with Serving GW Relocation Intra E-UTRAN handover. Interaction between gateways and the PCRF in the procedures in FIGS. 40A-B may occur if dynamic policy provisioning may be deployed; otherwise policy may be statically configured with the gateway.

At 4020, source eNodeB 4002 and target eNodeB 4004 may perform handover reparation. At 4022, UE 4000, source eNodeB 4002, target eNodeB 4004, may perform handover execution. At 4024, target eNodeB 4004 may send a Path Switch Request message to MME 4012 to inform that UE 4000 may have changed cell. MME 4012 may determine that the D-GW may be relocated and may select another D-GW.

At 4026, MME 4012 may send a Create Session Request message for a PDN connection to D-GW 4006 for a PDN connection where the default bearer may have been accepted by target eNodeB 4004. The information about the established PDN connections that UE 4000 may have and the D-GWs anchoring them may be indicated in the bearer context. UE 4000 may have PDN connections that may not be anchored at a D-GW, but may be anchored at a PGW.

At 4028, D-GW 4006 may initiate the Gateway Control Session Establishment Procedure with PCRF 4016. At 4030, D-GW 4006 may send a Create Session Request to D-GW 4008 to re-establish the user plane as a result of the D-GW relocation. At 4032, D-GW 4008 may respond with a Create Session Response message to the Serving GW 4010. A GTP tunnel may be established between D-GW 4008 and D-GW 4006. The Create Session Response may include the prefix that may have been assigned to UE 4000 by D-GW 4008. 4030 and 4032 may be repeated for a PDN connection that may have been established by UE 4000 that may have been anchored at D-GW 4008.

At 4034, D-GW 4006 may return a Create Session Response message to MME 4012. At 4036, MME 4012 may confirm the Path Switch Request message with the Path Switch Request Ack message. At 4038, by sending Release Resource target eNodeB 4004 may inform success of the handover to source eNodeB 4002 and may trigger the release of resources. At 4040, UE 4000 may initiate a Tracking Area Update procedure. 4026, 4028, 4030, 4032, 4034, 4036, 4038, and 4040 may be performed to ensure that the PDN connections UE 400 may have may be moved to D-GW 4006. With the DMM approach, UE 400 may obtain an IPv6 address on attachment. A PDN connection may be established. This may be based on UE requested PDN connectivity.

At 4042, UE 4000 may initiate the UE Requested PDN procedure by the transmission of a PDN Connectivity Request message. This message may include the PDN type, APN, and the requested IP version, such as IPv6. MME 4012 may verify that the APN provided by UE 4008 be allowed by subscription. If UE 4000 may not have provided an APN, MME 4012 may use the APN from the default PDN subscription context. Protocol Configuration Options (PCO) may be used to transfer parameters between UE 4000 and the D-GW, and may be sent transparently through MME 4012. The Request Type included in the message may indicate "initial request" since UE 4000 may request PDN connectivity over the 3GPP access network.

At 4043, MME 4012 may allocate a Bearer Identity, and may send a Create Session Request message to D-GW 4006. At 4044, D-GW 4006 may allocate an IP address for UE 4000 from its pool of locally available anchored prefixes. D-GW 4006 may initiate the Gateway Control Session Termination Procedure with PCRF 4016.

At 4046, D-GW 4006 may create and entry in its EPS Bearer table and may initiate the IP-CAN Session Establishment Procedure with PCRF 4016. The D-GW may provide information to PCRF 4016 that may be used to identify the session. PCRF 4016 may create IP-CAN session related information and may respond to D-GW 4006 with PCC rules and event triggers.

At 4048, D-GW 4006 may return a Create Session Response message to MME 4012, which may include the PDN Address (IPv6 prefix + IPv6 interface identifier) that may be assigned by the D-GW to UE 4000, and the address of the D-GW. At 4050, MME 4012 may send PDN Connectivity Accept message to UE 4000. This message may be included in an S1_MME control message Bearer Setup Request to the eNodeB. At 4052, eNodeB may send RRC Connection Reconfiguration to UE 4000 that may include the PDN Connectivity Accept message.

At 4054, UE 4000 may send the RRC Connection Reconfiguration Complete to the eNodeB. At 4056, eNodeB may send an S1-AP Bearer Setup Response to MME 4012. At 4058, the UE NAS layer of UE 4000 may build a PDN Connectivity Complete message that may include EPS Bearer Identity. UE 4000 may send a Direct Transfer (PDN Connectivity Complete) message to the eNodeB.

At 4060, eNodeB may send an Uplink NAS Transport (PDN Connectivity Complete) message to MME 4012. At 4062, the L3 configuration procedure may be completed. IP connectivity between UE 4000 and D-GW 4006 may be set for uplink and downlink directions. IP address information may be provided to UE 4000 via, for example, IPv6 Router Advertisement messages. After the Attach Accept message and when UE 4000 may have obtained a PDN Address, UE 4000 may send uplink packets towards the eNodeB, which may be tunneled to the D-GW 4006. This may be done, for example, using the IP address that may be anchored at D-GW 4006 as source address. D-GW 4006 may send downlink packets to UE. Forwarding may be enabled for the IPv6 address that may be anchored at D-GW 4006, and/or for the addresses anchored at other D-GWs.

At 4064, MME 4012 may send a Notify Request and may include the APN, the IPv6 prefix that may be assigned to UE 4000, and D-GW identity to HSS 4018. The message may include information that may identify the PLMN in which the D-GW may be located. This may be requested to keep HSS 4018 updated on what addresses may be used by UE 4000 and what D-GWs may be anchoring them. This may be done, for example, to provide address continuity in case UE 4000 moves. At 4066, HSS 4018 may store the APN, IPv6 prefix that may be assigned and D-GW identity, and may send a Notify Response to MME 4012.

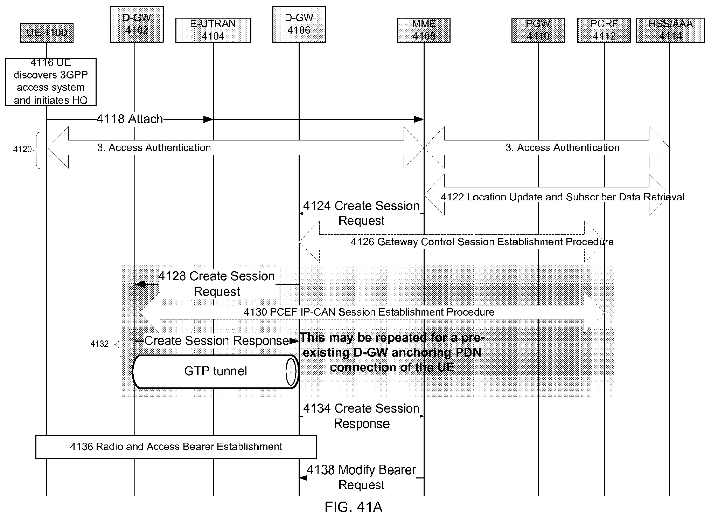

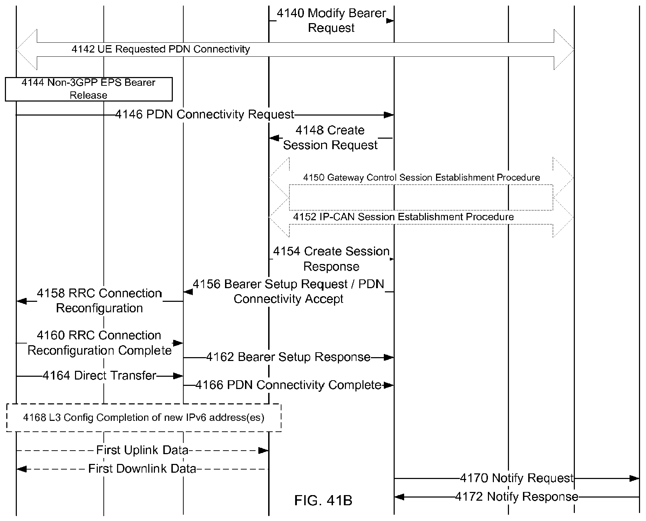

FIGS. 41A-B depicts an example MSC that may be used for handover from trusted or untrusted Non-3GPP IP Access to E-UTRAN with GTP in a non-roaming architecture. The MSC may be based handover from trusted or untrusted non-3GPP IP Access with PMIPv6 on S2a/S2b to 3GPP Access. The MSC may be for GTP based S5/S8 for E-UTRAN access. The MME may or may not change. The DMM-based design may not impact the MME selection procedures. Interaction between the gateways and the PCRF in the procedures in FIGS. 41A-B may occur if dynamic policy provisioning may be deployed; otherwise policy may be statically configured with the gateway.

At 4116, UE 4100 may discover the E-UTRAN access and may determine to transfer its current sessions (i.e. handover) from the currently used non-3GPP access system to E-UTRAN 4104. Mechanisms may be used to aid UE 4100 to discover the 3GPP Access system. At 4118, UE 4100 may send an Attach Request to MME 4108 with Request Type indicating "Handover" Attach. The message from UE 4100 may be routed by E-UTRAN 4104 to MME 4108. UE 4100 may include one of the APNs that may correspond to the PDN connections in the source non-3GPP access. APN may be provided.

At 4120, MME 4108 may contact HSS 4114 and may authenticate UE 4100. At 4122, after authentication, MME 4108 may perform location update procedure and subscriber data retrieval from HSS 4114. MME 4108 may obtain information about the IPv6 prefixes and the D-GWs anchoring them that may be used by UE 4100. This info may be stored in the PDN subscription context. MME 4108 may receive information on the PDNs UE 4100 may be connected to over the non-3GPP access in the Subscriber Data that may be obtained from HSS 4114.

At 4124, MME 4108 may select an APN and a D-GW. MME 4108 may send a Create Session Request message to the selected D-GW. The Request Type may be "Handover" and Handover Indication information may be included. At 4126, D-GW 4106 may initiate a Gateway Control Session Establishment Procedure with PCRF 4112 to obtain the rules requested for the D-GW to perform the bearer binding for the active sessions UE 4100 may establish as a result of the handover procedure.

At 4128, D-GW 4106 may send a Create Session Request message to D-GW 4102 to re-establish the user plane of the prefixes anchored at D-GW 4102. At 4130, D-GW 4106 may execute a PCEF-Initiated IP-CAN Session Modification Procedure with PCRF 4112 to obtain the rules requested for D-GW 4106 to function as the PCEF for the active IP sessions UE 4100 may have established with the IP-CAN type.

At 4132, D-GW 4102 may respond with a Create Session Response message to the Serving GW. A GTP tunnel may be established between D-GW 4102 and D-GW 4106. The Create Session Response may include the prefix that may have been assigned to UE 4100 by D-GW 4102. 4128, 4130, and 4132 may be repeated for a PDN connection that may be established by UE 4100 that may be anchored at a D-GW.

At 4134, D-GW 4106 may return a Create Session Response message to MME 4108. This message may include the IP address of UE 4100. This message may serve as an indication to MME 4108 that the S5 bearer setup and update may have been successful. The PMIPv6 tunnel(s) over S5 between D-GW 4106 and D-GW 4102 may have been established.

At 4136, Radio and Access bearers may be established in the 3GPP access. At 4138, MME 4108 may send a Modify Bearer Request message to D-GW 4106.

At 4140, D-GW 4106 may acknowledge by sending Modify Bearer Response (EPS Bearer Identity) message to MME 4108. UE 4100 may send and receive via the E-UTRAN system. At 4142, for connectivity to multiple PDNs, UE 4100 may establish connectivity to a PDN that may be transferred from non-3GPP access by executing the UE requested PDN connectivity procedure. This may be in addition to the previously established PDN connection.

At 4144, D-GW 4102 may initiate a resource allocation deactivation procedure in the trusted/untrusted non-3GPP IP access. 4124, 4126, 4128, 4130, or 132, and 4134 may be performed, for example, to ensure that the PDN connections UE 100 may have moved to D-GW 106. With the DMM approach, UE 4100 may obtain an IPv6 address on and attachment. A PDN connection may be established. This may be based on UE requested PDN connectivity.

At 4146, UE 4100 may initiate the UE Requested PDN procedure by the transmission of a PDN Connectivity Request message. This message may include the PDN type and may indicate the requested IP version (e.g., IPv6). MME 4108 may verify that the APN provided by UE 4100 may be allowed by subscription. If UE 4100 may not provide an APN, MME 4108 a use the APN from the default PDN subscription context. Protocol Configuration Options (PCO) may be used to transfer parameters between the UE and the D-GW, and may be sent transparently through MME 4108. The Request Type that may be included in the message may indicate "initial" attach since UE 4100 may request PDN connectivity over the 3GPP access network.

At 4148, MME 4108 may allocate a Bearer Identity, and may send a Create Session Request message to D-GW 4106. At 4150, D-GW 4106 may allocate an IP address for UE 4100 from its pool of locally available anchored prefixes. D-GW 4106 may initiate the Gateway Control Session Termination Procedure with PCRF 4112.

At 4152, D-GW 4106 may create a new entry in its EPS Bearer table and may initiate the IP-CAN Session Establishment Procedure with PCRF 4112. The D-GW may provide information to PCRF 4112 that may be used to identify the session. PCRF 4112 may create IP-CAN session related information and in response to D-GW 4106 with PCC rules and event triggers.

At 4154, D-GW 4106 may return a Create Session Response message to MME 4108, which may include the PDN Address (IPv6 prefix + IPv6 interface identifier) that may be assigned by the D-GW to UE 4110, and may include the address of the D-GW. At 4156, MME 4108 may send PDN Connectivity Accept message to UE 4100. This message may be included in an S1_MME control message Bearer Setup Request to eNodeB. At 4158, eNodeB may send RRC Connection Reconfiguration to UE 4100 that may include the PDN Connectivity Accept message.

At 4160, UE 4100 may sense the RRC Connection Reconfiguration Complete to the eNodeB. At 4162, eNodeB may send an S1-AP Bearer Setup Response to MME 4108. At 4164, the UE NAS layer of UE 4100 may build a PDN Connectivity Complete message that may include EPS Bearer Identity. UE 4100 may then send a Direct Transfer (PDN Connectivity Complete) message to the eNodeB.

At 4166, eNodeB may send an Uplink NAS Transport (PDN Connectivity Complete) message to MME 4108. At 4168, the L3 configuration procedure may be completed. IP connectivity between UE 4100 and D-GW 4106 may be set for uplink and downlink directions. IP address information may be provided to UE 4100 via, for example, IPv6 Router Advertisement messages. After the Attach Accept message and once the UE may have obtained a PDN Address, the UE may then send uplink packets towards the eNodeB which may be tunneled to D-GW 416. This may be done, for example, using the IP address that may be anchored at D-GW 4106 as source address. D-GW 4106 may send downlink packets to UE 4100. Forwarding may be enabled for the IPv6 address that may be anchored at D-GW 4106, and for the addresses that may be anchored at other D-GWs.

At 4170, MME 4108 may send a Notify Request that may include the APN, the IPv6 prefix that may be assigned to UE 4100, and D-GW identity to HSS 4114. The message may include information that may identify the PLMN in which the D-GW may be located. This may be requested to keep HSS 4114 updated on what addresses may be used by UE 4100 and what D-GWs may be anchoring them. This may be done to, for example, provide address continuity in case UE 4100 moves. At 4172, HSS 4114 may store the APN, IPv6 prefix that may be assigned and D-GW identity, and may send a Notify Response to MME 4108.

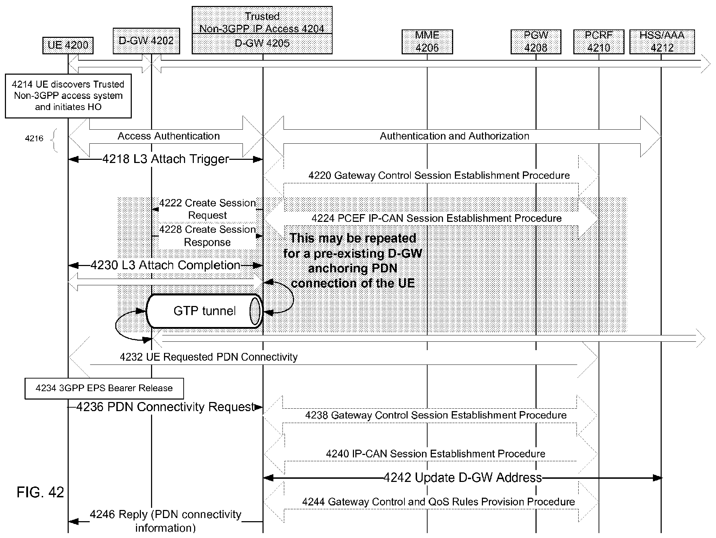

FIG. 42 depicts an example MSC that may be used for handover from 3GPP access to trusted non-3GPP IP access with GTP in a non-roaming architecture. The MSC may be based on 3GPP Access to Trusted Non-3PP IP Access Handover with PMIPv6 on S2a. Interaction between the gateways and the PCRF in the procedures in FIG. 42 may occur if dynamic policy provisioning may be deployed; otherwise policy may be statically configured with the gateway.

At 4214, UE 4200 may discover trusted non-3GPP IP access system for 204 and may determine to transfer its current sessions (i.e. handover) from the currently used 3GPP Access to trusted non-3GPP IP access system 4204. Network discovery and selection mechanisms may be used to aid UE 4200 discover the trusted non-3GPP IP access system 4204.

At 4216, UE 4200 may perform access authentication and authorization in non-3GPP access system 4204. 3GPP AAA server 4212 may authenticate and authorize UE for 4200 for access in trusted non-3GPP system 4204. The PDNs UE 4200 may be connected to (IPv6 prefixes and anchoring D-GWs) before handover may be obtained from HSS 4212 with UE 4200 subscriber data.

At 4218, wherein authentication and authorization may be successful, the L3 attach procedure may be triggered. If UE 4200 may sense a requested APN in this step, the D-GW, such as 4205, may verify that it may be allowed by subscription. If UE does not send a requested APN the D-GW may use the default APN.

At 4220, D-GW 4205 may initiate a Gateway Control Session Establishment Procedure with PCRF 4210. At 4222, D-GW 4205, which may play the role of MAG, may send a Create Session Request message to D-GW 4202 establish registration. At 4224, D-GW 4205 may execute a PCEF-Initiated IP CAN Session Modification Procedure with PCRF 4210.

At 4228, D-GW 4202 may respond with a Create Session Response message to the Serving GW. A GTP tunnel may be established between D-GW 4202 and D-GW 4205. The Create Session Response may include the prefix that may have been assigned to UE 4200 by D-GW 4202.

At 4230, L3 attach procedure may be completed at this point. The IP address(es) that may be assigned to UE 4200 by D-GW 4205 may be conveyed to UE 4200. The PMIPv6 tunnel may be set up between D-GW 4205 and D-GW 4202. UE 4200 may send and receive IP packets. 4222, 4224, 4228, and 4230 may be repeated per each PDN connection that may be established by UE 4200 that may be anchored at D-GW 4202.

At 4232, for connectivity to multiple PDNs, UE 4200 may establish connectivity to PDNs that may be transferred from 3GPP access. This may be in addition to a PDN connection that may have been previously established. At 4234, D-GW 4205 may initiate Initiated Bearer Deactivation procedure. 4222, 4224, 4228, 4230, 4232, and 4234 may ensure that the PDN connections UE 4200 may have been moved to D-GW 4205. With the DMM approach, UE 4200 may obtain an IPv6 address on an attachment. A PDN connection may be established. This part may be based on UE initiated connectivity to additional PDF with PMIPv6 on S2a.

At 4236, UE 4200 may send a trigger. At 4238, D-GW 4205 may initiate the Gateway Control Session Establishment Procedure with PCRF 4210. D-GW 4205 may provide the information to PCRF 4210 to associate it with the IP-CAN session that may be established at 4240 and may convey subscription related parameters to PCRF 4210. At 4240, D-GW 4205 may initiate the IP-CAN Session Establishment Procedure with PCRF 4210. D-GW 4205 may provide information to PCRF 4210 that may be used to identify the session and associate Gateway Control Sessions that may have been established at 4238. The PCRF 4210 may create IP-CAN session related information and may respond to D-GW 4205 with PCC rules and event triggers.

At 4242, D-GW 4205 may inform 3GPP AAA Server 4212 of its PDN GW (D-GW) identity and the APN corresponding to PDN connection for UE 4200. The message may include information that may identify the PLMN in which the D-GW may be located. This information may include the IPv6 prefix that may be assigned to UE 4200. This information may include and IPv6 address if the identifier may not be enough for another D-GW to derive the IPv6 address of the D-GW.

At 4244, PCRF 4210 may update the QoS rules in trusted non-3GPP access 4204 by initiating the GW Control Session Modification Procedure. At 4246, L3 attach procedure may be completed via a non-3GPP access trigger. IP connectivity between UE 4200 and D-GW 4205 may be set for uplink and downlink directions. The IP address information may be provided to UE 4200 via, for example, IPv6 Router Advertisement message.

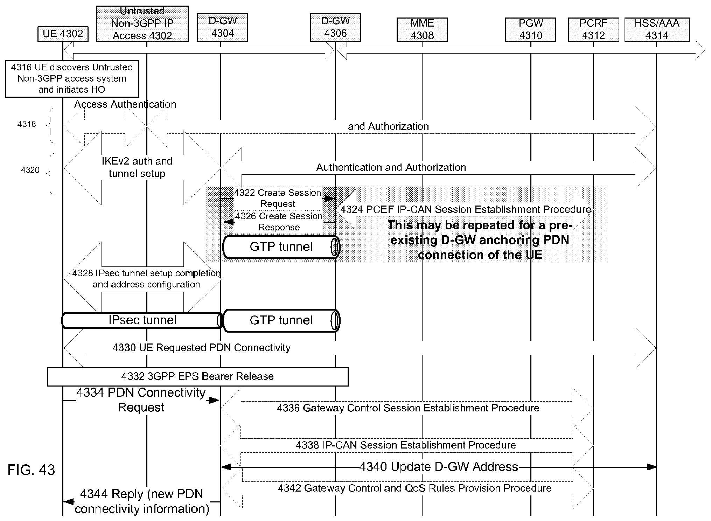

FIG. 43 depicts an example MSC that may be used for handover from 3GPP access to untrusted non-3GPP IP access with GTP in a non-roaming architecture. This MSC may be based on 3GPP access to untrusted non-3PP IP access handover with PMIPv6 on S2b and handover from 3GPP access to untrusted Non-3GPP IP access with GTP on S2b. Interaction between the gateways and the PCRF in the procedures in FIG. 43 may occur if dynamic policy provisioning may be deployed; otherwise policy may be statically configured with the gateway.

At 4316, UE may initially be attached to the 3GPP Access network. UE 4300 may move and may attach to an untrusted Non-3GPP IP access network, such as untrusted Non-3GPP IP access 4302. At 4318, access authentication procedure between UE 4300 and the 3GPP EPC may be performed. At 4320, and IKEv2 tunnel establishment procedure may be started by UE 4300. The address for D-GW 4304 that UE 4300 may use to form IPsec tunnel with may be discovered. This may occur, for example, using ePDG Selection or an address of a D-GW. After UE 4300 may be authenticated, UE may be authorized for access to the APN. As part of access authentication the identity of D-GW 4306 may be sent to D-GW 4304 by 3GPP AAA server 4314.

At 4322, D-GW 4304 may send the Create Session Request message to D-GW 4306. At 4324, if PCC may be supported, D-GW 4304 may request configuration for enforcing policy. D-GW 4304 may execute a PCEF-Initiated IP CAN Session Modification Procedure with PCRF 4312. At 4326, D-GW 4306 may respond with a Create Session Response message to the Serving GW. A GTP tunnel may be established at this point between D-GW 4306 and D-GW 4304. The Create Session Response may include the prefix that may have been signed to UE 4300 by D-GW 4306. 4322, 4324, and 4326 may be repeated for a PDN connection that may be established by UE 4300 and may be anchored at a D-GW.

At 4328, D-GW 4304 and UE 4300 may continue the IKEv2 exchange and IP address configuration. At the end of the handover procedure there may be a set of bearer for UE 4300 that may include an IPsec tunnel between UE 4300 and D-GW 4304 and a PMIPv6 tunnel between D-GW 4304 and D-GW 4306.

At 4330, for connectivity to multiple PDNs, UE 4300 may establish connectivity to PDNs that may be transferred from 3GPP access besides the PDN connection may have been previously established. At 4332, D-GW 4304 may initiate Initiated Bearer Deactivation procedure. At 4334, UE 4300 may send a PDN Connectivity Request trigger. 4320, 4322, 4324, 4326, 4328, 4330, 4332, and 4334 may be performed to ensure that the PDN connections UE 4300 may have may be moved to D-GW 4304. With the DMM approach, UE 4300 may obtain an IPv6 address on an attachment. A PDN connection may be established. This may be based UE initiated connectivity to additional PDN with PMIPv6 on S2a.

At 4336, D-GW 4304 may initiate the Gateway Control Session Establishment Procedure with PCRF 4312. D-GW 4304 may provide the information to PCRF 4312 to associate it with the IP-CAN session to be established at 4340 and to convey subscription related parameters to PCRF 4312.

At 4338, D-GW 4304 may initiate the IP-CAN Session Establishment Procedure with PCRF 4312. D-GW 4312 may provide information to PCRF 4312 that may be used to identify the session and associate Gateway Control Sessions established at 4338. PCRF 4312 may create IP-CAN session related information and may respond to D-GW 4304 with PCC rules and event triggers. At 4340, D-GW 4304 may inform 3GPP AAA Server or 314 of its PDN GW (D-GW) identity and the APN that may correspond to the PDN connection of UE 4300. The message may include information that may identify the PLMN in which the D-GW may be located. This information may include the IPv6 prefix assigned to the UE, and the IPv6 address of the D-GW if the identifier may not be enough for another D-GW to derive the IPv6 address.

At 4342, PCRF 4312 may update the QoS rules in trusted non-3GPP access 4302 by initiating the GW Control Session Modification Procedure. At 4344, L3 attach procedure may be completed via a non-3GPP access trigger. IP connectivity between UE 4300 and D-GW 4304 may be set for uplink and downlink directions. IP address information may be provided to UE 4300 via, for example, IPv6 Router Advertisement messages.

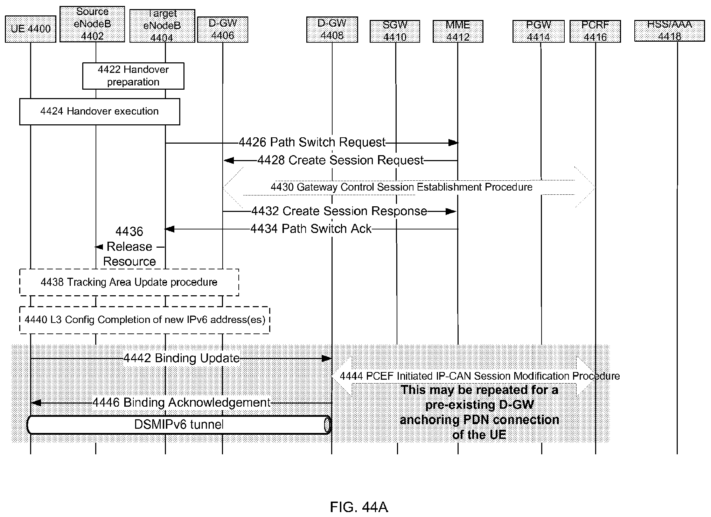

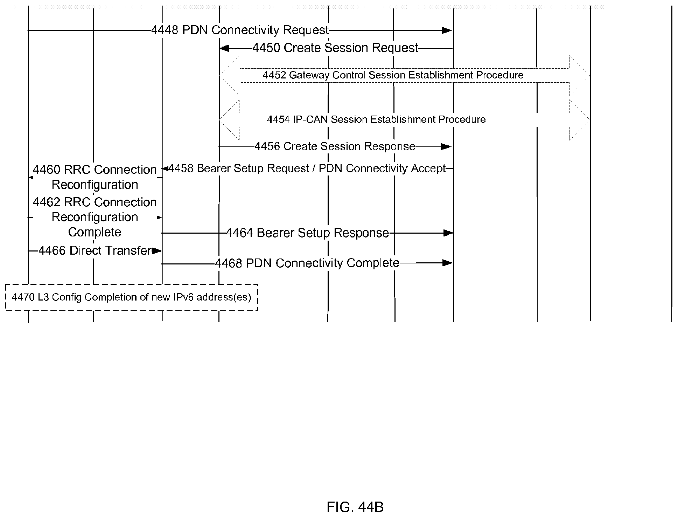

Client-based handover procedures that may use DSMIPv6 may be provided. FIGS. 44A-B depicts an example MSC that may be used for intra-LTE TAU and inter-eNodeB handover with D-GW relocation with DSMIPv6 in a non-roaming architecture. The MSC may be based on Intra-LTE TAU and Inter-eNodeB Handover with Serving GW Relocation. Interaction between the gateways and the PCRF in the procedures in FIGS. 44A-B may occur if dynamic policy provisioning may be deployed; otherwise policy may be statically configured with the gateway.

At 4422, target eNodeB 4404 may send a Path Switch Request message to MME 4414 to inform that UE 4400 may have changed cell. MME 4414 may determine that the D-GW may be relocated and may select another D-GW. The selection procedure may be based a procedure to select an S-GW, such as Serving GW Selection Function. At 4424, MME 4414 may send a Create Session Request message to set up a PDN connection to D-GW 4408. At 4426, D-GW 4408 may assign an IPv6 prefix to UE 4400 from its pool of locally available anchored prefixes. D-GW 4408 may create an entry in its EPS Bearer table. D-GW 4408 may initiate the Gateway Control Session Establishment Procedure with PCRF 4418.

At 4428, D-GW 4408 a return a Create Session Response message to MME 4414. At 4434, MME 4414 may confirm the Path Switch Request message with the Path Switch Request Ack message. At 4436, by sending Release Resource target eNodeB 4404 may inform success of the handover to source eNodeB 4402 and may trigger the release of resources. At 4438, UE 4400 may initiate a Tracking Area Update procedure when the condition, such as a trigger for tracking area update, may occur.

At 4440, the L3 configuration of the local IPv6 address procedure may be completed. IP connectivity between UE 4400 and D-GW 4408 may be set for uplink and downlink directions. This IP address may be used as CoA for ongoing communications, and for HoA of new ones. At 4442, UE 4400 may sense a DSMIPv6 BU message to D-GW 4410 to register its CoA. This may be done, for example, such that the CoA may be the local IP address allocated at 4430 to re-establish the user plane as a result of the D-GW relocation.

At 4444, if PCC may be supported, D-GW 4410 may execute a PCEF-Initiated IP CAN Session Modification Procedure with PCRF 4418. At 4446, D-GW 4410 may send the MIP Binding Ack to UE 4400. This may be triggered by the Binding Update message from UE 4400 at 4442, may occur after 4442, and may not need to wait for 4444. A tunnel may be established between D-GW 4410 and UE 4400. This tunnel may be used to forward packets from/to the prefix that D-GW 4410 may have delegated to UE 4400. Process flows 4442, 4444, and 4446 may be repeated for a PDN connection that may be established by the UE anchored D-GW 4410. 4428, 4430, 4432, 4434, 4436, 4438, 4440, 4442, 4444, and 4446 may be performed to ensure that the PDN connections for UE 4400 may be moved to D-GW 4408. UE 4400 may have obtained a locally anchored IPv6 address from the current serving D-GW, which may be D-GW 4408. Resources for a connection using that address may not have been requested yet. A PDN connection may be established. This may be based on UE requested PDN connectivity.

At 4448, UE 4400 may initiate the UE Requested PDN procedure by the transmission of a PDN Connectivity Request message. This message may include the PDN type, and may indicate the requested IP version, which may be IPv6. MME 4414 may verify that the APN provided by UE 4400 may be allowed by subscription. If UE 4400 did not provide an APN, MME 4414 may use the APN from the default PDN subscription context. Protocol Configuration Options (PCO) may be used to transfer parameters between the UE and the D-GW, and may be sent transparently through MME 4414. The Request Type included in the message may indicate "initial request" since UE 4400 may request PDN connectivity over the 3GPP access network.

At 4450, MME 4414 may allocate a Bearer Identity, and may send a Create Session Request message to D-GW 4408. At 4452, D-GW 4408 may initiate the Gateway Control Session Termination Procedure with PCRF 4418. At 4454, D-GW 4408 may create a new entry in its EPS Bearer table and may initiate the IP-CAN Session Establishment Procedure with PCRF 4418. The D-GW may provide information to PCRF 4418 that may be used to identify the session. PCRF 4418 may create IP-CAN session related information and may response to D-GW 4408 with PCC rules and event triggers.

At 4456, D-GW 4408 may return a Create Session Response message to MME 4414, which may include the PDN Address, for example IPv6 prefix + IPv6 interface identifier, which may be assigned by the D-GW to the UE at 4428.

At 4458, MME 4414 may send PDN Connectivity Accept message to UE 4400. This message may be included in an S1_MME control message Bearer Setup Request to the eNodeB. At 4460, target eNodeB 4404 may send RRC Connection Reconfiguration to UE 4400 that may include the PDN Connectivity Accept message.

At 4462, UE 4400 may send the RRC Connection Reconfiguration Complete to the eNodeB. At 4464, target eNodeB 4404 may send an S1-AP Bearer Setup Response to MME 4414. At 4466, the UE NAS layer of UE 4400 may build a PDN Connectivity Complete message that may include EPS Bearer Identity. UE 4400 may send a Direct Transfer (PDN Connectivity Complete) message to target eNodeB 4404.

At 4468, target eNodeB 4404 may send an Uplink NAS Transport (PDN Connectivity Complete) message to MME 4414. At 4470, the L3 configuration procedure may be completed. IP connectivity between UE 4400 and D-GW 4408 may be set for uplink and downlink directions. IP address information may be provided to UE 4400 via, for example, IPv6 Router Advertisement messages. Since the IPv6 address may have been conveyed to UE 4400 and may have been configured at 4440, UE may not be impacted. After the Attach Accept message and when UE 4400 may have obtained a PDN Address, UE may send uplink packets towards the eNodeB which may be tunneled to 4408. This may be done, for example, using the IP address that may be anchored at D-GW 4408 as source address.

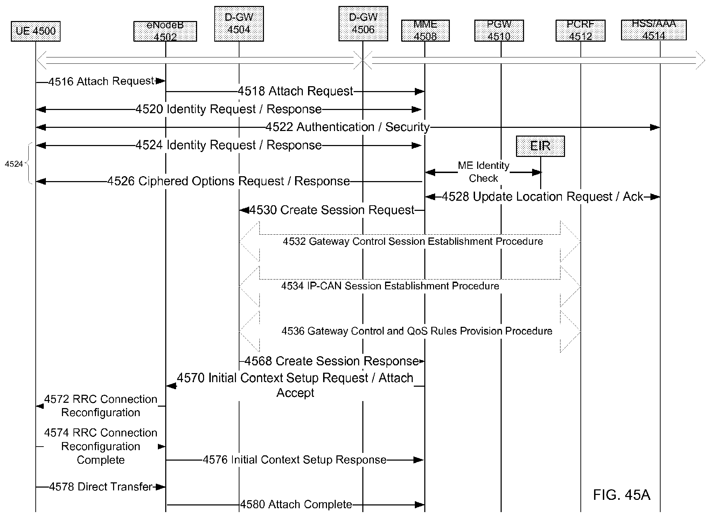

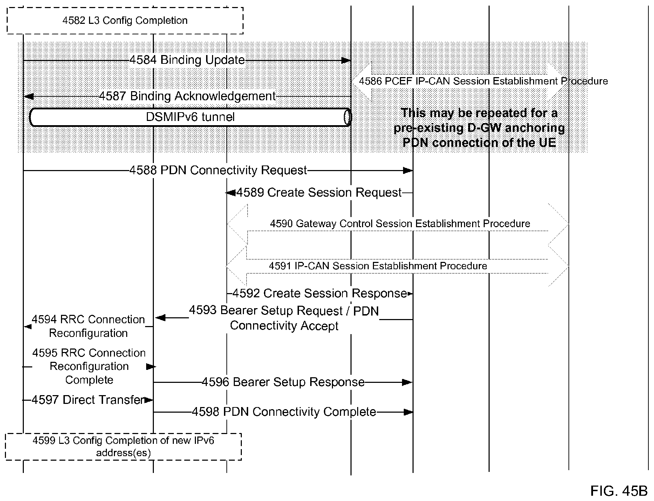

FIGS. 45A-B depicts an example MSC that may be used for handover from trusted or untrusted non-3GPP IP Access to E-UTRAN with DSMIPv6 in a non-roaming architecture. The MSC may be based on Trusted or Untrusted Non-3GPP IP Access with DSMIPv6 over S2c to 3GPP Access Handover. The MSC may apply to the non-roaming case shown in FIG. 5, for example, when the UE attaches to the LTE network. Interaction between the gateways and the PCRF in the procedures may occur dynamic policy provisioning may be deployed; otherwise policy may statically be configured in the gateway.

At 4516, UE 4500 may initiate the Attach procedure by the transmission, to eNodeB 4502, of an Attach Request message. The PDN type may indicate the requested IP version (IPv6). The Request Type may indicate "Handover" attach. At 4518, eNodeB 4502 may select an MME and may forward the Attach Request message to MME 4508 in a S1-MME control message.

At 4520, MME 4505 may send an Identity Request to UE 4500 to request the IMSI. UE 4500 may respond with Identity Response (IMSI). At 4522, authentication and NAS security setup may be performed to activate integrity protection and NAS ciphering. At 4524, the ME Identity may be retrieved from UE. The EIR may respond with ME Identity Check Ack (Result). Dependent upon the Result, MME 4508 may decide whether to continue with this Attach procedure or to reject UE 4500.

At 4536, if UE 4500 may have set the Ciphered Options Transfer Flag in the Attach Request message, the Ciphered Options, i.e. PCO or APN or both, may now be retrieved from UE 4500. To handle situations where UE 4500 may have subscriptions to multiple PDNs, if the Protocol Configuration Options includes user credentials (e.g. user name/password within PAP or CHAP parameters) then UE 4500 may send the APN to MME 4508.

At 4528, MME 4508 may send an Update Location Request message to HSS 4514. HSS 4514 may acknowledge the Update Location message by sending an Update Location Ack message to MME 4514. Subscription Data may include one or more PDN subscription contexts. If the requested checks may be successful then MME 4508 may construct a context for UE 4500. If the APN provided by UE 4500 may not be allowed by subscription, or the Update Location may be rejected by HSS 4514, MME 4508 may reject the Attach Request from UE 4500.

At 4530, MME 4508 may decide if this PDN connection request may be handled following a DMM mode of operation (so it may be anchored at the D-GW) or in "Rel-10/11 mode" (e.g., via the HPLMN, previous selection of the a SGW). This decision may be based on requested APN by UE 4500, subscription information, policies, etc. For example, the decision may be based on a local anchoring. For those PDN connections that may be handled via a PGW on the HPLMN, no specific D-GW functionality may be used, so it may be transparent to the UE and the rest of the network entities. MME or 508 may select a D-GW and may allocate an EPS Bearer Identity for the Default Bearer that may be associated with UE 4500. Then it may send a Create Session Request message to the selected D-GW.

At 4532, D-GW 4504 may assign an IPv6 prefix to UE 4500 from its pool of locally available anchored prefixes. D-GW 4504 may create an entry in its EPS Bearer table. D-GW 4504 may initiate the Gateway Control Session Establishment Procedure with PCRF 4512. D-GW 4504 may provide the information to PCRF 4512 to associate it with the IP-CAN session that may be established at 4534 and to convey subscription related parameters to PCRF 4512.

At 4534, D-GW 4504 may initiate the IP-CAN Session Establishment Procedure with PCRF 4512. D-GW 4504 may provide information to PCRF 4504, which may be used to identify the session and associate Gateway Control Sessions that may be established that 4534. PCRF 4512 may create IP-CAN session related information and may respond to D-GW 4504 with PCC rules and event triggers.

At 4536, PCRF 4512 may update the QoS rules in the trusted non-3GPP access by initiating the GW Control Session Modification Procedure. At 4568, D-GW 4504 may return a Create Session Response message to MME 4508, which may include the PDN Address (for example IPv6 prefix + IPv6 interface identifier) that may be signs by the D-GW to the UE, and the address of the D-GW. At 4570, MME 4508 may send an Attach Accept message to eNodeB 4502.

At 4572, eNodeB 4502 may send the RRC Connection Reconfiguration message that may include the EPS Radio Bearer Identity to UE 4500. The Attach Accept message may be sent along to UE 4500. The APN may be provided to UE 4500 to notify it of the APN for which the activated default bearer may be associated. This message may include the IPv6 interface identifier that may be signs by the D-GW. UE 4500 may wait for the Router Advertisement from the network with the IPv6 prefix information at 4582 or it may send a Router Solicitation if necessary.

At 4574, UE 4500 may send the RRC Connection Reconfiguration Complete message to eNodeB 4502. At 4576, eNodeB 4502 may sense the Initial Context Response message to MME 4508. At 4578, UE 4500 may send a Direct Transfer message to eNodeB 4502, which may include the Attach Complete message. At 4580, eNodeB 4502 may forward the Attach Complete message to MME 4508 in an Uplink NAS Transport message. At 4582, the L3 configuration procedure may be completed. IP connectivity between UE 4500 and D-GW 4504 may be set for uplink and downlink directions. IP address information may be provided to UE 4500 via, for example, IPv6 Router Advertisement messages. After the Attach Accept message and when UE 4500 may have obtained a PDN Address, UE 4500 may send uplink packets towards the eNodeB which may then be tunneled to the D-GW. The D-GW may send downlink packets to the UE. This address may be used as CoA and/or as a HoA.

At 4584, UE 4500 may sense a DSMIPv6 BU message to D-GW 4506 to register its CoA to re-establish the user plane as a result of the D-GW relocation. The CoA may be the local IP address allocated at 4520. At 4586, if PCC may be supported, D-GW 4506 may execute a PCEF-Initiated IP CAN Session Modification Procedure with PCRF 4512. At 4587, D-GW 4506 may send the MIP Binding Ack to UE 4500. Since this may be triggered by the Binding Update message from UE 4500 at 4584, it may occur after 4584 and may not wait for 4586. A tunnel may then be established between D-GW 4506 and UE 4500. This tunnel may be used to forward packets from/to the prefix that D-GW 4506 may have delegated to UE 4500. Process flows 4584, 4586, and 4587 may be repeated for a PDN connection that may be established by the UE anchored at 4506. It may be ensured that the PDN connections UE 4500 may have may have been successfully moved to D-GW 4504. UE 4504 may have obtained a locally anchored IPv6 address from D-GW 4504. However, resources for a connection using that address may not have been requested. A PDN connection may be established. This may be based on UE requested PDN connectivity

At 4588, UE 4500 may initiate the UE Requested PDN procedure by the transmission of a PDN Connectivity Request message. This message may include the PDN type, and may indicate the requested IP version (e.g., IPv6). MME 4508 may verify that the APN provided by UE may be allowed by subscription. If UE 4500 did not provide an APN, MME 4508 may use the APN from the default PDN subscription context. Protocol Configuration Options (PCO) may be used to transfer parameters between the UE and the D-GW, and may be sent transparently through MME 4508. The Request Type included in the message may indicate "initial request" since UE 4500 may request PDN connectivity over the 3GPP access network.

At 4589, MME 4508 may allocate a Bearer Identity, and may send a Create Session Request message to D-GW 4504. At 4590, D-GW 4504 may initiate the Gateway Control Session Termination Procedure with PCRF 4512. At 4591, D-GW 4504 may create an entry in its EPS Bearer table and may initiate the IP-CAN Session Establishment Procedure with PCRF 4512. The D-GW may provide information to PCRF 4512 that may be used to identify the session. PCRF 4512 may create IP-CAN session related information and may respond to D-GW 4504 with PCC rules and event triggers.

At 4592, D-GW 4504 may return a Create Session Response message to MME 4508, which may include the same PDN Address (for example IPv6 prefix + IPv6 interface identifier) that may be assigned by the D-GW to UE 4500 at 4520. At 4593, MME 4508 may send PDN Connectivity Accept message to UE 4500. This message may be included in an S1_MME control message Bearer Setup Request to eNodeB 4502.

At 4594, eNodeB 4502 may send a RRC Connection Reconfiguration to UE 4500 that may include the PDN Connectivity Accept message. At 4595, UE 4500 may send the RRC Connection Reconfiguration Complete to eNodeB 4502. At 4596, eNodeB 4502 may send an S1-AP Bearer Setup Response to MME 4508. At 4597, the UE NAS layer of UAE 4500 may build a PDN Connectivity Complete message that may include EPS Bearer Identity. UE 4500 may send a Direct Transfer (PDN Connectivity Complete) message to eNodeB 4502.

At 4598, eNodeB 4502 may send an Uplink NAS Transport (PDN Connectivity Complete) message to MME 4508. At 4599, The L3 configuration procedure may be completed. IP connectivity between UE 4500 and D-GW 4504 may be set for uplink and downlink directions. The IP address information may be provided to UE 4500 via, for example, IPv6 Router Advertisement messages. The IPv6 address may have been conveyed to UE 4500 and configured at 4534. After the Attach Accept message and when UE 4500 may have obtained a PDN Address, UE 4500 may send uplink packets towards eNodeB 4502 which may be tunneled to D-GW 4504. This may be done, for example, using the IP address that may be anchored at D-GW 4504 as a source address.

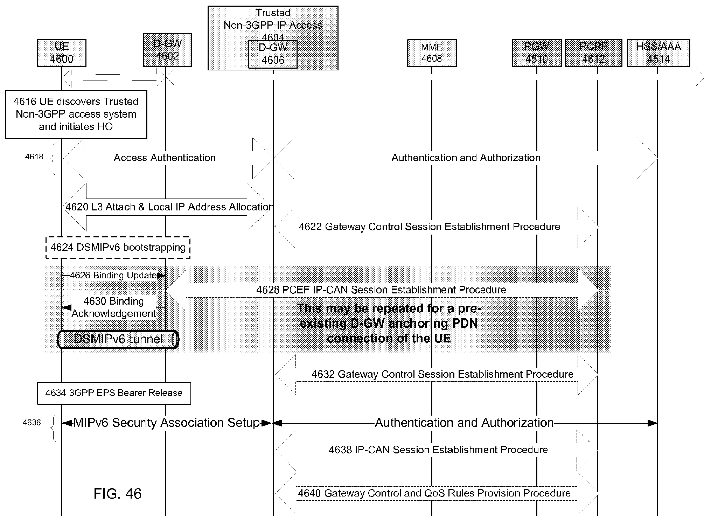

FIG. 46 depicts an example MSC that may be used for handover from 3GPP access to trusted non-3GPP IP Access with DSMIPv6 in a non-roaming architecture. The MSC may be based 3GPP Access to Trusted Non-3PP IP Access Handover with DSMIPv6 on S2c. Interaction between the gateways and the PCRF in the procedures in FIG. 46 may occur if dynamic policy provisioning may be deployed; otherwise policy may be statically configured with the gateway.

At 4616, UE 4600 may discover trusted non-3GPP IP access system 4604 and may determine to transfer its sessions (i.e. handover) from the used 3GPP access to the discovered trusted non-3GPP IP access system. Network discovery and selection mechanisms may be used to aid UE 4600 to discover trusted non-3GPP IP access system 4604.

At 4618, UE 4600 may perform access authentication and authorization in the non-3GPP access system. 3GPP AAA server 4614 may offend decayed and authorize UE 4600 for access in trusted non-3GPP system 4604. At 4620, after authentication and authorization, the L3 attach procedure may be triggered. If UE 4600 may send a requested APN, D-GW 4606 may verify that it may be allowed by subscription. If UE 4600 does not send a requested APN, D-GW 4606 may use the default APN. D-GW 4606 may allocate an IP address for UE 4600 from its pool of locally available anchored prefixes and may convey it to UE 4600 via, for example, Router Advertisements.

At 4622, D-GW 4606 may initiate a Gateway Control Session Establishment Procedure with PCRF 4612. At 4624, if bootstrapping may not have been performed prior to the handover, UE 4600 may discover the address for D-GW 4602 using, for example, MIPv6 bootstrapping procedures.

At 4626, UE 4600 may send a DSMIPv6 BU message to D-GW 4602 to register its CoA. The CoA may be the local IP address that may have been allocated at 4620 to re-establish the user plane as a result of the D-GW relocation. At 4628, if PCC may be supported, D-GW 4602 may execute a PCEF-Initiated IP CAN Session Modification Procedure with PCRF 4612.

At 4630, D-GW 4602 may send the MIP Binding Ack to UE 4600. Since may be triggered by the Binding Update message from UE 4600 at 4626, it may occur after 4626 and may not wait 44628. A tunnel may be established between 4602 D-GW and UE 4600. This tunnel may be used to forward packets from/to the prefix that D-GW 4602 may have delegated to UE 4600. 4626, or 628, and 4630 may be repeated for a PDN connection that may have been established by the UE anchored at D-GW 4602.

At 4632, PCRF 4612 may initiate the Gateway Control and QoS Rules Provision Procedure. At 4634, D-GW 4602 may initiate Initiated Bearer Deactivation procedure. 4626, 4628, 4630, 4632, and 4634 may be performed to ensure that the PDN connections UE 4600 may have may have been moved to D-GW 4606. With the DMM approach, UE 4600 may have obtained an IPv6 address on each attachment. A PDN connection may be established. This may be based UE initiated connectivity to additional PDN from trusted Non-3GPP IP access with DSMIPv6 on S2c.

At 4636, UE 4600 may discover D-GW 4606. A security association may be established between UE 4600 and D-GW 4606 to secure the DSMIPv6 messages between UE 4600 and D-GW 4606 and for authentication between UE 4600 and D-GW 4606. UE 4600 may initiate the establishment of the security association using IKEv2; EAP may be used over IKEv2 for authentication purposes. D-GW 4606 may communicate with the AAA infrastructure in order to complete the EAP authentication. D-GW 4606 may inform 3GPP AAA Server 4614 of the identity of the selected PDN GW and the APN the may correspond to the PDN Connection of you UE 4600. D-GW 4606 may provide information that may identify the PLMN in which D-GW 4606 may be located. This information may be registered in the HSS 4614.

At 4638, D-GW 4606 may initiate the IP-CAN Session Establishment Procedure with PCRF 4612. At 4640, PCRF 4612 may initiate the gateway control and QoS rules provision procedure.

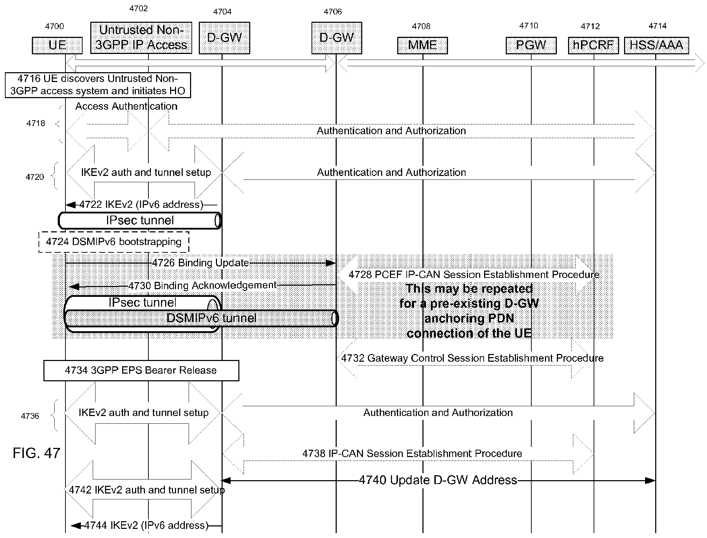

FIG. 47 depicts an example MSC that may be used for handover from 3GPP access to untrusted non-3GPP IP access with DSMIPv6 in a non-roaming architecture. The MSC may be based 3GPP Access to Untrusted Non-3PP IP Access Handover with DSMIPv6 on S2c. Interaction between the gateways and the PCRF in the procedures in FIG. 47 may occur if dynamic policy provisioning may be deployed; otherwise policy may be statically configured with the gateway.

At 4716, UE 4700 may be attached to the 3GPP Access network. UE 4700 may move and may attach to an untrusted non-3GPP IP access network, such as untrusted non-3GPP IP access 4702.

At 4718, UE 4700 may perform access authentication and authorization in non-3GPP access system 4702. 3GPP AAA server 4714 may authenticate and authorize UE 4700 for access in the trusted non-3GPP system.

At 4720, and access authentication procedure between UE 4700 and the 3GPP EPC may be performed. The IKEv2 tunnel establishment procedure may be started by UE 4700. The address of D-GW 4704 to which UE 4700 may form IPsec tunnel with may be discovered. This may be done, for example, using ePDG Selection, or determining the address of a D-GW.

At 4722, D-GW 4704 may allocate an IP address for UE 4700 from its pool of locally available anchored prefixes. D-GW 4704 may send an IKEv2 message with him assigned IP address, which may be the IPv6 prefix, in IKEv2 Configuration payloads. The IKEv2 procedure may be completed and the IPsec tunnel may be set-up. The address configured by UE 4700 may be used as a Care-of Address for DSMIPv6 over the S2c* reference point.

At 4724, IF bootstrapping may not have been performed prior to the handover, UE 4700 may discover the address of D-GW 4706 using, for example, MIPv6 bootstrapping procedures.

At 4726, UE 4700 may sound a DSMIPv6 BU message to D-GW 4706 to register its CoA. The CoA may be the local IP address allocated at 4720 may be to re-establish the user plane as a result of the D-GW relocation. At 4728, if PCC may be supported, D-GW 4706 may execute a PCEF-Initiated IP CAN Session Modification Procedure with PCRF 4712. At 4730, D-GW 4706 may send the MIP Binding Ack to UE 4700. Since this may be triggered by the Binding Update message from UE 4700 at 4726, it may occur after 4726 and may not wait for 4728. A tunnel may be established between D-GW 4706 and UE 4700. This tunnel may be used to forward packets from/to the prefix that D-GW 4706 may have delegated to UE 4700. 4728, 4730, and 4732 may be repeated for a PDN connection that may be established by the UE anchored at D-GW 4706.

At 4732, PCRF 4712 may initiate the Gateway Control and QoS Rules Provision Procedure. At 4734, D-GW 4706 may initiate an initiated bearer deactivation. 4722, 4724, 4726, 4728, and 4730, may be performed to ensure that the PDN connections UE 4700 may have moved to D-GW 4704. With the DMM approach, UE 4700 may obtain an IPv6 address on an attachment. A PDN connection may be established. This may be based UE initiated connectivity to additional PDN from trusted non-3GPP IP access with DSMIPv6 on S2c.

At 4736, IKEv2 tunnel establishment procedure may be started by UE 4700. UE 4700 may indicate in a notification part of the IKEv2 authentication request that may support MOBIKE. The D-GW IP address to which UE 4700 may need to form an IPsec tunnel may be discovered via a mechanism such as DHCP or DNS query.

At 4738, D-GW 4704 may initiate the IP-CAN Session Establishment Procedure with PCRF 4712. At 4740, D-GW 4704 may inform 3GPP AAA Server 4714 of the PDN GW identity. The 3GPP AAA Server 4714 may inform HSS 4714 of the D-GW identity and APN that may be associated with the PDN Connection of UE 4700. The message may include information that may identify the PLMN in which the D-GW may be located.

At 4742, D-GW 4704 may be authenticated by UE 4700 and may indicate to UE 4700 that the authentication and authorization with the external AAA server 4714 may be successful. At 4744, D-GW 4704 may send an IKEv2 message with the IP address in IKEv2 Configuration payloads.

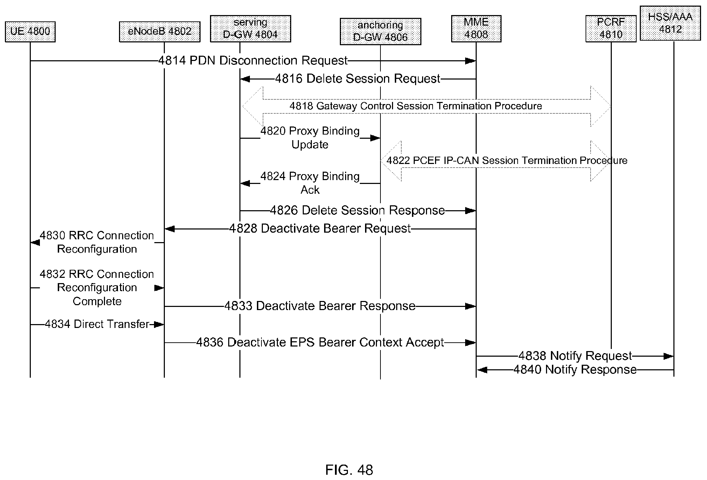

Network-based PDN disconnection procedures that may use PMIPv6 may be provided. FIG. 48 depicts an example MSC that may be used for UE initiated PDN disconnection for 3GPP accesses with PMIPv6 in a non-roaming architecture. Interaction between the gateways and the PCRF in the procedures in FIG. 48 may occur if dynamic policy provisioning may be deployed; otherwise policy may be statically configured with the gateway.

At 4814, UE 4800 may initiate the UE requested PDN disconnection procedure by the transmission of a PDN Disconnection Request message. At 4816, the EPS Bearers in serving D-GW 4804 for the PDN connection may be deactivated by MME 4808 by sending Delete Session Request to serving D-GW 4804. This message may indicate that bearers belonging to that PDN connection may be released. The message may include the anchoring D-GW 4806 associated with the PDN connection the UE may have requested to terminate.

At 4818, serving D-GW 4804 or may initiate the Gateway Control Session Termination Procedure with PCRF 4810. Serving D-GW 4804 may provide information to enable PCRF 4810 to identify the IP CAN session that may correspond to the Gateway Control Session. At 4820, serving D-GW four uniform a sense a Proxy Binding Update message to anchoring D-GW 4806 to release the PDN connection of UE 4800 at the anchoring D-GW 4806. This may occur, for example, in case anchoring D-GW may not be the serving D-GW itself. Serving D-G 4804 may know which may be the anchoring D-GW for the PDN connection UE 4800 may have requested to disconnect based on the information provided by the MME 4808 at 4816.

At 4822, anchoring D-GW 4806 may initiate the PCEF-Initiated IP CAN Session Termination Procedure with PCRF 4810. Anchoring D-GW 4806 may provide information to enable PCRF 4810 to identify the IP CAN session. At 4824, anchoring D-GW 4806 may respond to serving D-GW 4804 with the result of the PDN connection release with Proxy Binding Update Acknowledgement.

At 4826, serving D-GW Florida four may acknowledge with Delete Session Response. At 4828, MME 4808 may initiate the deactivation of all Bearers associated with the PDN connection to eNodeB 4802 by sending the Deactivate Bearer Request message to eNodeB 4802. This S1-AP message may carry the list of EPS bearers to be released. MME 4808 may build a NAS message Deactivate EPS Bearer Context Request that may include the EPS Bearer Identity, and may include it in the S1-AP Deactivate Bearer Request message.

At 4830, eNodeB 4802 may send the RRC Connection Reconfiguration message that may include the corresponding bearers to be released and the NAS Deactivate EPS Bearer Context Request message to UE 4800. At 4832, UE 4800 may release resources that may correspond to the PDN connection and may acknowledge this by sending the RRC Connection Reconfiguration Complete message to eNodeB 4802. At 4833, eNodeB 4802 may send an acknowledgement of the deactivation to MME 4808.

At 4834, the UE NAS layer of UE 4800 may build a Deactivate EPS Bearer Context Accept message. UE 4800 may send a Direct Transfer (Deactivate EPS Bearer Context Accept) message to eNodeB 4802. At 4836, eNodeB 4802 may send an Uplink NAS Transport message, such as a Deactivate EPS Bearer Context Accept message, to MME 4808. At a 4838, MME 4808 may send a Notify Request that may include the information about the PDN terminated connection (APN, the IPv6 prefix assigned to the UE and anchoring D-GW identity) to HSS 4812. This may be requested to keep HSS 4812 updated on what addresses may be used by UE 4800 and what D-GWs may be anchoring them. This may be done, for example, to provide address continuity in case UE 4800 may move. At 4840, HSS 4812 may remove the APN, the IPv6 prefix that may be assigned, and the anchoring D-GW identity, and may send a Notify Response to MME 4808.

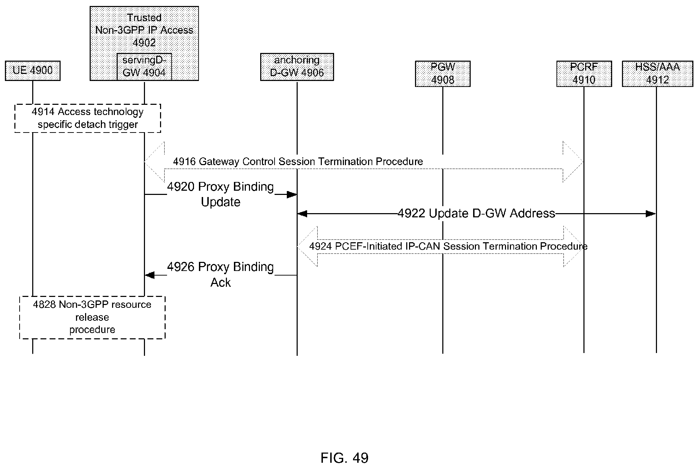

FIG. 49 depicts an example MSC that may be used for UE requested PDN disconnection procedure from a trusted non-3GPP IP access with PMIPv6 in a non-roaming architecture. The MSC may be based on UE/Trusted Non-3GPP IP Access Network Initiated Detach and UE/Trusted Non-3GPP IP Access requested PDN Disconnection Procedure with PMIPv6. Interaction between the gateways and the PCRF in the procedures in FIG. 49 may occur if dynamic policy provisioning may be deployed; otherwise policy may be statically configured with the gateway.

At 4914, UE 4900 may trigger disconnection from a PDN by an access technology procedure. At 4916, serving D-GW 490 or may initiate the Gateway Control Session Termination Procedure with PCRF 4910.

At 4920, the Mobile Access Gateway (MAG) function in serving D-GW 4904 may send a Proxy Binding Update message to anchoring D-GW 4906 with a lifetime value that may be set to zero, which may indicate de-registration. Serving D-GW 4904 may know the destination anchoring D-GW based on the local information it may have about IPv6 prefixes by the UE. This info may be retrieved after the UE attached/handed over to the serving D-GW.

At 4922, anchoring D-GW 106 may inform AAA Server/HSS 4912 of the PDN disconnection. This may include information about the PDN terminated connection, APN, the IPv6 prefix that may be assigned to UE 4900, and the anchoring D-GW identity. This may be requested keep HSS 4912 updated on what addresses may be used by UE 4900 and what D-GWs may be anchoring them. This may be done, for example, to provide address continuity in case UE 4900 may move.

At 4924, anchoring D-GW 4906 may delete the IP CAN session associated with UE 4900 and may execute a PCEF-Initiated IP CAN Session Termination Procedure with PCRF 4910. At 4926, anchoring D-GW 406 may delete existing entries that may be implied in the Proxy Binding Update message from its Binding Cache and may send a Proxy Binding Ack message to the MAG function at serving D-GW 4904. At 4928, a non-3GPP specific resource release procedure may be executed. The resources of Trusted Non-3GPP Access Network 4902 may be released.

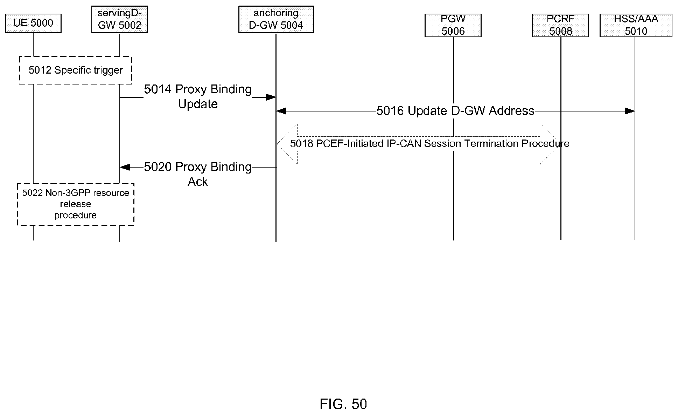

FIG. 50 depicts an example MSC that may be used for UE requested PDN disconnection procedure from an untrusted non-3GPP IP access with PMIPv6 in a non-roaming architecture. The MSC may be UE/ePDG-initiated Detach Procedure and UE-Requested PDN Disconnection with PMIPv6 on S2b. Interaction between the gateways and the PCRF in the procedures in FIG. 50 may occur if dynamic policy provisioning may be deployed; otherwise policy may be statically configured with the gateway.

At 5012, UE may trigger disconnection from a specific PDN by a specific procedure. This mechanism may be based on signaling at layer-3, for example, by extending neighbor discovery. The UE may wish to disconnect from a anchoring D-GW. At 5014, the MAG function in serving D-GW 5002 may send a Proxy Binding Update message to anchoring D-GW 5004 with lifetime value the may be set to zero, which may indicate de-registration. Serving D-GW 5002 may be aware of anchoring D-GW 5004 based on the local information it may have regarding IPv6 prefixes and associated anchoring D-GWs that may be used by the UE. This info may be retrieved after the UE attached/handed over to serving D-GW 5002.

At 5016, anchoring D-GW 5004 may inform the AAA Server/HSS 5010 of the PDN disconnection, which may include providing information about the PDN terminated connection, such as APN, the IPv6 prefix that may be assigned to UE 5000, and anchoring D-GW identity. This may be requested to keep HSS 5010 updated on what addresses may be by UE 5000 and what D-GWs may be anchoring them. This may be done, for example, to provide address continuity in case UE 5000 may move.

At 5018, anchoring D-GW 5004 may delete the IP CAN session associated with UE 5000 and may execute a PCEF-Initiated IP CAN Session Termination Procedure with PCRF 5008. At 5020, anchoring D-GW 5004 may delete existing entries for the indicated HoA from its Binding Cache and may send a Proxy Binding Ack message to the MAG in serving D-GW 5002. At 5022, a non-3GPP resource release procedure may be executed.

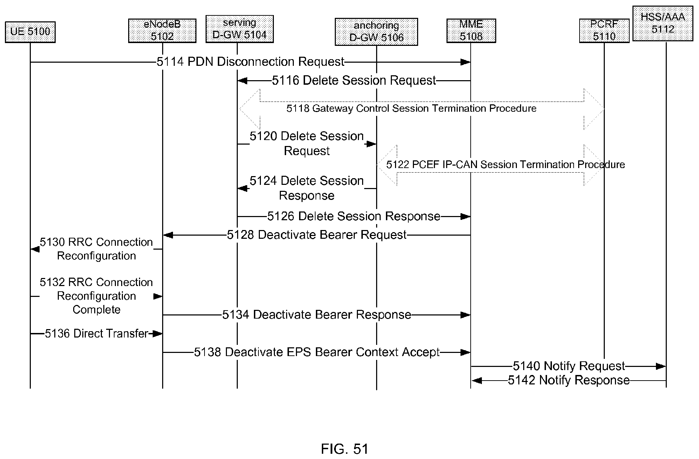

Network-based PDN Disconnection Procedures that may use GTP may be used. FIG. 51 depicts is an example MSC that may be used for UE initiated PDN disconnection for 3GPP accesses with GTP in a non-roaming architecture. Interaction between the gateways and the PCRF in the procedures in FIG. 51 may occur if dynamic policy provisioning may be deployed; otherwise policy may be statically configured with the gateway.

At 5114, UE 5100 may initiate the UE requested PDN disconnection procedure by the transmission of a PDN Disconnection Request message. At 5116, the EPS Bearers in serving D-GW 5104 for the particular PDN connection may be deactivated by MME 5108 by sending Delete Session Request to serving D-GW 5104. This message may indicate that bearers belonging to that PDN connection may be released. The message may include the anchoring D-GW that may be associated with the PDN connection UE 5100 may have requested to terminate.

At 5118, serving D-GW 5104 may initiate the Gateway Control Session Termination Procedure with PCRF 5110. Serving D-GW 5104 may provide information to enable PCRF 5110 to unambiguously identify the IP CAN session that may correspond to the Gateway Control Session. At 5120, serving D-GW 5104 may send a Delete Session Request message to anchoring D-GW 5106 to release the PDN connection of UE 5100 at anchoring D-GW 5106. This may be done, for example, in case the anchoring D-GW may not be the serving D-GW itself. A serving 5104 may be aware that anchoring D-GW 5106 may be for the PDN connection UE 5100 may have requested to disconnect from based on the information provided by MME 5108 at 5116.

At 5122, anchoring D-GW by 106 may initiate the PCEF-Initiated IP CAN Session Termination Procedure with PCRF 5110. Anchoring D-GW 5106 may provide information to enable PCRF 5110 to identify the IP CAN session. At 5124, anchoring D-GW 5106 may respond to serving D-GW 5104 with the result of the PDN connection release with a Delete Session Response. At 5126, serving D-GW by 104 may acknowledge with Delete Session Response. At 5128, MME 5108 may initiate the deactivation of all Bearers associated with the PDN connection to eNodeB 5102 by sending the Deactivate Bearer Request message to eNodeB 5102. This S1-AP message may carry the list of EPS bearers to be released. MME 5108 may build a NAS message Deactivate EPS Bearer Context Request that may include the EPS Bearer Identity, and may include it in the S1-AP Deactivate Bearer Request message.

At 5130, eNodeB 5102 may send the RRC Connection Reconfiguration message that may include the corresponding bearers to be released and the NAS Deactivate EPS Bearer Context Request message to UE 5100. At 5132, UE 5100 may release resources that may correspond to the PDN connection and may acknowledge this by sending the RRC Connection Reconfiguration Complete message to eNodeB 5102. At 5134, eNodeB 5102 may send an acknowledgement of the deactivation to MME 5108. At 5136, the UE NAS layer of UE 5100 may build a Deactivate EPS Bearer Context Accept message. UE 5100 may send a Direct Transfer message, such as a Deactivate EPS Bearer Context Accept message, to eNodeB 5102.

At 5138, eNodeB 5102 may send an Uplink NAS Transport message, such as a Deactivate EPS Bearer Context Accept message, to MME 5108. At a 5140, MME 5108 may send a Notify Request that may include information about the PDN terminated connection such as, APN, the IPv6 prefix that may be assigned to UE 5100, and anchoring D-GW identity, to HSS 5112. This may be requested to keep HSS 5112 updated on what addresses may be by UE 5100 and what D-GWs may be anchoring them. This may be done, for example, to provide address continuity in case UE 5100 may move. At 5142, HSS 5112 may remove the APN, IPv6 prefix figure signs, and the anchoring D-GW identity, and may send a Notify Response to MME 5108.

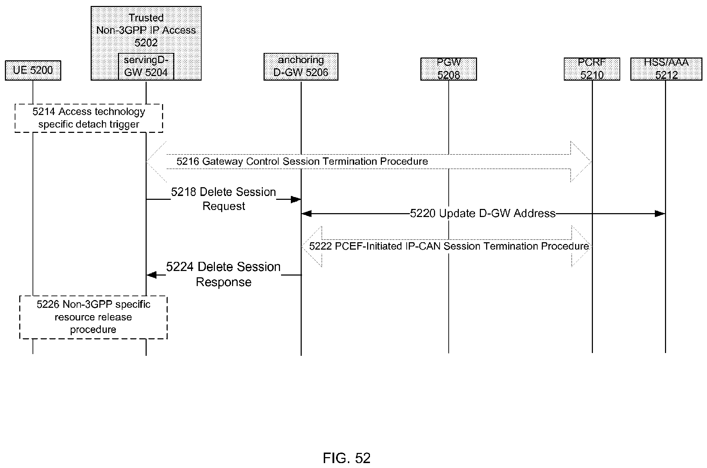

FIG. 52 depicts an example UE requested PDN disconnection procedure that may be from a trusted Non-3GPP IP access with GTP in a non-roaming architecture. This may be based on UE/Trusted Non-3GPP IP Access Network Initiated Detach and UE/Trusted Non-3GPP IP Access requested PDN Disconnection Procedure with PMIPv6. Interaction between the gateways and the PCRF in the procedures in FIG. 52 may occur if dynamic policy provisioning may be deployed; otherwise policy may be statically configured with the gateway.

At 5214, UE 5200 may trigger disconnection from a PDN by an access technology procedure. At 5216, serving D-GW 5204 may initiate the Gateway Control Session Termination Procedure with PCRF 5210. At 5218, the MAG functionality in serving D-GW 5204 may send a Delete Session Request message to anchoring D-GW 5206. Serving D-GW 5204 may be aware of anchoring D-GW 5206 based on the information it may have about IPv6 prefixes and associated anchoring D-GWs that may be used by UE 5200. This info may be retrieved after the UE attached/handed over to the serving D-GW.

At 5220, anchoring D-GW 5206 may inform AAA Server/HSS 5212 of the PDN disconnection, which may include information about the PDN terminated connection, such as APN, the IPv6 prefix that may be assigned to UE 5200, and anchoring D-GW identity. This may be requested to keep HSS 5212 updated on what may be the addresses that may be used by UE and what D-GWs may be anchoring them. This may be done, for example, to provide address continuity in case UE 5200 may move.

At 5222, anchoring D-GW 526 may delete the IP CAN session associated with UE 5200 and 10 may execute a PCEF-Initiated IP CAN Session Termination Procedure with PCRF 5210. At 5224, anchoring D-GW 5206 may respond with a Delete Session Response message to the MAG function at serving D-GW 5204. At 5226, a non-3GPP resource release procedure may be executed. The resources of Trusted Non-3GPP Access Network 5202 may be released.

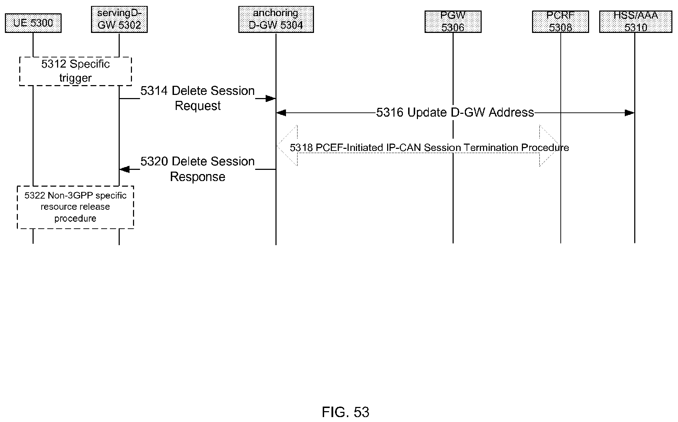

FIG. 53 depicts an example UE requested PDN disconnection procedure that may be from an untrusted non-3GPP IP access with GTP in a non-roaming architecture. The MSC may be based onUE/ePDG-initiated Detach Procedure and UE-Requested PDN Disconnection with PMIPv6 on S2b. Interaction between the gateways and the PCRF in the procedures in FIG. 53 may occur if dynamic policy provisioning may be deployed; otherwise policy may be statically configured with the gateway.

At 5312, UE 5300 may trigger disconnection from a PDN. This mechanism may be based on signaling at layer-3, such as neighbor discovery. At 5314, the MAG functionality in serving D-GW 5302 may send a Delete Session Request message to anchoring D-GW 5304. Serving D-GW 5302 may be aware of anchoring D-GW 5304 based on the local information it may have about IPv6 prefixes and associated anchoring D-GWs that may be used by UE 5300. This info may be retrieved after the UE attached/handed over to the serving D-GW.

At 5316, anchoring D-GW 5304 may inform the AAA Server/HSS 5310 of the PDN disconnection, which may include providing information about the PDN terminated connection such as, APN, the IPv6 prefix that may be assigned to UE 5300, anchoring D-GW identity. This may be requested to keep HSS 5310 updated on what addresses may be UE 5300 and what D-GWs may be entering them. This may be done, for example, to provide address continuity in case UE 5300 may move.

At 5318, anchoring D-GW 5304 may delete the IP CAN session associated with UE 5300 and may execute a PCEF-Initiated IP CAN Session Termination Procedure with PCRF 5308. At 5320, anchoring D-GW 5304 may delete existing entries from its Binding Cache and may send a Delete Session Response message to serving D-GW 5302. At 5322, a non-3GPP resource release procedure may be executed.

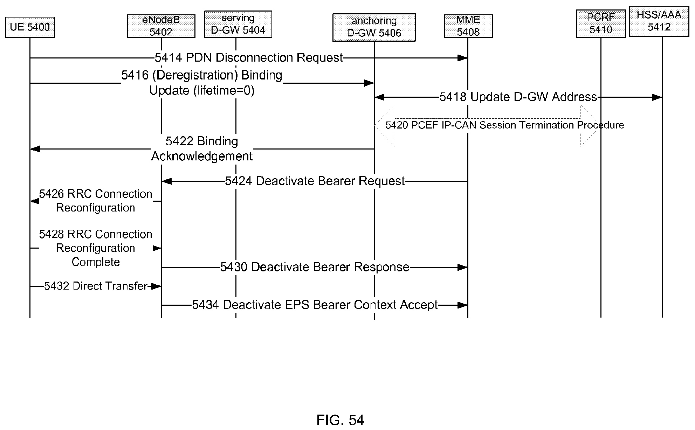

Client-based PDN disconnection procedures that may use DSMIPv6 may be provided. FIG. 54 depicts an example UE initiated PDN disconnection that may be used for 3GPP accesses with DSMIPv6 in a non-roaming architecture. Interaction between the gateways and the PCRF in the procedures in FIG. 54 may occur if dynamic policy provisioning may be deployed; otherwise policy may be statically configured with the gateway.

At 5414, UE 5400 may initiate the UE requested PDN disconnection procedure by the transmission of a PDN Disconnection Request message. This may be done, for example, to free the radio bearer resources associated to the PDN connection. At 5416, UE 5400 may send a de-registration Binding Update (e.g. HoA, Lifetime=0) to anchoring D-GW 5406. UE 5400 may track different anchoring D-GWs that may be associated with the IPv6 addresses UE 5400 may be using. This may be requested to refresh and remove the bindings as may be requested by the UE.

At 5418, anchoring D-GW 5406 may inform AAA Server/HSS 5412 of the PDN disconnection. At 5420, if there may be an active PCC session for UE 5400, anchoring D-GW 5406 may execute a PCEF-Initiated IP-CAN session Termination Procedure with PCRF 5410. At 5422, anchoring D-GW 5406 may send a Binding Acknowledgement. At 5424, MME 5408 may initiate the deactivation of all Bearers associated with the PDN connection to eNodeB 5402 by sending the Deactivate Bearer Request message to eNodeB 5402. This S1-AP message may carry the list of EPS bearers to be released. MME 5408 may build a NAS message Deactivate EPS Bearer Context Request that may include the EPS Bearer Identity, and may include it in the S1-AP Deactivate Bearer Request message. This message may be sent in a reply to the message received at 14, and may be sent before 5416, 5418, 5420, or 5422.

At 5426, eNodeB 5402 may send the RRC Connection Reconfiguration message that may include the corresponding bearers to be released and may include the NAS Deactivate EPS Bearer Context Request message to UE 5400. At 5428, UE 5400 may release resources that may correspond to the PDN connection and may acknowledge this by sending the RRC Connection Reconfiguration Complete message to eNodeB 5402.

At 5430, eNodeB 5402 may send an acknowledgement of the deactivation to MME 5408. At 5432, the UE NAS layer of UE 5400 may build a Deactivate EPS Bearer Context Accept message. UE 5400 may then send a Direct Transfer message, such as a Deactivate EPS Bearer Context Accept message, to eNodeB 5402. At 5434, eNodeB 5402 may send an Uplink NAS Transport message, such as a Deactivate EPS Bearer Context Accept message, to MME 5408.

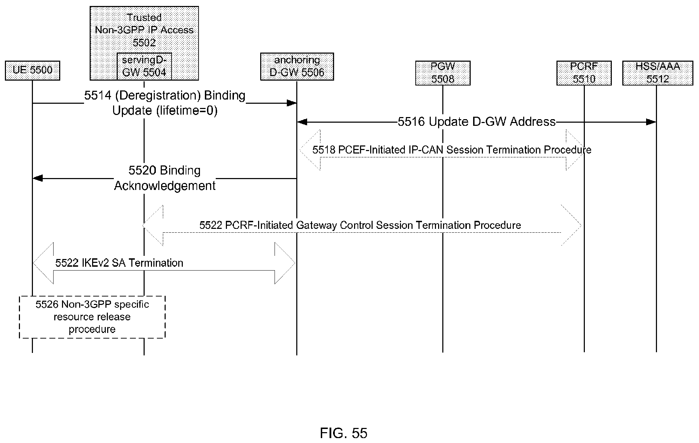

FIG. 55 depicts an example UE initiated PDN disconnection procedure that may be from a trusted non-3GPP IP access with DSMIPv6 in a non-roaming architecture. The MSC may be based on UE-Initiated PDN disconnection Procedure. Interaction between the gateways and the PCRF in the procedures in FIG. 55 may occur if dynamic policy provisioning may be deployed; otherwise policy may be statically configured with the gateway.

At 5514, UE 5500 may send a de-registration Binding Update (e.g. HoA, Lifetime=0) to anchoring D-GW 5506. UE 5500 may track different anchoring D-GWs that may be associated with the IPv6 addresses UE 5500 may be using. This may be used to refresh and remove the bindings as quested by the UE. At 5516, anchoring D-GW 5506 may inform AAA Server/HSS 5512 of the PDN disconnection.

At 5518, if there may be an active PCC session for UE 5500, anchoring D-GW 5506 may execute a PCEF-Initiated IP-CAN session Termination Procedure with PCRF 5510. At 5520, anchoring D-GW 5506 may send a Binding Acknowledgement. At 5522, PCRF 5510 may remove active QoS rules which may refer to the Home Address. PCRF 5510 may execute a PCRF-Initiated Gateway Control Session Termination Procedure with Trusted Non-3GPP IP Access 5502. This may occur where there may not be QoS rules remaining for UE 5500 at the trusted non-3GPP access and the GW control session termination may be executed. Where there may be active QoS rules for UE 5500, the GW control session termination procedure may be replaced by a QoS rule provision procedure.

At 5524, UE 5500 may terminate the IKEv2 security association for the given PDN. At 5526, after IKEv2 SA termination, a non-3GPP resource release procedure may be executed.

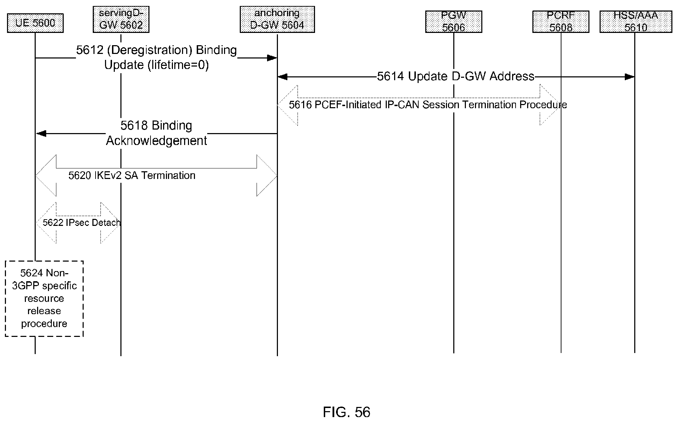

FIG. 56 depicts a UE-initiated PDN disconnection procedure that may be in Untrusted Non-3GPP IP access with DSMIPv6 in a Non-Roaming Architecture. The MSC may be based on UE-Initiated PDN disconnection Procedure. Interaction between the gateways and the PCRF in the procedures in FIG. 56 may occur if dynamic policy provisioning may be deployed; otherwise policy may be statically configured with the gateway.

At 5612, UE 5600 may send a de-registration Binding Update (e.g. HoA, Lifetime=0) to anchoring D-GW 5604. UE 5600 may track different anchoring D-GWs that may be associated with the IPv6 addresses UE 5600 may be using. This may be used to refresh and remove the bindings as requested by UE 5600. At 5614, anchoring D-GW 5604 may inform the AAA Server/HSS 5618 of the PDN disconnection. At 5616, if there may be an active PCC session for UE 5600, anchoring D-GW 5604 may execute a PCEF-Initiated IP-CAN session Termination Procedure with PCRF 5608. At 5618, anchoring D-GW 5604 may send a Binding Acknowledgement. At 5620, UE 5600 may terminate the IKEv2 security association for the given PDN. At 5622, if after 5620, UE 5600 may not have other PDN sessions, and UE 5600 may terminate the IPsec tunnel to serving D-GW 5602. At 5624, After IPsec tunnel termination, non-3GPP specific resource release procedure may be executed.

Methods, apparatus and systems are described for supporting distributed and dynamic mobility management features, including for nodes, functions and interfaces. In particular, a distributed gateway (D-GW) is described which may be a logical entity implementing functionality of a PDN gateway (PGW) along with additional functionality for supporting distributed mobility management (DMM). Interfaces are provided allowing the D-GW to communicate with various network nodes.

For example, an apparatus may include a distributed mobility management gateway. The distributed mobility management gateway may be a distributed logical entity. The distributed mobility management gateway to may be configured to selectively implement mobile access gateway (MAG) functionality and to selectively implement local mobility anchor (LMA) functionality. The gateway may be configured to selectively implement DSMIPv6 home agent functionality. The gateway may be configured to selectively implement packet data network (PDN) gateway (PGW) functionality. The distributed mobility management gateway may be collocated with at least one 3GPP network node. The at least one 3GPP network node may include one of more of a Home eNode B, a local gateway, a packet gateway, an enhanced packet data gateway, and a serving gateway.

As another example, a method may include receiving, by a distributed gateway (D-GW) a PDN connection request from a mobile node attached to a first access network; assigning, by the D-GW, an IPv6 prefix from a pool of prefixes to the mobile node; and updating, by the D-GW, the home subscriber server (HSS) to identify the IPv6 prefix assigned to the mobile node and to provide the HSS with a D-GW identifier. Packets may be routed and received to and from the mobile node. A tunnel established with a second D-GW when the mobile node moves and attaches to a second access network. Network traffic may be forwarded to the mobile node through the tunnel. A PDN connection may be requested by a mobile node attached to a first access network.

An assigned IPv6 prefix; maybe received from a first distributed gateway (D-GW). A first IPv6 address may be auto configured by the mobile node. Mobile node may send IPv6 packets through the first D-GW. An attachment may be made to a second access network. A PDN connection may be established with a second D-GW that may be associated with the second access network. This may be done, for example, to obtain a second IPv6 address. Connections relying on the first IPv6 address may be maintained.

Signaling interfaces between the D-GW and other network nodes may carry messages between the D-GW and the network nodes. The other network nodes may include one or more of the mobile node, policy charging and rules function (PCRF), evolved packet data gateway (ePDG), authentication, authorization and accounting (AAA) server, and other D-GWs.

Proxy Mobile IPv6 (PMIPv6) may provide network based mobility management to hosts connecting to a PMIPv6 domain. PMIPv6 introduces two new functional entities, the Local Mobility Anchor (LMA) and the Mobile Access Gateway (MAG). The MAG is the entity detecting Mobile Node's (MN) attachment and providing IP connectivity. The LMA is the entity assigning one or more Home Network Prefixes (HNPs) to the MN and is the topological anchor for all traffic belonging to the MN. PMIPv6 allows an MN to connect to the same PMIPv6 domain through different interfaces. The "logical interface" at the IP layer may enable packet transmission and reception over different physical media. This technique can be used to achieve flow mobility, i.e., the movement of selected flows from one access technology to another (such as cellular to non-cellular and vice versa, for example).

Methods, apparatus, and systems for supporting IP mobility management may be provided. For example, systems and methods described herein may relate to the detection and discovering of the capabilities that may support dynamic IP mobility management features on mobile nodes (i.e., WRTUs) and networks.

IP flow mobility support in PMIPv6 and GTP using logical interface may be provided. A Logical Interface (LIF) may be a construct internal to the operating system or connection manager. LIF may be used to implement NBIFOM, S2A Mobility based on GTP (SAMOG), or the like. The LIF at the IP layer may hide the use of different physical media from the IP stack, and may enable a mobile node (MN), such as a WRTU, to send and receive packets over different interfaces.

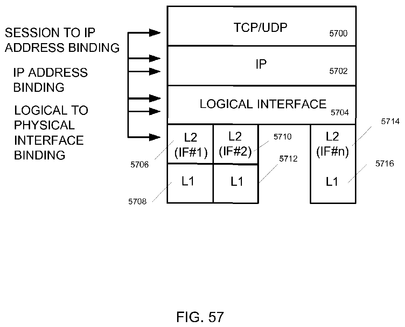

FIG. 57 depicts an example of a Logical Interface Implementation on a mobile node. For example, FIG. 57 depicts a Logical Interface that may be implemented on a MN. Proxy Mobile IPv6 (PMIP) and GPRS Tunneling Protocol (GTP) network-based IP flow mobility techniques may request the existence of a LIF at the mobile-node MN. As shown in FIG. 57 a MN may include TCP/UDP at 5700, IP at 5702, and a logical interface at 5704. Logical interface 5704 may provide logical to physical interface binding such that L1 at 5706 may interface with L1 at 5708, L2 at 5710 may interface with L1 at 5712, and L2 at 5714 may interface with L1 at 5716.

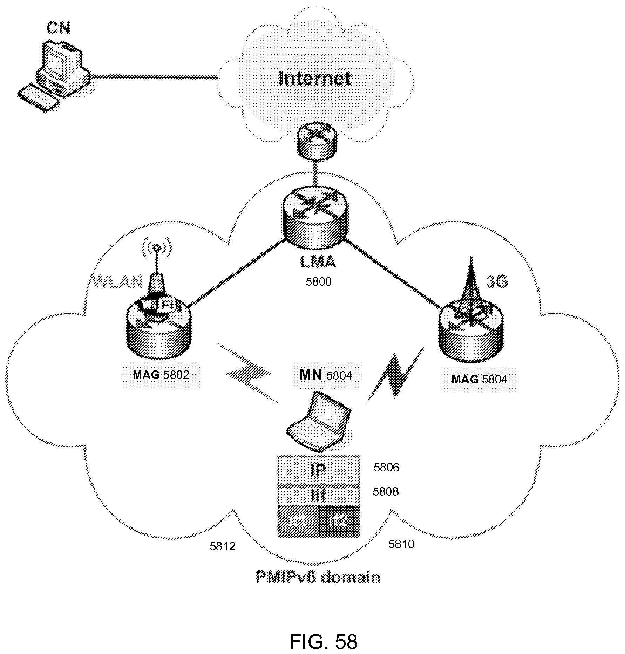

FIG. 58 depicts an example of a Network-Based IP Flow Mobility (NBIFOM) architecture. As shown in FIG. 58, the architecture may include an anchor point (Local Mobility Anchor (LMA)) at 5800, two access gateways (Mobile Access Gateway (MAG)) at 5802 and 5804, and a multi-interfaced mobile node (MN) at 5804 that may connect to both accesses. For example, the mobile node at 5804 may connect to the MAG at 5804 using 3G and may connect to MAG at 5802 using Wi-Fi. MN 5804 may include IP 5806, 5805, IF 5812, and IF 5810. IF 5810 may be an interface that may allow MN 5804 to use 3G and/or communicate with MAG 5804. IF 5812 may be an interface that may allow MN 5804 to use WLAN and/or communicate with MAG 5802. While PMIP may be illustrated, GTP may also be used. Mobile IPv6 and Proxy Mobile IPv6 approaches may use centralized entities for both control and data plane operation. Distributed mobility management (DMM) approaches may push mobility anchors towards the edge of the network.

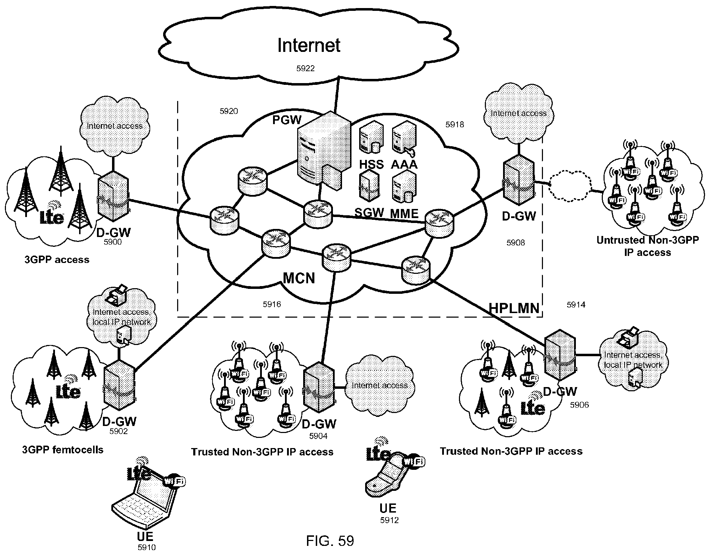

FIG. 59 depicts an example of a DMM-based network architecture. As shown FIG. 59 a distributed Gateway (D-GW) logical entity may be placed at the edge of the network, close to the UE (i.e., a WRTU). Multiple D-GWs may exist in a DMM domain that may anchor mobility sessions of the UEs attached to the domain.

The architecture may include a number of D-GWs such as, D-GW 5900, D-GW 5902, D-GW 5904, D-GW 5906, and D-GW 5908. D-GW 5900 may have and/or may provide 3GPP access and may be connected to Internet access. D-GW 5902 may have and/or may provide 3GPP access via femtocells and may be connected to Internet access. D-GW 5904, D-GW 5906, and D-GW 5908 may have and/or may provide trusted non-3GPP access and may be connected to Internet access. D-GW 5900, D-GW 5902, D-GW 5904, D-GW 5906, and D-GW 5908 may be operatively connected to MCN 5916.

HPLMN 5914 may include MCN 5916 and D-GW 5908. MCN 5916 may include PGW 5920, and HSS, AAA, SGW, and MME at 5918. PGW 5920 may be operatively connected to internet 5922.

Network entities and the UE may have means to find out about their DMM capabilities. For example, a D-GW may request to know if a particular UE may be DMM enabled. A UE may request to know if the visited network may be DMM-enabled. This may occur, for example, in roaming scenarios since a UE may move from a DMM-capable network to a non DMM-capable network.

The UE may indicate its DMM capabilities to the network, which may decides whether a PDN connection request may or may not be handled locally. When handled locally, a DMM mode of operation may be used. When not handled locally, legacy centralized mode of operation may be used. The UE may request to be informed how the PDN connection may be handled, and the network may convey that information to the UE. There may be a number of ways for the mobile node and the network to indicate if they may or may not support DMM and the mode of operation for a given PDN connection. The UE may be made aware of the DMM capabilities of the visited network, for example, in roaming situations, as the UE may attach to a network which m not support DMM.

Distributed mobility management may be provided. A UE may be able to provide an indication of its DMM capabilities. For example, before L3 attachment may take place, the UE may connect at L2 with the network. L2 signaling may be used to inform the network of the DMM capabilities of the UE. The access network (e.g., eNodeB, 802.11 AP, etc) may retrieve that information and may conveys it to the MME or D-GW (depending on whether it is a 3GPP or a non-3GPP attach). With this information, the network (in case it is also DMM-capable) may decide whether it may or may not handle the PDN connection that may be requested by the UE and may involve a DMM operation. Authentication signaling may be used for this purpose.

In addition to informing about whether the UE may be DMM-capable or not, the UE may also inform about whether it supports client, network-based DMM or both. For a centralized network or host based IP mobility support, the network may request knowledge of the capabilities of the UE to perform IP Mobility Management Selection (IPMS). The network, based on its capabilities and the capabilities of the UE, may decide if the PDN connection may or may not be handled. If the PDN connection may be handled a DMM operation may be performed. If the PDN connection may not be handled a legacy centralized operation may be performed. This information may be conveyed back to the UE as part of the L2/authentication signaling.

When a UE attaches to a network which may not support DMM, the UE may know that established connections may be disrupted if the network-based solution may be used, or that local IPv6 prefixes may not survive a handoff (as the current network may not support DMM). If a network may not understand the UE indication about the DMM capabilities, the UE may not get back any information about DMM support from the network either. This may be interpreted by the UE as an implicit indication of that the attached network may not be DMM-capable. L2 advertisement of DMM capabilities from the network may also be used by the UE to learn about it.

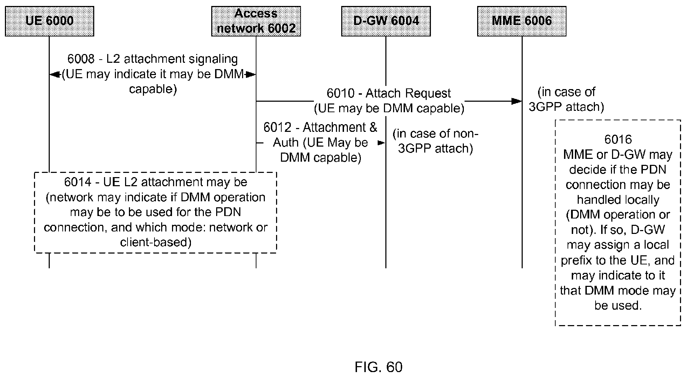

FIG. 60 depicts an example of L2 signaling that may be used to inform the network of the DMM capabilities of the UE. As shown in FIG. 60, at 6008, L2 attachment signaling may occur between UE 6000 and access network 6002. UE 6000 may indicate it may be DMM capable. In case of a 3GPP attach, at 6010, access network 6002 may transmit an attach request message to MME 6006. The attach request message may indicate that UE 6000 may be DMM capable. In case of a non-3GPP attach, at 6012 access network 6002 may transmit an attachment an authentication request to D-GW 6004.

At 6016, MME 6006 or D-GW 6004 may decide if the PDN connection may or may not be handled via a DMM operation. If the PDN connection may be handled via a DMM operation, D-GW 6004 may assign a local prefix to UE 6000, and may indicate to UE 6000 that DMM mode may be used. At 6014, UE L2 attachment may be complete. Access network 6002 may indicate if DMM operation may be used for the PDN connection and which mode, such as a network or client-based mode, maybe used.

The UE may rely on L3 signaling to convey its capabilities to the network. For example, the information may be sent with a Router Solicitation (RS) bit, RS option, or over a DHCP request. As in the Layer-2 case, the network may have to decide, based on its own and the UE capabilities, how to handle the PDN connection, and may indicate it to the UE. This information may be sent with a Router Advertisement (RA) or as part of the DHCP signaling.

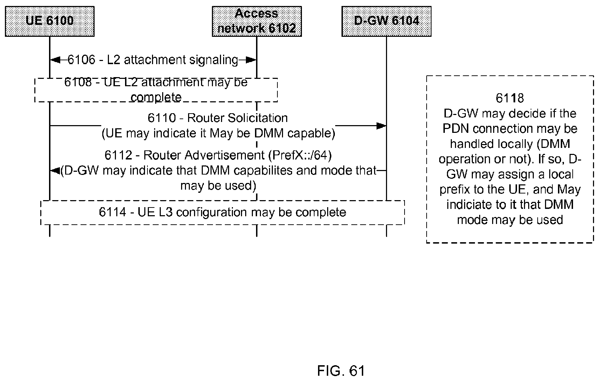

FIG. 61 depicts an example of L3 signaling that may be used to inform the network of the DMM capabilities of the UE. As shown in FIG. 61, at 6106, L2 attachment signaling may occur between UE 6100 and access network 6102. At 6108 UE L2 attachment may be complete. At 6110, UE 6100 a router solicitation message to D-GW 6104, which may be used to indicate that UE 6100 may be DMM capable. At 6118, D-GW 6104 may decide if the PDN connection may or may not be handled via a DMM operation. If the PDN connection may be handled, D-GW 61040 may assign a local prefix to UE 6100 and may indicate to UE 6100 that DMM mode may be used. At 6112, D-GW 6104 may transmit a router advertisement to UE 6100, which D-GW may use to indicate that DMM capabilities may be used. The router advertisement may also be used to indicate the DMM mode to be used. At 6114, UE L3 configuration may be complete.

This mechanism may be used when the UE attaches to a non-3GPP access. For the case of 3GPP attach, the decision about whether the PDN connection may be handled may occur before the L3 attachment may be initiated. For example, the decision may occur before the MN may be able to send any L3 packet, such as a Router Solicitation.

Network capabilities advertisement may be provided. Using L2 signaling, the network may advertise its capabilities right at L2 attachment. This may be done with native L2 signaling (e.g. 3GPP, 802.11) or other (e.g. 802.21). This may also be done for example, as how described herein for NBIFOM. This information may be used by the UE to know whether it may request a PDN connection to be handled via a DMM operation. This may be done, for example, for the cases where the UE may move to a network that may not support DMM, as ongoing sessions may be disrupted, or additional mobility mechanisms may be triggered to ensure session continuity in a non-DMM way.

There may be scenarios in which a UE may get multiple IP attachments to different network anchors at different times (i.e. multi-homed MN). For example, a UE may get attached to the network, may request a PDN connection (which may be handled in a centralized way), and may later decide (e.g. based on the DMM capabilities of the attached network) to request a subsequent PDN connection to be handled in a DMM way. The UE may learn the DMM capabilities of the network, which may be done after or during attachment. The network may perform capabilities advertisement using Layer 2, Layer 3 (e.g., Router Advertisements, ICMP, etc.), or higher layers.

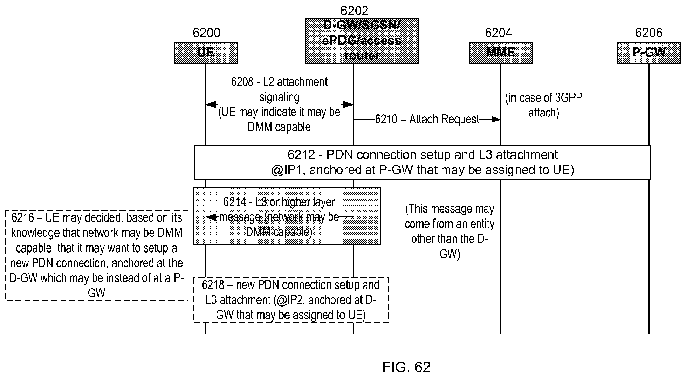

FIG. 62 depicts an example of network capability advertisement using L3 or higher messaging. At 6208, L2 attachment signaling may occur between UE 6200 and D-GW 6202, which may be a D-GW, SGSN, eDPG, or access router. The L2 attachment signaling may be by UE 6200 to indicate that UE 6200 may be DMM capable. At 6210, D-GW 6202 may transmit an attach request message to MME 6204. This may occur, for example, in the case of a 3GPP attach. At 6212, a PDN connection may be set up and L3 attachment may occur. For example, an IP anchored at P-GW may be assigned to UE 6200. At 6214, D-GW 6202 may transmit a L3 or higher layer message to UE 6200, which may indicate that the network may be DMM capable. This message may come from an entity other than the D-GW. At 6216, UE 6200 may decide based on its knowledge that the network may be DMM capable that it may want to set up a PDN connection, which may be anchored at D-GW 6202 instead of at P-GW 6206. At 6218, a PDN connection may be set up and L3 attachment may occur such that UE 6200 may be assigned and IP address that may be anchored at D-GW 6202.

Network-Based Flow Mobility (NBIFOM) may be provided. Network-Based IP Flow Mobility (NBIFOM) may provide IP flow mobility with less signaling than a client-based DSMIP solution. NBIFOM may impose less complexity in the mobile node protocol stack and may allow flow mobility initiation from either mobile or network side. For NBIFOM to be implemented, the network and mobile side may request to be aware that the NBIFOM support may be present. As described herein, systems and methods described herein may support NBIFOM capability discovery in both the network and mobile node.

Mechanisms may be used to inform the network about the LIF support on the mobile side. These mechanisms may use, for example, explicit and/or implicit ways to inform the network about the support of the LIF at the mobile side. The network may assign IP addresses or prefixes in a number of ways, which may depend on how capability is reported. As described herein, methods and apparatus may be used to enable a mobile node to determine whether the network may or may not be NBIFOM capable.

While PMIPv6 examples may be provided, similar functionality may be achieved with GTP or other mobility protocols. Additionally, concepts described may be used to provide cellular and Wi-Fi mobility.

MN may provide indication of NBIFOM capabilities. Before layer 3 (L3) attachment may take place, an MN may connect at L2 with the network. L2 signaling may be used to inform the network of the NBIFOM capabilities in the mobile node. L2 signaling may be 802.11 signaling, GPRS attach, UE Classmark, Radio Access Capability IE, extensible authentication protocol method for UMTS authentication and key agreement (EAP-AKA), extensible authentication protocol method for GSM subscriber identity module (EAP-SIM), or the like. When this information may be conveyed to an Access Gateway (e.g., MAG, trusted WLAN access gateway (TWAG), or the like), it may be forwarded to the Anchor so that it may assign the addresses to the mobile.

A wireless transmit/receive unit (WTRU) may transmit a layer two attachment signal to a network node to indicate a cellular network or wireless local area network (LAN) based mobility capability of the WTRU. An attachment may be made to the network node via layer two. The cellular network or wireless LAN based mobility capability may be a capability for S2a mobility based on GTP (SAMOG), a capability for network-based IP flow mobility (NBIFOM), or the like. The network node may be a mobile access gateway (MAG), a trusted wireless LAN access gateway (TWAG), or the like. A router solicitation message may be transmitted. A router advertisement message may be received. The router advertisement message may include a prefix assigned to the WTRU. Layer three accesses may be configured using the IPv6 prefix.

A network access node may receive a layer two attachment signal from a mobile node that may indicate a cellular network or wireless local area network (LAN) based mobility capability of the mobile node. A layer two attachment process may be performed. The cellular network or wireless LAN based mobility capability may be a capability for S2a mobility based on GTP (SAMOG), a capability for network-based IP flow mobility (NBIFOM), or the like. A router solicitation message may be received. A proxy binding update message that may indicate that the cellular network or wireless LAN based mobility capability of the mobile node may be transmitted. A proxy binding acknowledgement message that may include a prefix assigned to the mobile node may be received. A router advertisement message that may include the prefix assigned to the mobile node may be transmitted.

A message may be received that may indicate a cellular network or wireless local area network (LAN) based mobility capability of a mobile node. A prefix may be assigned to the mobile node based on the cellular network or wireless LAN based mobility capability of the mobile node. The cellular network or wireless LAN based mobility capability may be a capability for NBIFOM. The message may be a proxy binding update message. The mobile node may be registered in a binding cache. A proxy binding acknowledgment may be transmitted to a second network node that may include the prefix assigned to the mobile node. The network node may be a mobile access gateway.

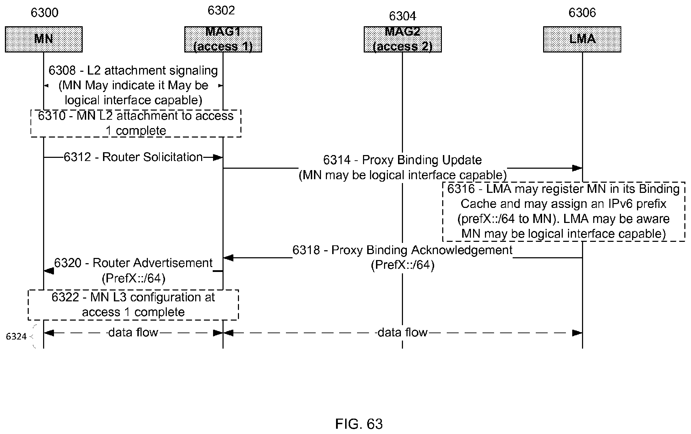

FIG. 63 depicts an example of a message flow for indicating mobile node capability using Layer 2 signaling. This may be done, for example, to allow UE-network capability negotiation, such as a negotiation for logical interface (LIF) capabilities and/or Network-based IP mobility capabilities, such as Network-based IP flow mobility (NBIFOM) capabilities, Network-based IP mobility capabilities using interface S2a, Network-based IP mobility capabilities using S2b, SAMOG capabilities, or the like. This may be done, for example, to allow a MN to inform a network of its interfaces capabilities such as logical interface (LIF) capabilities and/or Network-based IP mobility capabilities, such as Network-based IP flow mobility (NBIFOM) capabilities, Network-based IP mobility capabilities using interface S2a, Network-based IP mobility capabilities using S2b, SAMOG capabilities, or the like. This MN may be a UE, WTRU, or the like.

At 6308, L2 attachment signaling may occur between MN 6300, which may be an UE, and MAG 1 at 6302. L2 signaling may be 802.11 signaling, GPRS attach, UE Classmark, Radio Access Capability IE, extensible authentication protocol method for UMTS authentication and key agreement (EAP-AKA), extensible authentication protocol method for GSM subscriber identity module (EAP-SIM), or the like. MN 6300 may use L2 attachment signaling to indicate that MN 6300 may support network-based IP mobility and/or be logical interface capable. At 6310 MN L2 attachment to access 1 that may belong to MAG 1 at 6302 may be complete. At 6312, MN 6300 may transmit a L3 message to trigger mobility, such as a router solicitation message, or DHCP request to MAG 1 at 6302. At 6314, MAG 1 at 6302 may transmit a proxy binding update to LMA 6306, which may indicate that MN 6300 may support network-based IP mobility and/or be logical interface capable. At 6316, LMA 6306 may register MN in its binding cache and may assign an IPv6 prefix (prefX::/64) or IPv4 address to MN. LMA 6306 may also be aware that MN may support network-based IP mobility and/or be logical interface capable and may be able to derive this information from the MN identifier and its subscription information. At 6318, LMA 6306 may transmit a proxy binding acknowledgment (PrefX::/64) message to MAG 1 at 6302. The proxy binding acknowledgment message may include the IPv6 prefix or IPv4 address that may be assigned to MN 6300. At 6320, MAG 1 at 6302 may transmit a router advertisement message (PrefXL::/64) or DHCP response to MN 6300. The router advertisement message may include the IPv6 prefix that may be assigned to MN 6300. At 6322, L3 configuration at access 1 for MN 6300 may be complete. At 6324, data may flow between MN 6300 and MAG 1 at 6302, and may flow between MAG 1 at 6302 and LMA 6306.

The PBU may be trigged by MAG 1 upon L2 attachment. This may occur without waiting for a RS from MN 6300. Additionally, conveying the support for network-based IP mobility and/or the logical interface capabilities of MN in the PBU is just one example; other out of band signaling means, such as other communication protocols, may be used.

Although a MAG and PMIPv6-enabled network may be depicted in FIG. 63, another entity may be used to provide similar functionality, such as a ePDG, or TWAG in a SaMOG-enabled network. Additionally, FIG. 63 may be applicable to other Network-based IP mobility functionalities, such as Network-based IP flow mobility (NBIFOM), Network-based IP mobility using interface S2a, Network-based IP mobility using S2b, SAMOG, or the like. For example, the MN, which may be a UE, may negotiate SAMOG capabilities with a serving TWAN during L2 signaling, such as EAP authentication and authorization proceeding. The TWAN may send the UE requested SAMOG capabilities and TWAN configuration policies to a 3GPP AAA server over STa interface. The 3GPP AAA server may decide whether the capabilities may or may not apply to the UE session on the TWAN based on the subscription policy of the UE and the TWAN policies.

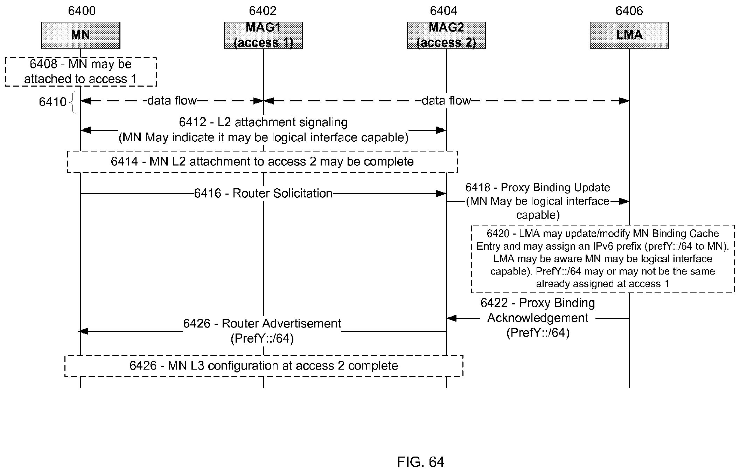

FIG. 64 depicts an example of a mobile node (MN) that may announce its logical interface (LIF) capabilities and/or Network-based IP mobility capabilities, such as Network-based IP flow mobility (NBIFOM) capabilities, Network-based IP mobility capabilities using interface S2a, Network-based IP mobility capabilities using S2b, SAMOG capabilities, or the like on subsequent L2 attachments of other interfaces. The MN may inform its NBIFOM and/or LIF capabilities on subsequent L2 attachments of other interfaces, as shown in FIG. 64. Although a MAG may be depicted in FIG. 64, another entity may be used to provide similar functionality, such as a TWAG or ePDG. At 6408, MN 6400 may be attached to access 1, which may be associated with MAG1 at 6402. At 6410, data may flow between MN 6400 and MAG1 at 6402, and may flow between MAG1 at 6402 and LMA 6406. At 6412, MN 6400 and MAG2 at 6404 may perform L2 attachment signaling. MN 6400 may use L2 attachment signaling to indicate it may be logical interface capable. At 6414, MN 6400 L2 attachment to access 2 may be complete. At 6416, MN 6400 may transmit a router solicitation message to MAG2 at 6404. At 6418, MAG2 at 6404 may transmit a proxy binding update message, which may indicate that MN may be logical interface capable, to LMA 6406. At 6420, LMA 6406 may update and/or modify a MN binding cache entry and may assign an IPv6 prefix, such as prefY::/64, to MN 6400. LMA 6406 may be aware that MN 6400 may be logical interface capable. The IPv6 prefix that may be assigned to MN 6400, such as PrefY::/64, may be the same as the IPv6 prefix that may have been assigned at access 1. At 6422, LMA 6406 may transmit a proxy binding acknowledgment message to MAG2 at 6404. The proxy binding acknowledgment message may include the IPv6 prefix that may have been assigned to MN 6400. At 6424, MAG2 may transmit a router advertisement message to MN 6400. The router advertisement message may include the IPv6 prefix that may have been assigned to MN 6400. At 6426, MN 6400 L3 configuration at access 2 may be complete.

The PDU may be triggered by MAG2 upon L2 attachment. This may occur without waiting for a RS from MN 6400. Additionally, conveying the logical interface capabilities of MN in the PBU is just one example; other out of band signaling mechanisms may also be used. More than one prefix may be assigned by the LMA to MN on access 2. Knowledge of MN logical interface capabilities may be used at the LMA when deciding which prefix may be assigned at access 2. For example, a shared, unique, or hybrid mode may be selected.

Although a MAG and PMIPv6-enabled network may be depicted in FIG. 64, another entity may be used to provide similar functionality, such as a TWAG in a SaMOG-enabled network. Additionally, FIG. 64 may be applicable to other Network-based IP mobility functionalities, such as Network-based IP flow mobility (NBIFOM), Network-based IP mobility using interface S2a, Network-based IP mobility using S2b, SAMOG, or the like. For example, the MN, which may be a UE, may negotiate SAMOG capabilities with a serving TWAN during L2 signaling, such as EAP authentication and authorization proceeding. The TWAN may send the UE requested SAMOG capabilities and TWAN configuration policies to a 3GPP AAA server over STa interface. The 3GPP AAA server may decide whether the capabilities may or may not apply to the UE session on the TWAN based on the subscription policy of the UE and the TWAN policies.

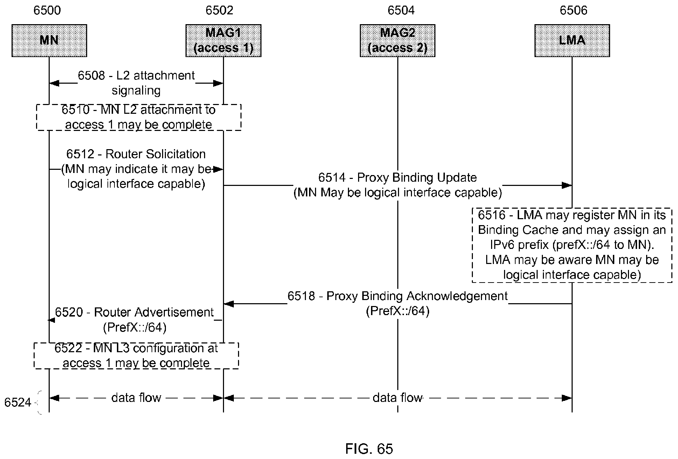

L3 signaling may be used to inform the network of the NBIFOM capabilities in the mobile node. FIG. 65 shows an example when the MN indicated its capabilities with a RS. At 6508, L2 attachment signaling may occur between MN 6500 and MAG1 at 6502. MAG1 at 6502 may be associated with access 1. At 6510, MN 6500 L2 attachment to access 1 may be complete. At 6512, MN 6500 may transmit a router solicitation message to MAG1 at 6502. MN 6500 may use the router solicitation message to indicate MN 6500 may be logical interface capable. At 6514, MAG1 at 6502 may transmit a proxy binding update message to LMA 6506. The transmit binding update message may indicate that MN 6500 may be logical interface capable. At 6516, LMA 6506 may register MN 6500 and its binding cache and may assign an IPv6 prefix, such as prefX::/64, to MN 6500. LMA 6506 may be aware that MN may be logical interface capable. At 6518, LMA 6506 may transmit a proxy binding acknowledgment message to MAG1 at 6502. The proxy binding acknowledgement message may include the IPv6 prefix that may have been assigned to MN 6500. At 6520, MAG1 at 6502 may transmit a router advertisement message to MN 6500. The router advertisement message may include the IPv6 prefix that may have been assigned to MN 6500. At 6522, MN 6500 L3 configuration at access 1 may be complete. At 6524, data may flow between MN 6500 and MAG1 at 6502, and may flow between MAG1 at 6502 and LMA 6506.

The PDU may be triggered by MAG1 upon L2 attachment. This may occur, for example, without waiting for a RS from MN 6500. Conveying the logical interface capabilities of MN 6500 may be just one example; other out of band signaling mechanisms may also be used. More than one prefix may be assigned by the LMA to MN 6500.

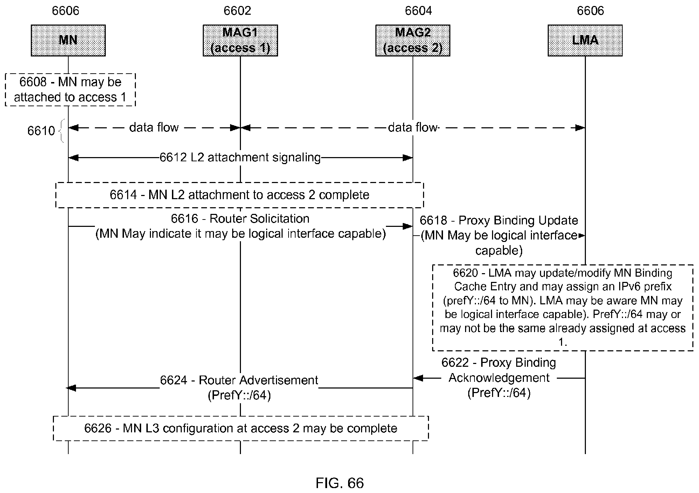

FIG. 66 depicts an example network-based control plane that may use PMIPv6 and may be used with E-UTRAN 3GPP access. MN capabilities may not be reported on the first attachment, but may be reported on subsequent attachments, which may be illustrated in FIG. 66 When the LMA learns about the MN capabilities it may decide whether to assign the same or a different IP address(es) or prefix(es) on the different accesses.

As shown in FIG. 66, at 6608 MN 6600 may be attached to access 1. At 6610, data may flow between MN 6600 and MAG1 at 6602, and may flow between MAG1 at 6602 and LMA 6606. MAG1 at 6602 may be associated with access 1. At 6612, L2 attachment signaling may occur between MN 6600 and MAG2 at 6604. MAG2 at 6604 may be associated with access 2. At 6614, MN 6600 L2 attachment to access 2 may be complete. At 6616, MN 6600 may transmit a router solicitation message to MAG2 at 6604. The router solicitation message may be used by MN 6600 to indicate that MN 6600 may be logical interface capable. At 6618, MAG2 at 6604 may transmit a proxy binding update message to LMA 6606. The proxy binding update message may indicate that MN 6600 may be logical interface capable. At 6620, LMA 6606 may update and/or modify a binding cache entry for MN 6600 and may assign an IPv6 prefix, such as prefY::/64, to MN 6600. LMA 6604 may be aware that MN 6600 may be logical interface capable. The IPv6 prefix may be the same as an IPv6 prefix that may have been assigned at access 1, or may be a different prefix. At 6622, LMA 6606 may transmit a proxy binding acknowledgment message to MAG2 at 6604. The proxy binding acknowledgment message may include the IPv6 prefix that may be assigned to MN 6606. At 6624, MAG2 6604 may transmit a router advertisement to MN 6600. The router advertisement message may include the IPv6 prefix that may be assigned to MN 6606. At 6626, MN 6600 L3 configuration at access 2 may be complete.

The PDU may be triggered by MAG2 upon L2 attachment. This may occur, for example, without waiting for a RS from MN. Conveying the logical interface capabilities of MN in the PDU may be just one example; other out of band signaling mechanisms may also be used. More than one prefix may be assigned by the LMA to MN on access 2. Knowledge of the logical interface capabilities of MN may be used by the LMA when deciding which prefix may be assigned.

In some embodiments, explicit L3 or higher signaling may occur after L3 attachment. For example, a MN may report its capabilities after the L3 attachment may have been completed with messages such as Neighbor Discovery messages, DHCP extensions, ICMP messages, or the like. Depending on the nature of the L3 message, it may be sent to the MAG and may be relayed to the LMA (e.g. with a PBU), or may be sent to the LMA.

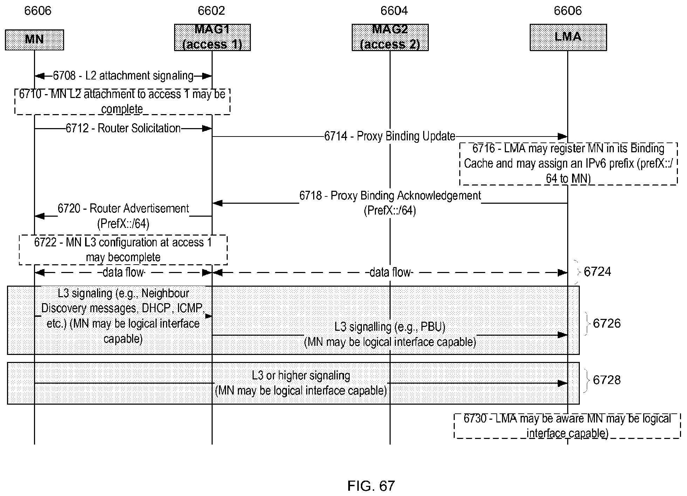

FIG. 67 depicts an example of indicating user equipment (UE) capability using L3 signaling. At 6708, L2 attachment signaling may occur between MN 6700 and MAG1 at 6702. MAG1 at 6702 may be associated with access 1. At 6710, MN 6700 L2 attachment to access 1 may be complete. At 6712, MN 6700 may transmit a router solicitation message to MAG1 at 6702. At 6714, MAG1 at 6702 may transmit a proxy binding update message to LMA 6706. At 6716, LMA 6706 may register MN 6700 and its binding cache and may assign an IPv6 prefix, such as prefX::/64 to MN 6700. At 6718, LMA 6706 may transmit a proxy binding acknowledgment message to MAG1 6702. The proxy binding acknowledgment message may include the IPv6 prefix that may be assigned to MN 6700. At 6720, MAG1 at 6702 may transmit a router advertisement message to MN 6700. The router advertisement message may include the IPv6 prefix that may be assigned to MN 6700. At 6722, MN 6700 L3 configuration at access 1 may be complete. At 6724, data may flow between MN 6700 and MAG1 at 6702, and between MAG1 at 6702 and LMA 6706.

At 6726, L3 signaling, such as neighbor discovery messages, DHCP, ICMP, PBU, or the like may occur between MN 6700 and MAG1 at 6702, and/or between MAG1 at 6702 and LMA 6706. For example, MN 6700 may use L3 signaling to indicate to MAG1 at 6702 that MN 6700 may be logical interface capable. MAG1 at 6702 may use L3 signaling to indicate to LMA 6706 that MN 6700 may be logical interface capable.

At 6728, MN 6700 may use L3 or higher layer signaling to indicate that MN 6700 may be logical interface capable. For example, MN 6700 may use L3 or higher layer signaling to notify LMA 6706 that MN 6700 may be logical interface capable.

The PBU may be triggered by MAG1 upon L2 attachment. This may occur, for example, without waiting for a RS from MN. Giving the logical interface capabilities of MN in the PBU may just be one example; other out of bounds signaling mechanisms may also be used. More than one prefix may be assigned by the LMA to MN on access 1. In an embodiment, either 6276 or 6278 may be performed.

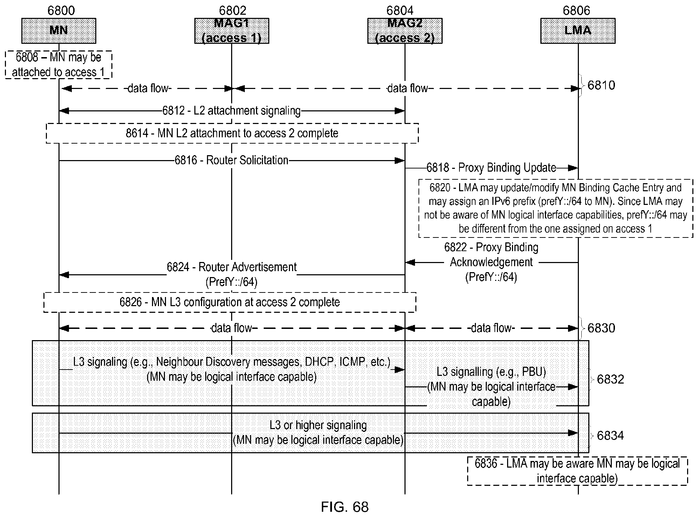

MN may advertise its capabilities to the network when the first L3 attachment may have been completed. It may do so, for example, by relying on L2 messages or L3 messages. An example illustrating the use of L3 messages is shown in FIG. 68. FIG. 68 depicts an example of indicating UE capability using L3 signaling when a first L3 attachment may have been completed. At 6808, MN 6800 may be attached to access 1. At 6810 data may flow between MN 6800 and MAG1 at 6802, and between MAG1 at 6802 and LMA 6806. MAG1 may be associated with access 1. At 6812, L2 attachment signaling may occur between MN 6800 and MAG2 at 6804. MAG2 may be associated with access 2. At 6814, MN 6800 L2 attachment to access 2 may be complete. At 6816, MN 6800 may transmit a router solicitation to MAG2 at 6804. At 6818, MAG2 may transmit a proxy binding update message to LMA 6806. At 6820, LMA 6806 may update and/or modify a binding cache entry for MN 6800 and may assign an IPv6 prefix, such as prefY::/64 to MN 6800. LMA 6806 may not be aware of the logical interface capabilities of MN 6800, and the IPv6 prefix that may be assigned to MN 6800 may be different from the one assigned on access 1. At 6822, LMA 6806 may transmit a proxy binding acknowledgment message to MAG2 at 6804. The proxy binding acknowledgment message may include the IPv6 prefix that may be assigned to MN 6800. At 6824, MAG2 may transmit a router advertisement message to MN 6800. The router advertisement message may include the IPv6 prefix that may be assigned to MN 6800. At 6826, MN 6800 L3 configuration at access 2 may be complete. At 6830 data may flow between MN 6800 and MAG2 at 6804, and between MAG2 at 6804 and LMA 6806.

At 6832, L3 signaling, such as, neighbor discovery messages, DHCF, ICMP, or the like, may be transmitted from MN 6800 to MAG2 at 6804. MN 6800 may use the L3 signaling to indicate that MN 6800 may be logical interface capable. L3 signaling, such as PBU, may be transmitted from MAG2 6804 to LMA 6806. This may be done, for example, to indicate that MN 6800 may be logical interface capable. 6836, LMA 6806 may be aware that MN 6800 may be logical interface capable.

The PBU may be triggered by MAG2 upon L2 attachment. This may occur, for example without waiting for a RS from MN. Conveying the logical interface capabilities of MN and PBU may be just one example; other out of bounds signaling mechanisms may also be used. More than one prefix may be assigned by the LMA to MN on access to. In an embodiment, either 6832 or 6834 may be performed.

An embodiment, the MN may implicitly inform the network about its capabilities. For example, using control messages such as Neighbor Advertisements, the MN may send information about one interface's prefix or IP address over the other interface. The network may know that both interfaces belong to the same MN, and it may learn that the MN may be NBIFOM or LIF capable.

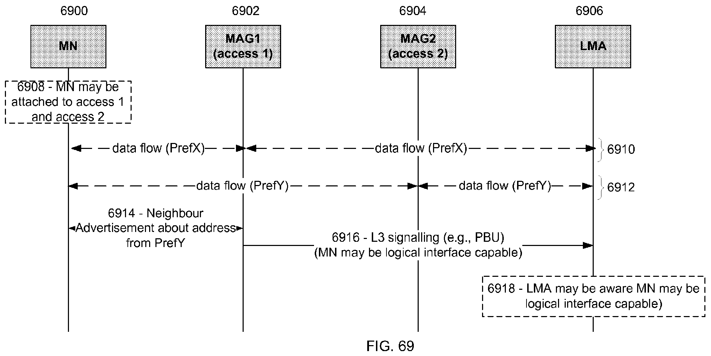

FIG. 69 depicts an example of a mobile node informing the network of its capabilities. For example, FIG. 69 may depict an example of an MN implicitly informing the network of its capabilities. The MN may send the opposite Prefix on an interface, and may send a set of Prefixes or IP addresses.

As shown in FIG. 69, at 6908 MN 6900 may be attached to access 1 and access 2. At 6910, data, which may use a prefix, such as PrefX, may flow between MN 6900 and MAG1 at 6902, and between MAG1 at 6902 and LMA 6906. MAG1 at 6902 may be associated with access 1. At 6912, data, which may use a prefix, such as PrefY, may flow between MN 6900 and MAG2 at 6904, and between MAG2 at 6904 and LMA 6906. MAG2 at 6904 may be associated with access 2. At 6914, MN 6900 may transmit a neighbor advertisement about an address from a prefix, such as PrefY, to MAG1 at 6902. At 6916, MAG1 at 6902 may use L3 signaling, such as PBU, to communicate with LMA 6906. This may be done, for example, to indicate that MN may be logical interface capable. At 6918, LMA 6906 may be aware that MN 6900 may be logical interface capable.

The NA may be sent on an access the MN may be attached to. If the message may be used as a trigger to ask for movement of a flow, then the message may be sent to the relevant axis where the flow may wish to be received.

The network may be implicitly informed about MN capabilities by sending data with a source IP address or Prefix over the other interface. Upon receiving this data the network may realize that the MN may be NBIFOM or LIF capable and may accept and forward the data over this interface.

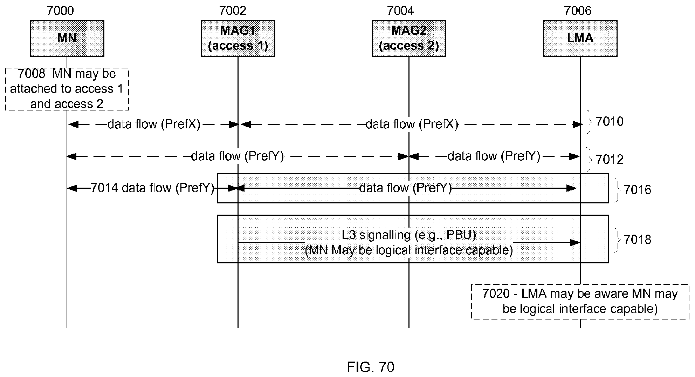

FIG. 70 depicts an example of a mobile node capability indication utilizing L3 forced messaging. The MN may know whether the network may or may not be NBIFOM capable before sending the data. There may be a number of ways for the MN to learn the network capabilities. As shown in FIG. 70, at 7008, MN 7000 may have attached to access 1 and access 2. At 7010, data, which may have a prefix, such as PrefX, may flow between MN 7000 and MAG1 at 7002, and between MAG1 at 7002 and LMA 7006. MAG1 at 7002 may be associated with access 1. At 7012, data, which may have a prefix, such as PrefY, may flow between MN 7000 and MAG2 at 7004, and between MAG2 at 7004 and LMA 7006. MAG2 at 7004 may be associated with access 2.

Data traffic may be sent via an access where the prefix that may be used may not be valid and may not be done in the access. For example, at 7014, MN 7000 may transmit data that may be intended for access 2 to MAG1 at 7002, which may be associated with access 1. When the data is received by MAG1 at 7002, MAG1 may forward the data with its prefix to LMA 7006. This may indicate to LMA 7006 that's MN may be logical interface capable. At 7018, MAG1 may communicate with LMA 7006 using L3 signaling, such as PBU. This may be done, for example, to indicate to LMA 7006 that MN 7000 may be logical interface capable.

7016 and 7018 may be examples of possible ways that may be used to convey the logical interface capabilities of MN 7000. In an embodiment, either 7016 or 7018 may be performed. The implicit sending of traffic to an access where the use prefix may not be valid may be used as a trigger to request that a data flow be moved.

Network capabilities advertisement may be provided. For example, a network may inform the MN that it may be NBIFOM capable. This may be done, for example, using L2, L3, or higher layer signaling. Using L2 signaling, the network may advertise its capabilities right at L2 attachment. This may be done, for example, with native L2 signaling (e.g. 3GPP, 802.11) or other (e.g., 802.21).

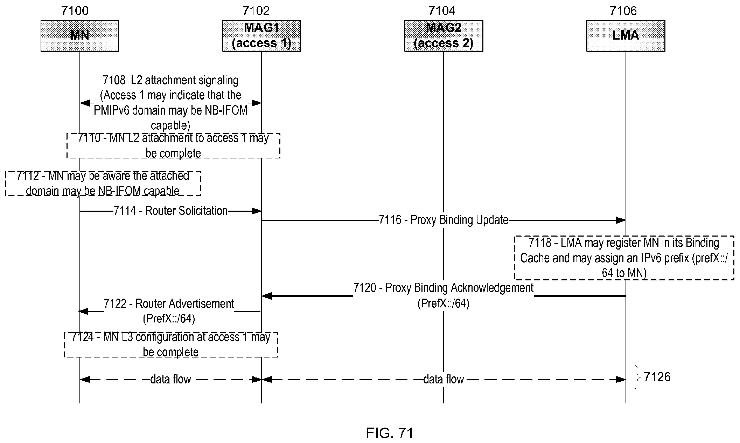

FIG. 71 depicts an example of the network advertising its capabilities using L2 signaling. If there may not be a direct L2 link between MN and MAG, a L2 translation may be used to convey the information from one place to the other. At 7108, L2 attachment signaling may occur between MN 7100 and MAG1 at 7102. Access 1 may use the L2 attachment signaling to indicate that PMIPv6 domain may be NBIFOM capable. MAG1 at 7102 may be associated with access 1. At 7110, MN 7100 L2 attachment to access 1 may be complete. At 7112, MN 7100 may be aware that the attached domain may be NBIFOM capable. At 7114, MN 7100 may transmit a router solicitation message to MAG at 7102. At 7116, MAG 1 at 7102 may transmit a proxy binding update message to LMA 7106. At 7118, LMA 7106 may register MN 7100 and its binding cache and may assign an IPv6 prefix, such as prefX::/64, to MN 7100. At 7120, LMA 7106 may transmit a proxy binding acknowledgment message to MAG1 at 7102. The proxy binding acknowledgment message may include the IPv6 prefix that may have been assigned to MN 7100. At 7112, MAG1 may transmit a router advertisement message to MN 7100. The router advertisement message may include the IPv6 prefix that may have been assigned to MN 7100. At 7124, MN 7100 L3 configuration at access 1 may be complete. At 7126, data may flow between MN 7100 and MAG1 at 7102, and between MAG1 at 7102 and LMA 7106.

Layer-3 network capability advertisement may be provided. For example, network capability advertisement may use L3 signaling. The network may use messages with options or flags. For example, this may be advertised over Router Advertisements, ICMP, or other (e.g. broadcast) messages.

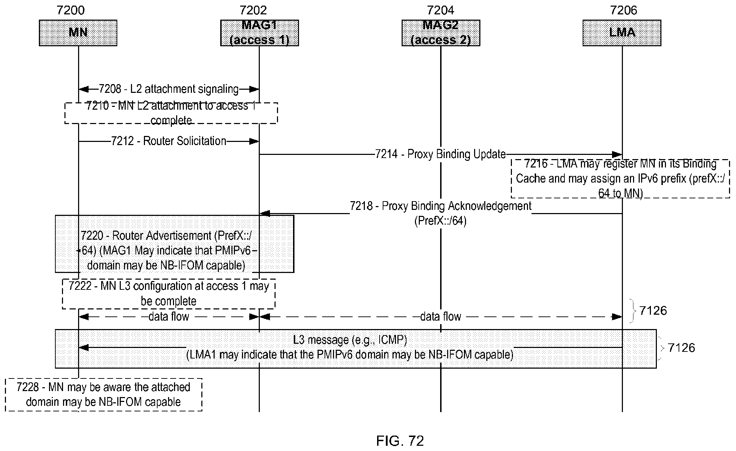

FIG. 72 depicts an example of L3 signaling being used to advertise network capability. At 7208, L2 attachment signaling may occur between MN 7200 and MAG1 at 7202. MAG1 at 7202 may be associated with access 1. At 7210, MN 7200 L2 attachment to access 1 may be complete. At 7212, MN 7200 may transmit a router solicitation message to MAG1 at 7202. At 7214, MAG1 at 7202 may transmit a proxy binding update message to LMA 7206. At 7216, LMA 7206 may register MN 7200 and its binding cache and may assign an IPv6 prefix, such as prefX::/64, to MN 7200. At 7218, LMA 7206 may transmit a proxy binding acknowledgment message to MAG1 at 7202. The proxy binding acknowledgment message includes the IPv6 prefix that may have been assigned to MN 7200.

At 7220, MAG1 at 7202 may transmit a router advertisement message to MN 7200. The router advertisement message may include the IPv6 prefix that may be assigned to MN 7200. This may be done, for example, to allow MAG1 to indicate that the PMIPv6 domain may be NBIFOM capable.

At 7222, MN 7200 L3 configuration at access 1 may be complete. At 7224, data may flow between MN 7200 and MAG1 at 7202, and between MAG1 at 7202 and LMA 7206.

At 7226, LMA 7206 may transmit an L3 message, such as ICMP, to MN 7200. This may be done, for example, to allow LMA 7206 to indicate that the PMIPv6 domain may be NBIFOM capable.

At 7228, MN 7200 may be aware that the attached domain may be NBIFOM capable. 7220 and 7226 may be examples of possible ways of conveying the logical interface capabilities of the MN, which may be learned at the MAG. In an embodiment 7220 or 7226 may be performed. In addition to MAG or LMA, a different entity, such as ANDSF, may be used to advertise the NBIFOM capabilities.

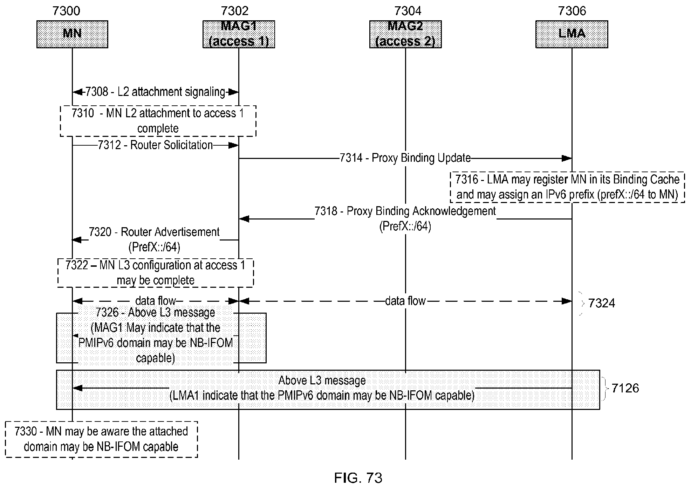

Messages at a higher layer than layer 3 may be used to inform the MN about the network capabilities. These messages, for example, may be generated at the Access gateway, at the Anchor, or in a different node in the network (e.g. ANDSF). FIG. 73 depicts an example of messages at a higher layer than layer 3 being used to inform the MN about the network capabilities. At 7308, L2 attachment signaling may occur between MN 7300 and MAG1 at 7302. MAG1 at 7302 may be associated with access 1. At 7310, MN 7300 L2 attachment to access 1 may be complete. At 7312, MN some 300 may transmit a router solicitation message to MAG1 at 7302. At 7314, MAG1 at 7302 may transmit a proxy binding update to LMA 7306. At 7316, LMA 7306 may register MN 7300 and its binding cache and may assign an IPv6 prefix, such as prefX::/64, to MN 7300. At 7318, LMA 7306 may transmit a proxy binding acknowledgment message to MAG1 at 7302. The proxy binding acknowledgment message may include the IPv6 prefix that may have been assigned to MN 7300. At 7320, MAG1 at 7302 may transmit a router advertisement message to MN 7300. The router advertisement message may include the IPv6 prefix that may have been assigned to MN 7300. At 7322, MN 7300 L3 configuration at access 1 may be complete. At 7324, data may flow between MN 7300 and MAG1 at 7302, and may flow between MAG1 at 7302 and LMA 7306.

At 7326, MAG1 at 7302 may transmit a message of higher layer than L3 to MN 7300. The higher layer message may indicate that the PMIPv6 domain may be NBIFOM capable. At 7328, LMA 7306 may transmit a message of a higher layer than L3 to MN 7300. The higher layer message may indicate that the PMIPv6 domain may be NBIFOM capable. 7326 and 7328 may be examples of possible ways of conveying the logical interface capabilities of the MN, which may be learned at the MAG. In an embodiment 7326 or 7328 may be performed. In addition to MAG or LMA, a different entity, such as ANDSF, may be used to advertise the NBIFOM capabilities.

At 7330, MN 7300 may be aware that the attached domain may be NBIFOM capable.

A mobile node may notify a network of the NBIFOM capabilities of the mobile node. For example, a mobile node may use L2 signaling to inform a mobile access gateway (MAG) of network-based IP flow mobility (NBIFOM) capabilities of the mobile node. The NBIFOM capabilities may include an indication of logical interface capabilities of the mobile node. The mobile node may attach to a first mobile access gateway (MAG). Subsequent to attaching to the first MAG, the mobile node may attach to a second MAG and may inform, via L2 signaling, a network of network-based IP flow mobility (NBIFOM) capabilities of the mobile node.

A mobile node may inform a mobile access gateway (MAG) of network-based IP flow mobility (NBIFOM) capabilities of the mobile node via L3 signal. The NBIFOM capabilities may include an indication of logical interface capabilities of the mobile node. The mobile node may attach to a first mobile access gateway (MAG). Subsequent to attaching to the first MAG, the mobile node may attach to a second MAG and may inform, via L3 signaling, a network of network-based IP flow mobility (NBIFOM) capabilities of the mobile node.

A mobile node may inform a first MAG and a second MAG of network-based IP flow mobility (NBIFOM) capabilities of the mobile node. This may occur, for example, subsequent to a mobile node attaching to the first MAG. The mobile node may use a control message between the mobile node and the one of the first MAG and the second MAG to inform MAG1 and/or MAG2 of the NBIFOM capabilities of the mobile node. The control message may a neighbor advertisement message.

A mobile node may inform one of a first MAG and a second MAG of NBIFORM capabilities of the mobile node using data sent between the mobile node and the first MAG or the second MAG. This may occur, for example, subsequent to the mobile node attaching to the first MAG or the second MAG.

A MAG may inform a mobile node of NBIFOM capabilities of a network via, for example, L2 signaling. The NBIFOM capabilities may include an indication that the PMIPv6 domain of the MAG may be NBIFOM compatible.

A MAG may inform a mobile node of NBIFOM capabilities of a network via, for example, L3 signaling. The NBIFOM capabilities may include an indication that the PMIPv6 domain of the MAG may be NBIFOM compatible.

A MAG may use a higher layer signaling to inform a mobile node of NBIFOM capabilities of a network. The higher layer signaling may be a layer that may be higher than layer 3. The NBIFOM capabilities may include an indication that the PMIPv6 domain of the MAG may be NBIFOM compatible.

A wireless transmit/receive unit (WRTU) may use layer 2 signaling to inform a network of distributed mobility management (DMM) capabilities of the WRTU. For example, the WRTU may use one of a cellular access network and a non-cellular network to inform the network of the DMM capabilities.

A wireless transmit/receive unit (WRTU) may use layer 3 signaling to inform a network of distributed mobility management (DMM) capabilities of the WRTU.

A network node may use layer 2 signaling may inform a wireless transmit/receive unit (WRTU) of distributed mobility management (DMM) capabilities of the network. The network node may be a distributed gateway (D-GW).

A network node using layer three signaling may inform a wireless transmit/receive unit (WRTU) of distributed mobility management (DMM) capabilities of the network.

A network node may use higher than layer 3 signaling to inform a wireless transmit/receive unit (WRTU) of distributed mobility management (DMM) capabilities of the network.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

### ITEMISED LIST

1. A method, comprising:
   transmitting, via a wireless transmit/receive unit (WTRU), a layer-two attachment signal to a network node to indicate a cellular network or wireless local area network (LAN) based mobility capability of the WTRU; and
   attaching to the network node via layer-two.
2. The method of **item** 1, wherein the cellular network or wireless LAN based mobility capability is a capability for S2a mobility based on GTP (SAMOG).
3. The method of **item** 1, wherein the cellular network or wireless LAN based mobility capability is a capability for network-based IP flow mobility (NBIFOM).
4. The method of **item** 1, where in the network node is a mobile access gateway (MAG).
5. The method of **item** 1, wherein the network node is a trusted wireless LAN access gateway (TWAG).
6. The method of **item** 4, further comprising transmitting a router solicitation message.
7. The method of **item**6, further comprising receiving a router advertisement message.
8. The method of **item** 7, wherein the router advertisement message comprises a prefix assigned to the WTRU.
9. The method of| **item** 8, further comprising configuring layer-three accesses using the prefix.
10. A method, comprising:
   receiving, via a network access node, a layer-two attachment signal from a mobile node indicating a cellular network or wireless local area network (LAN) based mobility capability of the mobile node; and
   performing a layer-two attachment process.
11. The method of **item** 10, wherein the cellular network or wireless LAN based mobility capability is a capability for S2a mobility based on GTP (SAMOG).
12. The method of **item** 10, wherein the cellular network or wireless LAN based mobility capability is a capability for network-based IP flow mobility (NBIFOM).
13. The method of **item** 10, further comprising receiving a router solicitation message.
14. The method of **item** 13, further comprising transmitting a proxy binding update message that indicates that the cellular network or wireless LAN based mobility capability of the mobile node.
15. The method of **item** 14, further comprising receiving a proxy binding acknowledgement message that comprises a prefix assigned to the mobile node.
16. The method of **item** 15, further comprising transmitting a router advertisement message that comprises the prefix assigned to the mobile node.
17. A method, comprising:
   receiving a message that indicating a cellular network or wireless local area network (LAN) based mobility capability of a mobile node; and
   assigning a prefix to the mobile node based on the cellular network or wireless LAN based mobility capability of the mobile node.
18. The method of **item** 17, wherein the cellular network or wireless LAN based mobility capability is a capability for NBIFOM.
19. The method of **item** 17, wherein the message is a proxy binding update message.
20. The method of| **item** 19, further comprising registering the mobile node in a binding cache.
21. The method of | **item** | 20, further comprising transmitting a proxy binding acknowledgment to a network node that comprises the prefix assigned to the mobile node.
22. The method of **item** 21, wherein the network node is a mobile access gateway.

## Claims

1. A wireless transmit/receive unit, WTRU, for providing session mobility, the WTRU comprising:
a memory; and
a processor, the processor configured to:
receiving an internet protocol, IP, prefix from a first distributed gateway, DGW;
determining an IP address using the IP prefix;
receiving, via the first DGW, a first data flow from a network using the first IP prefix and the IP address;
attaching to a second DGW and detaching from the first DGW; and
receiving, via the second DGW, the first data flow from the network using the IP prefix and the IP address.

2. The WTRU of claim 1, wherein the IP prefix is a first IP prefix, and the processor is further configured to receive a second IP prefix from the second DGW.

3. The WTRU of claim 2, wherein the IP address is a first IP address and the processor is further configured to determine a second IP address using the second IP prefix.

4. The WTRU of claim 3, wherein the processor is further configured to receive a second data flow from the network using the second IP prefix and the second IP address.

5. The WTRU of claim 1, wherein the processor is further configured to terminate the first data flow.

6. The WTRU of claim 1, wherein the IP prefix belongs to a pool of IP prefixes associated with first DGW.

7. The WTRU of claim 2, wherein the second IP prefix belongs to a pool of IP prefixes associated with the second DGW.

8. The WTRU of claim 1, wherein the IP prefix identifies the first DGW.

9. The WTRU of claim 2, wherein the second IP prefix identifies the second DGW.

10. A distributed gateway, DGW, for providing session mobility, the DGW comprising:
a memory; and
a processor, the processor configured to:
receive, at the DGW an attach request from a wireless transmit/receive unit, WTRU;
determine that the WTRU established a data flow from a network using an IP address and an IP prefix, the IP prefix being associated with another DGW; and
route the first data flow from the network to the WTRU using the IP prefix and the IP address such that the data flows to the WTRU via the DGW.

11. The DGW of claim 10, wherein the processor is further configured to establish a tunnel to the another DGW using the IP prefix and the IP address.

12. The DGW of claim 10, wherein the processor is further configured to route the first data flow from the network to the WTRU using the IP prefix and the IP address such that the data flows to the WTRU via the DGW by:
receiving data for the WTRU from the another DGW using the tunnel; and
sending the data to the WTRU.

13. The DGW of claim 10, wherein the IP prefix is a first IP prefix, and wherein the processor is further configured to send a second IP prefix associated with the DGW to the WTRU.

14. The DGW of claim 13, wherein the processor is further configured to establish a second data flow from the network to the WTRU using the second IP prefix and the second IP address.

15. The DGW of claim 10, wherein the first IP prefix identifies the first DGW.
